(19) Europäisches Patentamt / European Patent Office / Office européen des brevets

(11) **EP 4 647 475 A1**

(12) **EUROPEAN PATENT APPLICATION**

(43) Date of publication:
**12.11.2025   Bulletin 2025/46**

(21) Application number: **25192363.7**

(22) Date of filing: **16.04.2020**

(51) International Patent Classification (IPC):
**C09K 5/04** (2006.01)    **F25B 1/00** (2006.01)
**B60H 1/32** (2006.01)

(52) Cooperative Patent Classification (CPC):
**C09K 5/045;** C09K 2205/106; C09K 2205/126;
C09K 2205/40; F25B 1/00; F25B 2400/121

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2019   JP 2019078133**

(62) Document number(s) of the earlier application(s) in accordance with Art. 76 EPC:
**24169656.6 / 4 375 098**
**20791124.9 / 3 957 700**

(71) Applicant: **Daikin Industries, Ltd.**
**Osaka-shi, Osaka 530-0001 (JP)**

(72) Inventors:
• **Itano, Mitsushi**
  **Osaka-Shi, Osaka, 530-0001 (JP)**

• **Karube, Daisuke**
  **Osaka-Shi, Osaka, 530-0001 (JP)**
• **Yotsumoto, Yuuki**
  **Osaka-Shi, Osaka, 530-0001 (JP)**
• **Ohkubo, Shun**
  **Osaka-Shi, Osaka, 530-0001 (JP)**
• **Takakuwa, Tatsuya**
  **Osaka-Shi, Osaka, 530-0001 (JP)**

(74) Representative: **Hoffmann Eitle**
**Patent- und Rechtsanwälte PartmbB**
**Arabellastraße 30**
**81925 München (DE)**

Remarks:
This application was filed on 29-07-2025 as a divisional application to the application mentioned under INID code 62.

(54) **COMPOSITION INCLUDING REFRIGERANT, USE THEREOF, REFRIGERATOR HAVING SAME, AND METHOD FOR OPERATING SAID REFRIGERATOR**

(57)    An object of the present invention relates to a refrigerant composition that has three types of performance, i.e., a refrigerating capacity that is equivalent to or higher than that of R410A, a sufficiently low GWP, and a lower flammability (Class 2L) according to the ASHRAE standard.

As a means for achieving the object, a composition comprising a refrigerant, the refrigerant comprising $CO_2$, trans-1,2-difluoroethylene (HFO-1132(E)), difluoromethane (R32), and 2,3,3,3-tetrafluoro-1-propene (R1234yf), is provided.

**EP 4 647 475 A1**

**Description**

Technical Field

The present disclosure relates to a composition comprising a refrigerant, use of the composition, a refrigerating machine having the composition, and a method for operating the refrigerating machine.

Background Art

R410A is currently used as an air conditioning refrigerant for, e.g., home air conditioners. R410A is a two-component mixed refrigerant of difluoromethane ($CH_2F_2$: HFC-32 or R32) and pentafluoroethane ($C_2HF_5$: HFC-125 or R125), and is a pseudo-azeotropic composition.

However, the global warming potential (GWP) of R410A is 2088. Due to growing concerns about global warming, R32, which has a GWP of 675, has been increasingly used.

For this reason, various low-GWP mixed refrigerants that can replace R410A have been proposed (PTL 1).

Citation List

Patent Literature

PTL 1: WO2015/186557

Summary of Invention

Technical Problem

The present inventors performed independent examination and conceived of the idea that no prior art had developed refrigerant compositions that have three types of performance, i.e., a refrigerating capacity (also referred to as "cooling capacity" and "capacity") that is equivalent to or higher than that of R410A, a sufficiently low GWP, and a lower flammability (Class 2L) according to the American Society of Heating, Refrigerating and Air-Conditioning Engineers (ASHRAE) standard. An object of the present disclosure is to solve this unique problem.

Solution to Problem

Item 1.

A composition comprising a refrigerant,

the refrigerant comprising $CO_2$, trans-1,2-difluoroethylene (HFO-1132(E)), difluoromethane (R32), and 2,3,3,3-tetrafluoro-1-propene (R1234yf),
wherein
when the mass% of $CO_2$, R32, HFO-1132(E), and R1234yf based on their sum is respectively represented by w, x, y, and z;

if $0<w\leq1.2$, coordinates (x,y,z) in a ternary composition diagram in which the sum of R32, HFO-1132(E), and R1234yf is (100-w) mass% are within the range of a figure surrounded by curves IJ, JK, and KL, and straight lines LB", B"D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" ($-1.5278w^2+2.75w+50.5$, 0.0, $1.5278w^2-3.75w+49.5$),
point D ($-2.9167w+40.317$, 0.0, $1.9167w+59.683$), and
point C (0.0, $-4.9167w+58.317$, $3.9167w+41.683$),
or on the above line segments (excluding points on the straight lines B"D and CI);

if $1.2<w\leq4.0$, coordinates (x,y,z) in a ternary composition diagram are within the range of a figure surrounded by curves IJ, JK, and KL, and straight lines LB", B"D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" (51.6, 0.0, 48.4-w),
point D (-2.8226w+40.211, 0.0, 1.8226w+59.789), and
point C (0.0, $0.1081w^2$-5.169w+58.447, $-0.1081w^2$+4.169w+41.553), or
on the above line segments (excluding points on the straight lines B"D and CI); or

if 4.0<w≤7.0, coordinates (x,y,z) in a ternary composition diagram are within the range of a figure surrounded by curves IJ, JK, and KL, and straight lines LB'', B" D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" (51.6, 0.0, 48.4-w),
point D (-2.8w+40.1, 0.0, 1.8w+59.9), and
point C (0.0, $0.0667w^2$-4.9667w+58.3, $-0.0667w^2$+3.9667w+41.7), or on the above line segments (excluding points on the straight lines B"D and CI);

the curve IJ is represented by coordinates (x, $0.0236x^2$-1.716x+72, $-0.0236x^2$+0.716x+28-w),
the curve JK is represented by coordinates (x, $0.0095x^2$-1.2222x+67.676, $-0.0095x^2$+0.2222x+32.324-w), and
the curve KL is represented by coordinates (x, $0.0049x^2$-0.8842x+61.488, $-0.0049x^2$-0.1158x+38.512-w).

Item 2.

A composition comprising a refrigerant,

the refrigerant comprising $CO_2$, trans-1,2-difluoroethylene (HFO-1132(E)), difluoromethane (R32), and 2,3,3,3-tetrafluoro-1-propene (R1234yf),
wherein
when the mass% of $CO_2$, R32, HFO-1132(E), and R1234yf based on their sum is respectively represented by w, x, y, and z;

if 0<w≤1.2, coordinates (x,y,z) in a ternary composition diagram in which the sum of R32, HFO-1132(E), and R1234yf is (100-w) mass% are within the range of a figure surrounded by curves IJ and JK, and straight lines KF, FC, and CI that connect the following 5 points:

point I (0.0, 72.0, 28.0-w),
point J (18.3, 48.5, 33.2-w),
point K (36.8, 35.6, 27.6-w),
point F (-0.0833w+36.717, -4.0833w+5.1833, 3.1666w+58.0997), and
point C (0.0, -4.9167w+58.317, 3.9167w+41.683), or on the above line segments (excluding points on the straight line CI);

if 1.2<w≤1.3, coordinates (x,y,z) in a ternary composition diagram are within the range of a figure surrounded by curves IJ and JK, and straight lines KF, FC, and CI that connect the following 5 points:

point I (0.0, 72.0, 28.0-w),
point J (18.3, 48.5, 33.2-w),
point K (36.8, 35.6, 27.6-w),
point F (36.6, -3w+3.9, 2w+59.5), and
point C (0.0, $0.1081w^2$-5.169w+58.447, $-0.1081w^2$+4.169w+41.553), or
on the above line segments (excluding points on the straight line CI);

if 1.3<w≤4.0, coordinates (x,y,z) in a ternary composition diagram are within the range of a figure surrounded by curves IJ and JK, and straight lines KB', B'D, DC, and CI that connect the following 6 points:

point I (0.0, 72.0, 28.0-w),
point J (18.3, 48.5, 33.2-w),
point K (36.8, 35.6, 27.6-w),
point B' (36.6, 0.0, -w+63.4),
point D (-2.8226w+40.211, 0.0, 1.8226w+59.789), and
point C (0.0, $0.1081w^2$-5.169w+58.447, $-0.1081w^2$+4.169w+41.553), or on the above line segments (excluding points on the straight line CI); or

if 4.0<w≤7.0, coordinates (x,y,z) in a ternary composition diagram are within the range of a figure surrounded by curves IJ and JK, and straight lines KB', B'D, DC, and CI that connect the following 6 points:

point I (0.0, 72.0, 28.0-w),
point J (18.3, 48.5, 33.2-w),
point K (36.8, 35.6, 27.6-w),
point B' (36.6, 0.0, -w+63.4),
point D (-2.8w+40.1, 0.0, 1.8w+59.9), and
point C (0.0, $0.0667w^2$-4.9667w+58.3, $-0.0667w^2$+3.9667w+41.7),
or on the above line segments (excluding points on the straight line CI);

the curve IJ is represented by coordinates (x, $0.0236x^2$-1.716x+72, $-0.0236x^2$+0.716x+28-w); and
the curve JK is represented by coordinates (x, $0.0095x^2$-1.2222x+67.676, $-0.0095x^2$+0.2222x+32.324-w).

Item 3.

A composition comprising a refrigerant,

the refrigerant comprising $CO_2$, R32, HFO-1132(E), and R1234yf, wherein
when the mass% of $CO_2$, R32, HFO-1132(E), and R1234yf based on their sum is respectively represented by w, x, y, and z,

if 0<w≤1.2, coordinates (x,y,z) in a ternary composition diagram in which the sum of R32, HFO-1132(E), and R1234yf is (100-w) mass% are within the range of a figure surrounded by curves IJ and JK, and straight lines KF, FC, and CI that connect the following 4 points:

point I (0.0, 72.0, 28.0-w),
point J (18.3, 48.5, 33.2-w),
point E (18.2, $-1.1111w^2$-3.1667w+31.9, $1.1111w^2$+2.1667w+49.9), and
point C (0.0, -4.9167w+58.317, 3.9167w+41.683), or on the above line segments (excluding points on the straight line CI);

if 1.2<w≤4.0, coordinates (x,y,z) in a ternary composition diagram are within the range of a figure surrounded by curves IJ and JK, and straight lines KF, FC, and CI that connect the following 4 points:

point I (0.0, 72.0, 28.0-w),
point J (18.3, 48.5, 33.2-w),
point E (-0.0365w+18.26, $0.0623w^2$-4.5381w+31.856, $-0.0623w^2$+3.5746w+49.884), and
point C (0.0, $0.1081w^2$-5.169w+58.447, $-0.1081w^2$+4.169w+41.553), or on the above line segments (excluding points on the straight line CI); or

if 4.0<w≤7.0, coordinates (x,y,z) in a ternary composition diagram are within the range of a figure surrounded by curves IJ and JK, and straight lines KF, FC, and CI that connect the following 4 points:

point I (0.0, 72.0, 28.0-w),
point J (18.3, 48.5, 33.2-w),
point E (18.1, $0.0444w^2$-4.3556w+31.411, $-0.0444w^2$+3.3556w+50.489), and

point C (0.0, 0.0667w$^2$-4.9667w+58.3, -0.0667w$^2$+3.9667w+41.7), or on the above line segments (excluding points on the straight line CI), and

the curve IJ is represented by coordinates (x, 0.0236x$^2$-1.716x+72, -0.0236x$^2$+0.716x+28-w).

Item 4.

A composition comprising a refrigerant,

the refrigerant comprising CO$_2$, R32, HFO-1132(E), and R1234yf, wherein

when the mass% of CO$_2$, R32, HFO-1132(E), and R1234yf based on their sum is respectively represented by w, x, y, and z,

if 0<w≤0.6, coordinates (x,y,z) in a ternary composition diagram in which the sum of R32, HFO-1132(E), and R1234yf is (100-w) mass% are within the range of a figure surrounded by curves GO and OP, and straight lines PB", B"D, and DG that connect the following 5 points:

point G (-5.8333w$^2$-3.1667w+22.2, 7.0833w$^2$+1.4167w+26.2, -1.25w$^2$+0.75w+51.6),
point O (36.8, 0.8333w$^2$+1.8333w+22.6, -0.8333w$^2$-2.8333w+40.6),
point P (51.7, 1.1111w$^2$+20.5, -1.1111w$^2$-w+27.8),
point B" (-1.5278w$^2$+2.75w+50.5, 0.0, 1.5278w$^2$-3.75w+49.5), and
point D (-2.9167w+40.317, 0.0, 1.9167w+59.683), or on the above line segments (excluding points on the straight line B"D);

if 0.6<w≤1.2, coordinates (x,y,z) in a ternary composition diagram are within the range of a figure surrounded by curves GN, NO, and OP, and straight lines PB", B"D, and DG that connect the following 6 points:

point G (-5.8333w$^2$-3.1667w+22.2, 7.0833w$^2$+1.4167w+26.2, - 1.25w$^2$+0.75w+51.6),
point N (18.2, 0.2778w$^2$+3w+27.7, -0.2778w$^2$-4w+54.1),
point O (36.8, 0.8333w$^2$+1.8333w+22.6, -0.8333w$^2$-2.8333w+40.6),
point P (51.7, 1.1111w$^2$+20.5, -1.1111w$^2$-w+27.8),
point B" (-1.5278w$^2$+2.75w+50.5, 0.0, 1.5278w$^2$-3.75w+49.5), and
point D (-2.9167w+40.317, 0.0, 1.9167w+59.683), or on the above line segments (excluding points on the straight line B"D);

if 0<w≤0.6, the curve GO is represented by coordinates (x, (0.00487w$^2$-0.0059w+0.0072)x$^2$+(-0.279w$^2$ +0.2844w-0.6701)x+3.7639w$^2$-0.2467w+37.512, 100-w-x-y);
if 0.6<w≤1.2, the curve GN is represented by coordinates (x, (0.0122w$^2$-0.0113w+0.0313)x$^2$+(-0.3582w$^2$ +0.1624w-1.4551)x+2.7889w$^2$+3.7417w+43.824 , 100-w-x-y);
if 0.6<w≤1.2, the curve NO is represented by coordinates (x, (0.00487w$^2$-0.0059w+0.0072)x$^2$+(-0.279w$^2$ +0.2844w-0.6701)x+3.7639w$^2$-0.2467w+37.512, 100-w-x-y);
if 0<w≤1.2, the curve OP is represented by coordinates (x, (0.0074w$^2$-0.0133w+0.0064)x$^2$+(-0.5839w$^2$ +1.0268w-0.7103)x+11.472w$^2$-17.455w+40.07, 100-w-x-y);
if 1.2<w≤4.0, coordinates (x,y,z) in a ternary composition diagram are within the range of a figure surrounded by curves MW, WN, NO, and OP, and straight lines PB", B"D, DC, and CM that connect the following 8 points:

point M (0.0, -0.3004w$^2$+2.419w+55.53, 0.3004w$^2$-3.419w+44.47),
point W (10.0, -0.3645w$^2$+3.5024w+34.422, 0.3645w$^2$-4.5024w+55.578),
point N (18.2, -0.3773w$^2$+3.319w+28.26, 0.3773w$^2$-4.319w+53.54),
point O (36.8, -0.1392w$^2$+1.4381w+24.475, 0.1392w$^2$-2.4381w+38.725),
point P (51.7, -0.2381w$^2$+1.881w+20.186, 0.2381w$^2$-2.881w+28.114),
point B" (51.6, 0.0, -w+48.4),
point D (-2.8226w+40.211, 0.0, 1.8226w+59.789), and
point C (0.0, 0.1081w$^2$-5.169w+58.447, -0.1081w$^2$+4.169w+41.553), or on the above line segments (excluding points on the straight lines B"D and CM);

the curve MW is represented by coordinates (x, (0.0043w$^2$-0.0359w+0.1509)x$^2$+(-0.0493w$^2$+0.4669w-3.6193) x-0.3004w$^2$+2.419w+55.53, 100-w-x-y),
the curve WN is represented by coordinates (x, (0.0055w$^2$-0.0326w+0.0665)x$^2$+(-0.1571w$^2$+0.8981w-2.6274)

$x+0.6555w^2-2.2153w+54.044$, 100-w-x-y),

the curve NO is represented by coordinates (x, $(-0.00062w^2+0.0036w+0.0037)x^2+(0.0375w^2-0.239w-0.4977)x-0.8575w^2+6.4941w+36.078$, 100-w-x-y), and

the curve OP is represented by coordinates (x, $(-0.000463w^2+0.0024w-0.0011)x^2+(0.0457w^2-0.2581w-0.075)x-1.355w^2+8.749w+27.096$, 100-w-x-y); or

if $4.0<w\leq7.0$, coordinates (x,y,z) in a ternary composition diagram are within the range of a figure surrounded by curves MW, WN, NO, and OP, and straight lines PB", B"D, DC, and CM that connect the following 8 points:

point M (0.0, $-0.0667w^2+0.8333w+58.133$, $0.0667w^2-1.8333w+41.867$),
point W (10.0, $-0.0667w^2+1.1w+39.267$, $0.0667w^2-2.1w+50.733$),
point N (18.2, $-0.0889w^2+1.3778w+31.411$, $0.0889w^2-2.3778w+50.389$),
point O (36.8, $-0.0444w^2+0.6889w+25.956$, $0.0444w^2-1.6889w+37.244$),
point P (51.7, $-0.0667w^2+0.8333w+21.633$, $0.0667w^2-1.8333w+26.667$),
point B" (51.6, 0.0, -w+48.4),
point D (-2.8w+40.1, 0.0, 1.8w+59.9), and
point C (0.0, $0.0667w^2-4.9667w+58.3$, $-0.0667w^2+3.9667w+41.7$), or on the above line segments (excluding points on the straight lines B"D and CM);

the curve MW is represented by coordinates (x, $(0.00357w^2-0.0391w+0.1756)x^2+(-0.0356w^2+0.4178w-3.6422)x-0.0667w^2+0.8333w+58.103$, 100-w-x-y),

the curve WN is represented by coordinates (x, $(-0.002061w^2+0.0218w-0.0301)x^2+(0.0556w^2-0.5821w-0.1108)x-0.4158w^2+4.7352w+43.383$, 100-w-x-y),

the curve NO is represented by coordinates (x, $0.0082x^2+(0.0022w^2-0.0345w-0.7521)x-0.1307w^2+2.0247w+42.327$, 100-w-x-y), and

the curve OP is represented by coordinates (x, $(-0.0006258w^2+0.0066w-0.0153)x^2+(0.0516w^2-0.5478w+0.9894)x-1.074w^2+11.651w+10.992$, 100-w-x-y).

Item 5.

A composition comprising a refrigerant,

the refrigerant comprising $CO_2$, R32, HFO-1132(E), and R1234yf, wherein
when the mass% of $CO_2$, R32, HFO-1132(E), and R1234yf based on their sum is respectively represented by w, x, y, and z,

if $0<w\leq0.6$, coordinates (x,y,z) in a ternary composition diagram in which the sum of R32, HFO-1132(E), and R1234yf is (100-w) mass% are within the range of a figure surrounded by a curve GO, and straight lines OF and FG that connect the following 3 points:

point G ($-5.8333w^2-3.1667w+22.2$, $7.0833w^2+1.4167w+26.2$, $-1.25w^2+0.75w+51.6$),
point O (36.8, $0.8333w^2+1.8333w+22.6$, $-0.8333w^2-2.8333w+40.6$), and
point F (-0.0833w+36.717, -4.0833w+5.1833, 3.1666w+58.0997), or
the above line segments;
the curve GO is represented by coordinates (x, $(0.00487w^2-0.0059w+0.0072)x^2+(-0.279w^2+0.2844w-0.6701)x+3.7639w^2-0.2467w+37.512$, 100-w-x-y);

if $0.6<w\leq1.2$, coordinates (x,y,z) in a ternary composition diagram are within the range of a figure surrounded by curves GN and NO, and straight lines OF and FG that connect the following 4 points:

point G ($-5.8333w^2-3.1667w+22.2$, $7.0833w^2+1.4167w+26.2$, $-1.25w^2+0.75w+51.6$),
point N (18.2, $0.2778w^2+3.0w+27.7$, $-0.2778w^2-4.0w+54.1$),
point O (36.8, $0.8333w^2+1.8333w+22.6$, $-0.8333w^2-2.8333w+40.6$), and
point F (-0.0833w+36.717, -4.0833w+5.1833, 3.1666w+58.0997), or on the above line segments;

if $0.6<w\leq1.2$, the curve GN is represented by coordinates (x, $(0.0122w^2-0.0113w+0.0313)x^2+(-0.3582w^2+0.1624w-1.4551)x+2.7889w^2+3.7417w+43.824$, 100-w-x-y);
if $0.6<w\leq1.2$, the curve NO is represented by coordinates (x, $(0.00487w^2-0.0059w+0.0072)x^2+(-0.279w^2+0.2844w-0.6701)x+3.7639w^2-0.2467w+37.512$, 100-w-x-y);

if 1.2<w≤1.3, coordinates (x,y,z) in a ternary composition diagram are within the range of a figure surrounded by curves MW, WN, and NO, and straight lines OF, FC, and CM that connect the following 6 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point O (36.8, $-0.1392w^2+1.4381w+24.475$, $0.1392w^2-2.4381w+38.725$),
point F (36.6, $-3w+3.9$, $2w+59.5$), and
point C (0.0, $0.1081w^2-5.169w+58.447$, $-0.1081w^2+4.169w+41.553$), or on the above line segments (excluding points on the straight line CM);

the curve MW is represented by coordinates (x, $(0.0043w^2-0.0359w+0.1509)x^2+(-0.0493w^2+0.4669w-3.6193)$ $x-0.3004w^2+2.419w+55.53$, 100-w-x-y),
the curve WN is represented by coordinates (x, $(0.0055w^2-0.0326w+0.0665)x^2+(-0.1571w^2+0.8981w-2.6274)$ $x+0.6555w^2-2.2153w+54.044$, 100-w-x-y), and
the curve NO is represented by coordinates (x, $(-0.00062w^2+0.0036w+0.0037)x^2+(0.0375w^2-0.239w-0.4977)$ $x-0.8575w^2+6.4941w+36.078$, 100-w-x-y);
if 1.3<w≤4.0, coordinates (x,y,z) in a ternary composition diagram are within the range of a figure surrounded by curves MW, WN, and NO, and straight lines OB', B'D, DC, and CM that connect the following 7 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point O (36.8, $-0.1392w^2+1.4381w+24.475$, $0.1392w^2-2.4381w+38.725$),
point B' ( 36.6, 0.0, $-w+63.4$),
point D ($-2.8226w+40.211$, 0.0, $1.8226w+59.789$), and
point C (0.0, $0.1081w^2-5.169w+58.447$, $-0.1081w^2+4.169w+41.553$), or on the above line segments (excluding points on the straight line CM);

the curve MW is represented by coordinates (x, $(0.0043w^2-0.0359w+0.1509)x^2+(-0.0493w^2+0.4669w-3.6193)$ $x-0.3004w^2+2.419w+55.53$, 100-w-x-y),
the curve WN is represented by coordinates (x, $(0.0055w^2-0.0326w+0.0665)x^2+(-0.1571w^2+0.8981w-2.6274)$ $x+0.6555w^2-2.2153w+54.044$, 100-w-x-y), and
the curve NO is represented by coordinates (x, $(-0.00062w^2+0.0036w+0.0037)x^2+(0.0375w^2-0.239w-0.4977)$ $x+(-0.8575w^2+6.4941w+36.078)$, 100-w-x-y); or
if 4.0<w≤7.0, coordinates (x,y,z) in a ternary composition diagram are within the range of a figure surrounded by curves MW, WN, and NO, and straight lines OB', B'D, DC, and CM that connect the following 7 points:

point M (0.0, $-0.0667w^2+0.8333w+58.133$, $0.0667w^2-1.8333w+41.867$),
point W (10.0, $-0.0667w^2+1.1w+39.267$, $0.0667w^2-2.1w+50.733$),
point N (18. 2, $-0.0889w^2+1.3778w+31.411$, $0.0889w^2-2.3778w+50.389$),
point O (36.8, $-0.0444w^2+0.6889w+25.956$, $0.0444w^2-1.6889w+37.244$), point B' (36.6, 0.0, $-w+63.4$),
point D ($-2.8w+40. 1$, 0.0, $1.8w+59.9$), and
point C (0.0, $0.0667w^2-4.9667w+58.3$, $-0.0667w^2+3.9667w+41.7$), or on the above line segments (excluding points on the straight line CM);

the curve MW is represented by coordinates (x, $(0.00357w^2-0.0391w+0.1756)x^2+(-0.0356w^2+0.4178w-3.6422)$ $x-0.0667w^2+0.8333w+58.103$, 100-w-x-y),
the curve WN is represented by coordinates (x, $(-0.002061w^2+0.0218w-0.0301)x^2+(0.0556w^2-0.5821w-0.1108)$ $x-0.4158w^2+4.7352w+43.383$, 100-w-x-y), and
the curve NO is represented by coordinates (x, $(0.0082x^2+(0.0022w^2-0.0345w-0.7521)x-0.1307w^2$ $+2.0247w+42.327$, 100-w-x-y) .

Item 6.

A composition comprising a refrigerant,

the refrigerant comprising $CO_2$, R32, HFO-1132(E), and R1234yf, wherein

when the mass% of $CO_2$, R32, HFO-1132(E), and R1234yf based on their sum is respectively represented by w, x, y, and z,

if 1.2<w≤4.0, coordinates (x,y,z) in a ternary composition diagram in which the sum of R32, HFO-1132(E), and R1234yf is (100-w) mass% are within the range of a figure surrounded by curves MW and WN, and straight lines NE, EC, and CM that connect the following 5 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point E ($-0.0365w+18.26$, $0.0623w^2-4.5381w+31.856$, $-0.0623w^2+3.5746w+49.884$), and
point C (0.0, $0.1081w^2-5.169w+58.447$, $-0.1081w^2+4.169w+41.553$), or on the above line segments (excluding points on the straight line CM);

the curve MW is represented by coordinates (x, $(0.0043w^2-0.0359w+0.1509)x^2+(-0.0493w^2+0.4669w-3.6193)x-0.3004w^2+2.419w+55.53$, 100-w-x-y), and
the curve WN is represented by coordinates (x, $(0.0055w^2-0.0326w+0.0665)x^2+(-0.1571w^2+0.8981w-2.6274)x+0.6555w^2-2.2153w+54.044$, 100-w-x-y); or
if 4.0<w≤7.0, coordinates (x,y,z) in a ternary composition diagram are within the range of a figure surrounded by curves MW and WN, and straight lines NE, EC, and CM that connect the following 5 points:

point M (0.0, $-0.0667w^2+0.8333w+58.133$, $0.0667w^2-1.8333w+41.867$),
point W (10.0, $-0.0667w^2+1.1w+39.267$, $0.0667w^2-2.1w+50.733$),
point N (18.2, $-0.0889w^2+1.3778w+31.411$, $0.0889w^2-2.3778w+50.389$),
point E (18.1, $0.0444w^2-4.3556w+31.411$, $-0.0444w^2+3.3556w+50.489$), and
point C (0.0, $0.0667w^2-4.9667w+58.3$, $-0.0667w^2+3.9667w+41.7$), or on the above line segments (excluding points on the straight line CM);

the curve MW is represented by coordinates (x, $(0.00357w^2-0.0391w+0.1756)x^2+(-0.0356w^2+0.4178w-3.6422)x-0.0667w^2+0.8333w+58.103$, 100-w-x-y), and
the curve WN is represented by coordinates (x, $(-0.002061w^2+0.0218w-0.0301)x^2+(0.0556w^2-0.5821w-0.1108)x-0.4158w^2+4.7352w+43.383$, 100-w-x-y).

Item 7.

The composition according to any one of Items 1 to 6, for use as a working fluid for a refrigerating machine, wherein the composition further comprises a refrigeration oil.

Item 8.

The composition according to any one of Items 1 to 7, for use as an alternative refrigerant for R410A.

Item 9.

Use of the composition according to any one of Items 1 to 7 as an alternative refrigerant for R410A.

Item 10.

A refrigerating machine comprising the composition according to any one of Items 1 to 7 as a working fluid.

Item 11.

A method for operating a refrigerating machine, comprising the step of circulating the composition according to any one of Items 1 to 7 as a working fluid in a refrigerating machine.

Advantageous Effects of Invention

The refrigerant of the present disclosure has three types of performance, i.e., a refrigerating capacity that is equivalent to or higher than that of R410A, a sufficiently low GWP, and a lower flammability (Class 2L) according to the ASHRAE standard.

Brief Description of Drawings

Fig. 1 is a schematic view of an apparatus used for the measurement of burning velocity.

Fig. 2 is a diagram showing points and line segments that define the refrigerant of the present disclosure in a ternary composition diagram in which the sum of R32, HFO-1132(E), and R1234yf is 100 mass%.

Fig. 3 is a diagram showing points and line segments that define the refrigerant of the present disclosure in a ternary composition diagram in which the sum of R32, HFO-1132(E), and R1234yf is 99.4 mass% ($CO_2$ content is 0.6 mass%).

Fig. 4 is a diagram showing points and line segments that define the refrigerant of the present disclosure in a ternary composition diagram in which the sum of R32, HFO-1132(E), and R1234yf is 98.8 mass% ($CO_2$ content is 1.2 mass%).

Fig. 5 is a diagram showing points and line segments that define the refrigerant of the present disclosure in a ternary composition diagram in which the sum of R32, HFO-1132(E), and R1234yf is 98.7 mass% ($CO_2$ content is 1.3 mass%).

Fig. 6 is a diagram showing points and line segments that define the refrigerant of the present disclosure in a ternary composition diagram in which the sum of R32, HFO-1132(E), and R1234yf is 97.5 mass% ($CO_2$ content is 2.5 mass%).

Fig. 7 is a diagram showing points and line segments that define the refrigerant of the present disclosure in a ternary composition diagram in which the sum of R32, HFO-1132(E), and R1234yf is 96 mass% ($CO_2$ content is 4 mass%).

Fig. 8 is a diagram showing points and line segments that define the refrigerant of the present disclosure in a ternary composition diagram in which the sum of R32, HFO-1132(E), and R1234yf is 94.5 mass% ($CO_2$ content is 5.5 mass%).

Fig. 9 is a diagram showing points and line segments that define the refrigerant of the present disclosure in a ternary composition diagram in which the sum of R32, HFO-1132(E), and R1234yf is 93 mass% ($CO_2$ content is 7 mass%).

Description of Embodiments

In order to achieve the above object, the present inventors conducted extensive research and found that a mixed refrigerant comprising $CO_2$, R32, HFO-1132(E), and R1234yf has the characteristics described above.

The present disclosure has been completed as a result of further research based on this finding. The present disclosure includes the following embodiments.

<u>Definition of Terms</u>

In the present specification, the term "refrigerant" includes at least compounds that are specified in ISO 817 (International Organization for Standardization) and that are given a refrigerant number (ASHRAE number) representing the type of refrigerant with "R" at the beginning, and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), ammonia (R717), and the like.

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration-oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, a refrigerant having a "WCF lower flammability" means that the most flammable composition (worst case of formulation for flammability: WCF) has a burning velocity of 10 cm/s or less according to the US ANSI/ASHRAE Standard 34-2013. Further, in the present specification, a refrigerant having "ASHRAE lower flammability" means that the burning velocity of WCF is 10 cm/s or less, that the most flammable fraction composition (worst case of fractionation for flammability: WCFF), which is specified by performing a leakage test during storage, shipping, or use based on ANSI/ASHRAE 34-2013 using WCF, has a burning velocity of 10 cm/s or less, and that flammability classification according to the US ANSI/ASHRAE Standard 34-2013 is determined to be classified as Class 2L.

## 1. Refrigerant

### 1.1 Refrigerant Component

The refrigerant of the present disclosure is a mixed refrigerant comprising $CO_2$, R32, HFO-1132(E), and R1234yf.

The refrigerant of the present disclosure has various properties that are desirable as an R410A-alternative refrigerant, i.e., a refrigerating capacity that is equivalent to those of R410A, a sufficiently low GWP, and a lower flammability.

The refrigerant of the present disclosure is as follows. When the mass% of $CO_2$, R32, HFO-1132(E), and R1234yf based on their sum is respectively represented by w, x, y, and z,

coordinates (x,y,z) in a ternary composition diagram in which the sum of R32, HFO-1132(E), and R1234yf is (100-w) mass% are within the range of a figure surrounded by curves IJ, JK, and KL, and straight lines LB", B"D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" ($-1.5278w^2+2.75w+50.5$, 0.0, $1.5278w^2-3.75w+49.5$),
point D (-2.9167w+40.317, 0.0, 1.9167w+59.683), and
point C (0.0, -4.9167w+58.317, 3.9167w+41.683), or on the above line segments (excluding points on the straight lines B"D and CI);

if $1.2<w\leq4.0$, coordinates (x,y,z) in a ternary composition diagram are within the range of a figure surrounded by curves IJ, JK, and KL, and straight lines LB", B"D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" (51.6, 0.0, 48.4-w),
point D (-2.8226w+40.211, 0.0, 1.8226w+59.789), and
point C (0.0, $0.1081w^2-5.169w+58.447$, $-0.1081w^2+4.169w+41.553$), or on the above line segments (excluding points on the straight lines B"D and CI); or

if 4.0<w≤7.0, coordinates (x,y,z) in a ternary composition diagram are within the range of a figure surrounded by curves IJ, JK, and KL, and straight lines LB", B" D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" (51.6, 0.0, 48.4-w),
point D (-2.8w+40.1, 0.0, 1.8w+59.9), and
point C (0.0, $0.0667w^2$-4.9667w+58.3, $-0.0667w^2$+3.9667w+41.7), or on the above line segments (excluding points on the straight lines B"D and CI);

the curve IJ is represented by coordinates (x, $0.0236x^2$-1.716x+72, $-0.0236x^2$+0.716x+28-w),
the curve JK is represented by coordinates (x, $0.0095x^2$-1.2222x+67.676, $-0.0095x^2$+0.2222x+32.324-w), and
the curve KL is represented by coordinates (x, $0.0049x^2$-0.8842x+61.488, $-0.0049x^2$-0.1158x+38.512-w).

The refrigerant of the present disclosure has a refrigerating capacity ratio of 80% or more and a GWP of 350 or less relative to that of R410A, and further ensures a WCF lower flammability.

The refrigerant of the present disclosure is preferably as follows. When the mass% of $CO_2$, R32, HFO-1132(E), and R1234yf based on their sum is respectively represented by w, x, y, and z,

if 0<w≤1.2, coordinates (x,y,z) in a ternary composition diagram in which the sum of R32, HFO-1132(E), and R1234yf is (100-w) mass% are within the range of a figure surrounded by curves IJ and JK, and straight lines KF, FC, and CI that connect the following 5 points:

point I (0.0, 72.0, 28.0-w),
point J (18.3, 48.5, 33.2-w),
point K (36.8, 35.6, 27.6-w),
point F (-0.0833w+36.717, -4.0833w+5.1833, 3.1666w+58.0997), and
point C (0.0, -4.9167w+58.317, 3.9167w+41.683), or on the above line segments (excluding points on the straight line CI);

if 1.2<w≤1.3, coordinates (x,y,z) in a ternary composition diagram are within the range of a figure surrounded by curves IJ and JK, and straight lines KF, FC, and CI that connect the following 5 points:

point I (0.0, 72.0, 28.0-w),
point J (18.3, 48.5, 33.2-w),
point K (36.8, 35.6, 27.6-w),
point F (36.6, -3w+3.9, 2w+59.5), and
point C (0.0, $0.1081w^2$-5.169w+58.447, $-0.1081w^2$+4.169w+41.553), or on the above line segments (excluding points on the straight line CI);

if 1.3<w≤4.0, coordinates (x,y,z) in a ternary composition diagram are within the range of a figure surrounded by curves IJ and JK, and straight lines KB', B'D, DC, and CI that connect the following 6 points:

point I (0.0, 72.0, 28.0-w),
point J (18.3, 48.5, 33.2-w),
point K (36.8, 35.6, 27.6-w),
point B' (36.6, 0.0, -w+63.4),
point D (-2.8226w+40.211, 0.0, 1.8226w+59.789), and
point C (0.0, $0.1081w^2$-5.169w+58.447, $-0.1081w^2$+4.169w+41.553), or on the above line segments (excluding points on the straight line CI); or

if 4.0<w≤7.0, coordinates (x,y,z) in a ternary composition diagram are within the range of a figure surrounded by curves IJ and JK, and straight lines KB', B'D, DC, and CI that connect the following 6 points:

point I (0.0, 72.0, 28.0-w),
point J (18.3, 48.5, 33.2-w),

point K (36.8, 35.6, 27.6-w),
point B' (36.6, 0.0, -w+63.4),
point D (-2.8w+40.1, 0.0, 1.8w+59.9), and
point C (0.0, $0.0667w^2$-4.9667w+58.3, $-0.0667w^2$+3.9667w+41.7), or on the above line segments (excluding points on the straight line CI);

the curve IJ is represented by coordinates (x, $0.0236x^2$-1.716x+72, $-0.0236x^2$+0.716x+28-w), and
the curve JK is represented by coordinates (x, $0.0095x^2$-1.2222x+67.676, $-0.0095x^2$+0.2222x+32.324-w).
When the refrigerant of the present disclosure satisfies the above requirements, it has a refrigerating capacity ratio of 80% or more and a GWP of 250 or less relative to that of R410A, and further ensures a WCF lower flammability.

The refrigerant of the present disclosure is preferably as follows. When the mass% of $CO_2$, R32, HFO-1132(E), and R1234yf based on their sum is respectively represented by w, x, y, and z,

if 0<w≤1.2, coordinates (x,y,z) in a ternary composition diagram in which the sum of R32, HFO-1132(E), and R1234yf is (100-w) mass% are within the range of a figure surrounded by curves IJ and JK, and straight lines KF, FC, and CI that connect the following 4 points:

point I (0.0, 72.0, 28.0-w),
point J (18.3, 48.5, 33.2-w),
point E (18.2, $-1.1111w^2$-3.1667w+31.9, $1.1111w^2$+2.1667w+49.9), and
point C (0.0, -4.9167w+58.317, 3.9167w+41.683), or on the above line segments (excluding points on the straight line CI);

if 1.2<w≤4.0, coordinates (x,y,z) in a ternary composition diagram are within the range of a figure surrounded by curves IJ and JK, and straight lines KF, FC, and CI that connect the following 4 points:

point I (0.0, 72.0, 28.0-w),
point J (18.3, 48.5, 33.2-w),
point E (-0.0365w+18.26, $0.0623w^2$-4.5381w+31.856, -$0.0623w^2$+3.5746w+49.884), and
point C (0.0, $0.1081w^2$-5.169w+58.447, $-0.1081w^2$+4.169w+41.553), or on the above line segments (excluding points on the straight line CI); or

if 4.0<w≤7.0, coordinates (x,y,z) in a ternary composition diagram are within the range of a figure surrounded by curves IJ and JK, and straight lines KF, FC, and CI that connect the following 4 points:

point I (0.0, 72.0, 28.0-w),
point J (18.3, 48.5, 33.2-w),
point E (18.1, $0.0444w^2$-4.3556w+31.411, $-0.0444w^2$+3.3556w+50.489), and
point C (0.0, $0.0667w^2$-4.9667w+58.3, $-0.0667w^2$+3.9667w+41.7), or on the above line segments (excluding points on the straight line CI), and
the curve IJ is represented by coordinates (x, $0.0236x^2$-1.716x+72, $-0.0236x^2$+0.716x+28-w).

When the refrigerant of the present disclosure satisfies the above requirements, it has a refrigerating capacity ratio of 80% or more and a GWP of 125 or less relative to that of R410A, and further ensures a WCF lower flammability.

The refrigerant of the present disclosure is preferably as follows. When the mass% of $CO_2$, R32, HFO-1132(E), and R1234yf based on their sum is respectively represented by w, x, y, and z,

if 0<w≤0.6, coordinates (x,y,z) in a ternary composition diagram in which the sum of R32, HFO-1132(E), and R1234yf is (100-w) mass% are within the range of a figure surrounded by curves GO and OP, and straight lines PB", B"D, and DG that connect the following 5 points:

point G (-$5.8333w^2$-3.1667w+22.2, $7.0833w^2$+1.4167w+26.2, $-1.25w^2$+0.75w+51.6),
point O (36.8, $0.8333w^2$+1.8333w+22.6, $-0.8333w^2$-2.8333w+40.6),
point P (51.7, $1.1111w^2$+20.5, $-1.1111w^2$-w+27.8),
point B" (-$1.5278w^2$+2.75w+50.5, 0.0, $1.5278w^2$-3.75w+49.5), and

point D (-2.9167w+40.317, 0.0, 1.9167w+59.683), or on the above line segments (excluding points on the straight line B"D);

if $0.6<w\leq1.2$, coordinates (x,y,z) in a ternary composition diagram are within the range of a figure surrounded by curves GN, NO, and OP, and straight lines PB", B"D, and DG that connect the following 6 points:

point G ($-5.8333w^2-3.1667w+22.2$, $7.0833w^2+1.4167w+26.2$, $-1.25w^2+0.75w+51.6$),
point N (18.2, $0.2778w^2+3w+27.7$, $-0.2778w^2-4w+54.1$),
point O (36.8, $0.8333w^2+1.8333w+22.6$, $-0.8333w^2-2.8333w+40.6$),
point P (51.7, $1.1111w^2+20.5$, $-1.1111w^2-w+27.8$),
point B" ($-1.5278w^2+2.75w+50.5$, 0.0, $1.5278w^2-3.75w+49.5$), and
point D (-2.9167w+40.317, 0.0, 1.9167w+59.683), or on the above line segments (excluding points on the straight line B"D);

if $0<w\leq0.6$, the curve GO is represented by coordinates (x, $(0.00487w^2-0.0059w+0.0072)x^2+(-0.279w^2+0.2844w-0.6701)x+3.7639w^2-0.2467w+37.512$, 100-w-x-y);
if $0.6<w\leq1.2$, the curve GN is represented by coordinates (x, $(0.0122w^2-0.0113w+0.0313)x^2+(-0.3582w^2+0.1624w-1.4551)x+2.7889w^2+3.7417w+43.824$ , 100-w-x-y);
if $0.6<w\leq1.2$, the curve NO is represented by coordinates (x, $(0.00487w^2-0.0059w+0.0072)x^2+(-0.279w^2+0.2844w-0.6701)x+3.7639w^2-0.2467w+37.512$, 100-w-x-y);
if $0<w\leq1.2$, the curve OP is represented by coordinates (x, $(0.0074w^2-0.0133w+0.0064)x^2+(-0.5839w^2+1.0268w-0.7103)x+11.472w^2-17.455w+40.07$, 100-w-x-y);
if $1.2<w\leq4.0$, coordinates (x,y,z) in a ternary composition diagram are within the range of a figure surrounded by curves MW, WN, NO, and OP, and straight lines PB", B"D, DC, and CM that connect the following 8 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.57$),
point N (18.2, $-0.3773w^2+3.319w+28.26$, $0.3773w^2-4.319w+53.54$),
point O (36.8, $-0.1392w^2+1.4381w+24.475$, $0.1392w^2+0-2.4381w+38.725$),
point P (51.7, $-0.2381w^2+1.881w+20.186$, $0.2381w^2-2.881w+28.114$),
point B" (51.6, 0.0, -w+48.4),
point D (-2.8226w+40.211, 0.0, 1.8226w+59.789), and
point C (0.0, $0.1081w^2-5.169w+58.447$, $-0.1081w^2+4.169w+41.553$), or on the above line segments (excluding points on the straight lines B"D and CM);

the curve MW is represented by coordinates (x, $(0.0043w^2-0.0359w+0.1509)x^2+(-0.0493w^2+0.4669w-3.6193)x-0.3004w^2+2.419w+55.53$, 100-w-x-y),
the curve WN is represented by coordinates (x, $(0.0055w^2-0.0326w+0.0665)x^2+(-0.1571w^2+0.8981w-2.6274)x+0.6555w^2-2.2153w+54.044$, 100-w-x-y),
the curve NO is represented by coordinates (x, $(-0.00062w^2+0.0036w+0.0037)x^2+(0.0375w^2-0.239w-0.4977)x-0.8575w^2+6.4941w+36.078$, 100-w-x-y), and
the curve OP is represented by coordinates (x, $(-0.000463w^2+0.0024w-0.0011)x^2+(0.0457w^2-0.2581w-0.075)x-1.355w^2+8.749w+27.096$, 100-w-x-y); or
if $4.0<w\leq7.0$, coordinates (x,y,z) in a ternary composition diagram are within the range of a figure surrounded by curves MW, WN, NO, and OP, and straight lines PB", B"D, DC, and CM that connect the following 8 points:

point M (0.0, $-0.0667w^2+0.8333w+58.133$, $0.0667w^2-1.8333w+41.867$),
point W (10.0, $-0.0667w^2+1.1w+39.267$, $0.0667w^2-2.1w+50.733$),
point N (18.2, $-0.0889w^2+1.3778w+31.411$, $0.0889w^2-2.3778w+50.389$),
point O (36.8, $-0.0444w^2+0.6889w+25.956$, $0.0444w^2-1.6889w+37.244$),
point P (51.7, $-0.0667w^2+0.8333w+21.633$, $0.0667w^2-1.8333w+26.667$),
point B" (51.6, 0.0, -w+48.4),
point D (-2.8w+40.1, 0.0, 1.8w+59.9), and
point C (0.0, $0.0667w^2-4.9667w+58.3$, $-0.0667w^2+3.9667w+41.7$), or on the above line segments (excluding points on the straight lines B"D and CM);

the curve MW is represented by coordinates (x, $(0.00357w^2-0.0391w+0.1756)x^2+(-0.0356w^2+0.4178w-3.6422)$

x-0.0667$w^2$+0.8333w+58.103, 100-w-x-y),

the curve WN is represented by coordinates (x, (-0.002061$w^2$+0.0218w-0.0301)$x^2$+(0.0556$w^2$-0.5821w-0.1108)x-0.4158$w^2$+4.7352w+43.383, 100-w-x-y),

the curve NO is represented by coordinates (x, 0.0082$x^2$+(0.0022$w^2$-0.0345w-0.7521)x-0.1307$w^2$+2.0247w+42.327, 100-w-x-y), and

the curve OP is represented by coordinates (x, (-0.0006258$w^2$+0.0066w-0.0153)$x^2$+(0.0516$w^2$-0.5478w+0.9894)x-1.074$w^2$+11.651w+10.992, 100-w-x-y). When the refrigerant of the present disclosure satisfies the above requirements, it has a refrigerating capacity ratio of 80% or more and a GWP of 350 or less relative to that of R410A, and further ensures a ASHRAE lower flammability.

The refrigerant of the present disclosure is preferably as follows. When the mass% of $CO_2$, R32, HFO-1132(E), and R1234yf based on their sum is respectively represented by w, x, y, and z,

if 0<w≤0.6, coordinates (x,y,z) in a ternary composition diagram in which the sum of R32, HFO-1132(E), and R1234yf is (100-w) mass% are within the range of a figure surrounded by a curve GO, and straight lines OF and FG that connect the following 3 points:

> point G (-5.8333$w^2$-3.1667w+22.2, 7.0833$w^2$+1.4167w+26.2, - 1.25$w^2$+0.75w+51.6),
> point O (36.8, 0.8333$w^2$+1.8333w+22.6, -0.8333$w^2$-2.8333w+40.6), and
> point F (-0.0833w+36.717, -4.0833w+5.1833, 3.1666w+58.0997), or the above line segments;

the curve GO is represented by coordinates (x, (0.00487$w^2$-0.0059w+0.0072)$x^2$+(-0.279$w^2$+0.2844w-0.6701)x+3.7639$w^2$-0.2467w+37.512, 100-w-x-y);

if 0.6<w≤1.2, coordinates (x,y,z) in a ternary composition diagram are within the range of a figure surrounded by curves GN and NO, and straight lines OF and FG that connect the following 4 points:

> point G (-5.8333$w^2$-3.1667w+22.2, 7.0833$w^2$+1.4167w+26.2, - 1.25$w^2$+0.75w+51.6),
> point N (18.2, 0.2778$w^2$+3.0w+27.7, -0.2778$w^2$-4.0w+54.1),
> point O (36.8, 0.8333$w^2$+1.8333w+22.6, -0.8333$w^2$-2.8333w+40.6), and
> point F (-0.0833w+36.717, -4.0833w+5.1833, 3.1666w+58.0997), or on the above line segments;

if 0.6<w≤1.2, the curve GN is represented by coordinates (x, (0.0122$w^2$-0.0113w+0.0313)$x^2$+(-0.3582$w^2$+0.1624w-1.4551)x+2.7889$w^2$+3.7417w+43.824, 100-w-x-y);

if 0.6<w≤1.2, the curve NO is represented by coordinates (x, (0.00487$w^2$-0.0059w+0.0072)$x^2$+(-0.279$w^2$+0.2844w-0.6701)x+3.7639$w^2$-0.2467w+37.512, 100-w-x-y);

if 1.2<w≤1.3, coordinates (x,y,z) in a ternary composition diagram are within the range of a figure surrounded by curves MW, WN, and NO, and straight lines OF, FC, and CM that connect the following 6 points:

> point M (0.0, -0.3004$w^2$+2.419w+55.53, 0.3004$w^2$-3.419w+44.47),
> point W (10.0, -0.3645$w^2$+3.5024w+34.422, 0.3645$w^2$-4.5024w+55.578),
> point N (18.2, -0.3773$w^2$+3.319w+28.26, 0.3773$w^2$-4.319w+53.54),
> point O (36.8, -0.1392$w^2$+1.4384w+24.475, 0.1392$w^2$-2.4381w+38.725),
> point F (36.6, -3w+3.9, 2w+59.5), and
> point C (0.0, 0.1081$w^2$-5.169w+58.447, -0.1081$w^2$+4.169w+41.553), or on the above line segments (excluding points on the straight line CM);

the curve MW is represented by coordinates (x, (0.0043$w^2$-0.0359w+0.1509)$x^2$+(-0.0493$w^2$+0.4669w-3.6193)x-0.3004$w^2$+2.419w+55.53, 100-w-x-y),

the curve WN is represented by coordinates (x, (0.0055$w^2$-0.0326w+0.0665)$x^2$+(-0.1571$w^2$+0.8981w-2.6274)x+0.6555$w^2$-2.2153w+54.044, 100-w-x-y), and

the curve NO is represented by coordinates (x, (-0.00062$w^2$+0.0036w+0.0037)$x^2$+(0.0375$w^2$-0.239w-0.4977)x-0.8575$w^2$+6.4941w+36.078, 100-w-x-y);

if 1.3<w≤4.0, coordinates (x,y,z) in a ternary composition diagram are within the range of a figure surrounded by curves MW, WN, and NO, and straight lines OB', B'D, DC, and CM that connect the following 7 points:

> point M (0.0, -0.3004$w^2$+2.419w+55.53, 0.3004$w^2$-3.419w+44.47),
> point W (10.0, -0.3645$w^2$+3.5024w+34.422, 0.3645$w^2$-4.5024w+55.578),
> point N (18.2, -0.3773$w^2$+3.319w+28.26, 0.3773$w^2$-4.319w+53.54),

point O (36.8, $-0.1392w^2+1.4384w+24.475$, $0.1392w^2-2.4381w+38.725$),
point B' (36.6, 0.0, $-w+63.4$), R
point D ($-2.8226w+40.211$, 0.0, $1.8226w+59.789$), and
point C (0.0, $0.1081w^2-5.169w+58.447$, $-0.1081w^2+4.169w+41.553$), or on the above line segments (excluding points on the straight line CM);

the curve MW is represented by coordinates (x, $(0.0043w^2-0.0359w+0.1509)x^2+(-0.0493w^2+0.4669w-3.6193)x-0.3004w^2+2.419w+55.53$, 100-w-x-y),
the curve WN is represented by coordinates (x, $(0.0055w^2-0.0326w+0.0665)x^2+(-0.1571w^2+0.8981w-2.6274)x+0.6555w^2-2.2153w+54.044$, 100-w-x-y), and
the curve NO is represented by coordinates (x, $(-0.00062w^2+0.0036w+0.0037)x^2+(0.0375w^2-0.239w-0.4977)x+(-0.8575w^2+6.4941w+36.078)$, 100-w-x-y); or
if $4.0<w\leq7.0$, coordinates (x,y,z) in a ternary composition diagram are within the range of a figure surrounded by curves MW, WN, and NO, and straight lines OB', B'D, DC, and CM that connect the following 7 points:

point M (0.0, $-0.0667w^2+0.8333w+58.133$, $0.0667w^2-1.8333w+41.867$),
point W (10.0, $-0.0667w^2+1.1w+39.267$, $0.0667w^2-2.1w+50.733$),
point N (18. 2, $-0.0889w^2+1.3778w+31.411$, $0.0889w^2-2.3778w+50.389$),
point O (36.8, $-0.0444w^2+0.6889w+25.956$, $0.0444w^2-1.6889w+37.244$),
point B' (36.6, 0.0, $-w+63.4$),
point D ($-2.8w+40. 1$, 0.0, $1.8w+59.9$), and
point C (0.0, $0.0667w^2-4.9667w+58.3$, $-0.0667w^2+3.9667w+41.7$), or on the above line segments (excluding points on the straight line CM);

the curve MW is represented by coordinates (x, $(0.00357w^2-0.0391w+0.1756)x^2+(-0.0356w^2+0.4178w-3.6422)x-0.0667w^2+0.8333w+58.103$, 100-w-x-y),
the curve WN is represented by coordinates (x, $(-0.002061w^2+0.0218w-0.0301)x^2+(0.0556w^2-0.5821w-0.1108)x-0.4158w^2+4.7352w+43.383$, 100-w-x-y), and
the curve NO is represented by coordinates
(x, $(0.0082x^2+(0.0022w^2-0.0345w-0.7521)x-0.1307w^2+2.0247w+42.327$, 100-w-x-y). When the refrigerant of the present disclosure satisfies the above requirements, it has a refrigerating capacity ratio of 80% or more and a GWP of 250 or less relative to that of R410A, and further ensures a ASHRAE lower flammability.

The refrigerant of the present disclosure is preferably as follows. When the mass% of $CO_2$, R32, HFO-1132(E), and R1234yf based on their sum is respectively represented by w, x, y, and z,

if $1.2<w\leq4.0$, coordinates (x,y,z) in a ternary composition diagram in which the sum of R32, HFO-1132(E), and R1234yf is (100-w) mass% are within the range of a figure surrounded by curves MW and WN, and straight lines NE, EC, and CM that connect the following 5 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point E ($-0.0365w+18.26$, $0.0623w^2-4.5381w+31.856$, $-0.0623w^2+3.5746w+49.884$), and
point C (0.0, $0.1081w^2-5.169w+58.447$, $-0.1081w^2+4.169w+41.553$), or on the above line segments (excluding points on the straight line CM);

the curve MW is represented by coordinates (x, $(0.0043w^2-0.0359w+0.1509)x^2+(-0.0493w^2+0.4669w-3.6193)x-0.3004w^2+2.419w+55.53$, 100-w-x-y),
the curve WN is represented by coordinates (x, $(0.0055w^2-0.0326w+0.0665)x^2+(-0.1571w^2+0.8981w-2.6274)x+0.6555w^2-2.2153w+54.044$, 100-w-x-y); or
if $4.0<w\leq7.0$, coordinates (x,y,z) in a ternary composition diagram are within the range of a figure surrounded by curves MW and WN, and straight lines NE, EC, and CM that connect the following 5 points:

point M (0.0, $-0.0667w^2+0.8333w+58.133$, $0.0667w^2-1.8333w+41.867$),
point W (10.0, $-0.0667w^2+1.1w+39.267$, $0.0667w^2-2.1w+50.733$),
point N (18.2, $-0.0889w^2+1.3778w+31.411$, $0.0889w^2-2.3778w+50.389$),

point E (18.1, $0.0444w^2-4.3556w+31.411$, $-0.0444w^2+3.3556w+50.489$), and
point C (0.0, $0.0667w^2-4.9667w+58.3$, $-0.0667w^2+3.9667w+41.7$), or on the above line segments (excluding points on the straight line CM);

the curve MW is represented by coordinates (x, $(0.00357w^2-0.0391w+0.1756)x^2+(-0.0356w^2+0.4178w-3.6422)x-0.0667w^2+0.8333w+58.103$, 100-w-x-y), and
the curve WN is represented by coordinates (x, $(-0.002061w^2+0.0218w-0.0301)x^2+(0.0556w^2-0.5821w-0.1108)x-0.4158w^2+4.7352w+43.383$, 100-w-x-y). When the refrigerant of the present disclosure satisfies the above requirements, it has a refrigerating capacity ratio of 80% or more and a GWP of 125 or less relative to that of R410A, and further ensures a ASHRAE lower flammability.

The refrigerant of the present disclosure may further comprise other additional refrigerants in addition to $CO_2$, R32, HFO-1132(E), and R1234yf as long as the above properties and effects are not impaired. In this respect, the refrigerant according to the present disclosure preferably comprises $CO_2$, R32, HFO-1132(E), and R1234yf in a total amount of 99.5 mass% or more, more preferably 99.75 mass% or more, and still more preferably 99.9 mass% or more, based on the entire refrigerant.

Additional refrigerants are not particularly limited and can be widely selected. The mixed refrigerant may contain one additional refrigerant, or two or more additional refrigerants.

**1.2.** Use

The refrigerant of the present disclosure can be preferably used as a working fluid in a refrigerating machine.

The composition according to the present disclosure is suitable for use as an alternative refrigerant for R410A.

2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

2.2. Tracer

A tracer is added to the refrigerant composition according to the present disclosure at a detectable concentration so that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers. It is preferable that a compound that cannot be an impurity inevitably mixed into the refrigerant according to the present disclosure is selected as the tracer.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a fluorocarbon, a hydrochlorocarbon, a fluorocarbon, or a fluoroether.

Specifically, the following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3Cl$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The tracer compound can be present in the refrigerant composition at a total concentration of about 10 parts per million by weight (ppm) to about 1000 ppm. The tracer compound is preferably present in the refrigerant composition at a total concentration of about 30 ppm to about 500 ppm, and most preferably about 50 ppm to about 300 ppm.

2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 mass%, and more preferably 0.05 to 2 mass%, based on the entire refrigerant.

2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include **4-**methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 mass%, and more preferably 0.05 to 2 mass%, based on the entire refrigerant.

3. Refrigeration-Oil-Containing Working Fluid

The refrigeration-oil-containing working fluid according to the present disclosure comprises at least the refrigerant or refrigerant composition according to the present disclosure and a refrigeration oil, for use as a working fluid in a refrigerating machine. Specifically, the refrigeration-oil-containing working fluid according to the present disclosure is obtained by mixing a refrigeration oil used in a compressor of a refrigerating machine with the refrigerant or the refrigerant composition. The refrigeration-oil-containing working fluid generally comprises 10 to 50 mass% of refrigeration oil.

3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 to 400 cSt at 40°C is preferable from the standpoint of lubrication.

The refrigeration-oil-containing working fluid according to the present disclosure may further optionally contain at least one additive. Examples of additives include compatibilizing agents described below.

3.2. Compatibilizing Agent

The refrigeration-oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

The embodiments are described above; however, it will be understood that various changes in form and detail can be made without departing from the spirit and scope of the claims.

Examples

The present disclosure is described in more detail below with reference to Examples. However, the present disclosure is not limited to the Examples.

The burning velocity of individual mixed refrigerants of $CO_2$, R32, HFO-1132(E), and R1234yf was measured in accordance with the ANSI/ASHRAE Standard 34-2013. A formulation that shows a burning velocity of 10 cm/s was found by changing the concentration of $CO_2$. Tables 1 and 2 show the formulations found.

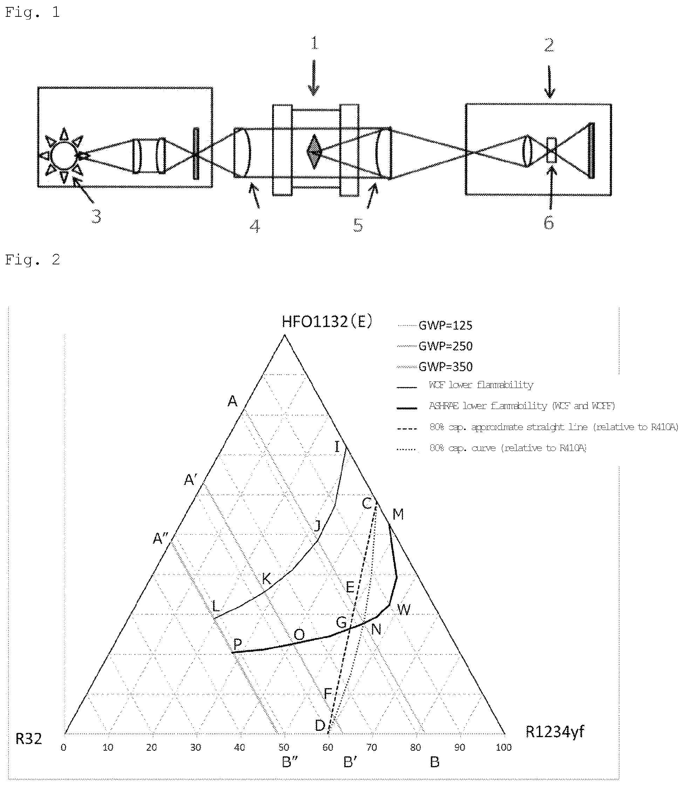

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using a schlieren method. A cylindrical container (inner diameter: 155 mm, length: 198 mm) equipped with two acrylic light-transmission windows was used as the sample cell, and a xenon lamp was used as the light source. Schlieren images of the flame were recorded with a high-speed digital video camera at a frame rate of 600 fps and stored on a PC.

The burning velocity (Su (cm/s)) is the volume of unburned gas in which the flame surface of the unit area is consumed in the unit time, and is calculated according to the following equation.

$$Su=Sb*\rho u/\rho b$$

Sb: Flame propagation velocity (cm/s)
$\rho u$: Adiabatic flame temperature (unburned)
$\rho b$: Adiabatic flame temperature (already burned)

Sb was obtained from schlieren video images, $\rho u$ was the measured temperature, and $\rho b$ was calculated from the heat of the combustion of the combustion gas and the specific heat of constant pressure.

Each WCFF concentration was obtained by using the WCF concentration as the initial concentration and performing a leak simulation using NIST Standard Reference Database REFLEAK Version 4.0.

Table 1

| 0% $CO_2$ | | | | | | | | |
|---|---|---|---|---|---|---|---|---|
| Item | Unit | Comp. Ex.13 | Comp. Ex.14 | Comp. Ex.15 | Comp. Ex.16 | Comp. Ex.17 | Comp. Ex.18 | Comp. Ex.19 |
| | | I | | J | | K | | L |
| HFO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 28.0 | 32.8 | 33.2 | 31.2 | 27.6 | 23.8 | 19.4 |
| $CO_2$ | mass% | 0.0 | 0.0 | 0.0 | 0.0 | 0.0 | 0.0 | 0.0 |
| Burning velocity (WCF) | cm/s | 10 | 10 | 10 | 10 | 10 | 10 | 10 |

0.6% $CO_2$

| Item | Unit | Comp. Ex. 37 | Ex.3 | Ex.4 | Ex.5 | Ex.6 | Ex.7 | Ex.8 |
|---|---|---|---|---|---|---|---|---|
| | | I | | J | | K | | L |
| HFO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 27.4 | 32.6 | 32.6 | 30.6 | 27.0 | 23.3 | 10.8 |
| $CO_2$ | mass% | 0.6 | 0.6 | 0.6 | 0.6 | 0.6 | 0.6 | 0.6 |
| Burning velocity (WCF) | cm/s | 10 | 10 | 10 | 10 | 10 | 10 | 10 |

1.2% $CO_2$

| Item | Unit | Comp. Ex.49 | Ex.16 | Ex.17 | Ex.18 | Ex.19 | Ex.20 | Ex.21 |
|---|---|---|---|---|---|---|---|---|
| | | I | | J | | K | | L |
| HFO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 26.8 | 31.6 | 32.0 | 30.0 | 26.4 | 22.7 | 18.2 |
| $CO_2$ | mass% | 1.2 | 1.2 | 1.2 | 1.2 | 1.2 | 1.2 | 1.2 |
| Burning velocity (WCF) | cm/s | 10 | 10 | 10 | 10 | 10 | 10 | 10 |

1.3% $CO_2$

| Item | Unit | Comp. Ex.59 | Ex.29 | Ex.30 | Ex.31 | Ex.32 | Ex.33 | Ex.34 |
|---|---|---|---|---|---|---|---|---|
| | | I | | J | | K | | L |
| HFO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 26.7 | 31.5 | 31.9 | 29.9 | 26.3 | 22.6 | 18.1 |
| $CO_2$ | mass% | 1.3 | 1.3 | 1.3 | 1.3 | 1.3 | 1.3 | 1.3 |
| Burning velocity (WCF) | cm/s | 10 | 10 | 10 | 10 | 10 | 10 | 10 |

2.5% $CO_2$

| Item | Unit | Comp. Ex.69 | Ex.44 | Ex.45 | Ex.46 | Ex.47 | Ex.48 | Ex.49 |
|---|---|---|---|---|---|---|---|---|
| | | I | | J | | K | | L |
| HFO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 25.5 | 30.3 | 30.7 | 28.7 | 25.1 | 21.3 | 16.9 |
| $CO_2$ | mass% | 2.5 | 2.5 | 2.5 | 2.5 | 2.5 | 2.5 | 2.5 |
| Burning velocity (WCF) | cm/s | 10 | 10 | 10 | 10 | 10 | 10 | 10 |

4.0% $CO_2$

| Item | Unit | Comp. Ex.79 | Ex.59 | Ex.60 | Ex.61 | Ex.62 | Ex.63 | Ex.64 |
|---|---|---|---|---|---|---|---|---|
| | | I | | J | | K | | L |
| HFO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 24.0 | 28.8 | 29.2 | 27.2 | 23.6 | 19.8 | 15.4 |

(continued)

| Item | Unit | Comp. Ex.79 | Ex.59 | Ex.60 | Ex.61 | Ex.62 | Ex.63 | Ex.64 |
| | | I | | J | | K | | L |
|---|---|---|---|---|---|---|---|---|
| $CO_2$ | mass% | 4.0 | 4.0 | 4.0 | 4.0 | 4.0 | 4.0 | 4.0 |
| Burning velocity (WCF) | cm/s | 10 | 10 | 10 | 10 | 10 | 10 | 10 |

5.5% $CO_2$

| Item | Unit | Comp. Ex.89 | Ex.74 | Ex.75 | Ex.76 | Ex.77 | Ex.78 | Ex.79 |
| | | I | | J | | K | | L |
|---|---|---|---|---|---|---|---|---|
| HFO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 22.5 | 27.3 | 27.7 | 25.7 | 22.1 | 18.3 | 13.9 |
| $CO_2$ | mass% | 5.5 | 5.5 | 5.5 | 5.5 | 5.5 | 5.5 | 5.5 |
| Burning velocity (WCF) | cm/s | 10 | 10 | 10 | 10 | 10 | 10 | 10 |

7.0% $CO_2$

| Item | Unit | Comp. Ex. 99 | Ex.89 | Ex.90 | Ex.91 | Ex.92 | Ex.93 | Ex. 94 |
| | | I | | J | | K | | L |
|---|---|---|---|---|---|---|---|---|
| HFO-1132(E) | mass% | 72.0 | 57.2 | 48.5 | 41.2 | 35.6 | 32.0 | 28.9 |
| R32 | mass% | 0.0 | 10.0 | 18.3 | 27.6 | 36.8 | 44.2 | 51.7 |
| R1234yf | mass% | 21.0 | 25.8 | 26.2 | 24.2 | 20.6 | 16.8 | 12.4 |
| $CO_2$ | mass% | 7.0 | 7.0 | 7.0 | 7.0 | 7.0 | 7.0 | 7.0 |
| Burning velocity( WCF) | cm/s | 10 | 10 | 10 | 10 | 10 | 10 | 10 |

Table 2

| 0% CO₂ | | | | | | | | | | | |
|---|---|---|---|---|---|---|---|---|---|---|---|
| Item | | | Comp. Ex.20 | Comp. Ex.21 | Comp. Ex.22 | Comp. Ex.23 | Comp. Ex.24 | Comp. Ex.25 | Comp. Ex.26 | Comp. Ex.27 | Comp. Ex.28 |
| | | | M | | W | | N | | O | | P |
| WCF | HFO-1132 (E) | mass% | 52.6 | 39.2 | 32.4 | 29.3 | 27.7 | 24.5 | 22.6 | 21.2 | 20.5 |
| | R32 | mass% | 0.0 | 5.0 | 10.0 | 14.5 | 18.2 | 27.6 | 36.8 | 44.2 | 51.7 |
| | R1234yf | mass% | 47.4 | 55.8 | 57.6 | 56.2 | 54.1 | 47.9 | 40.6 | 34.6 | 27.8 |
| | CO₂ | mass% | 0.0 | 0.0 | 0.0 | 0.0 | 0.0 | 0.0 | 0.0 | 0.0 | 0.0 |
| Leak condition that results in WCFF | | | storage, shipping, -40°C,0% release, gas phase side | storage, shipping, -40°C,0% release, gas phase side | storage, shipping, -40°C,0% release, gas phase side | storage, shipping, -40°C,0% release, gas phase side | storage, shipping, -10°C,0% release, gas phase side | storage, shipping, -40°C,0% release, gas phase side | storage, shipping, -40°C,0% release, gas phase side | storage, shipping, -40°C,0% release, gas phase side | storage, shipping, -40°C,0% release, gas phase side |
| WCFF | HFO-1132 (E) | mass% | 72.0 | 57.8 | 48.7 | 43.6 | 40.6 | 34.9 | 31.4 | 29.2 | 27.1 |
| | R32 | mass% | 0.0 | 9.5 | 17.9 | 24.2 | 28.7 | 38.1 | 45.7 | 51.1 | 56.4 |
| | R1234yf | mass% | 28.0 | 32.7 | 33.4 | 32.2 | 30.7 | 27.0 | 23.0 | 19.7 | 16.5 |
| | CO₂ | mass% | 0.0 | 0.0 | 0.0 | 0.0 | 0.0 | 0.0 | 0.0 | 0.0 | 0.0 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 4 647 475 A1

0.6% $CO_2$

| Item | | | Comp. Ex. 35 | Comp. Ex. 38 | Comp. Ex. 39 | Comp. Ex. 40 | Ex.1 | Ex. 10 | Ex. 11 | Ex. 12 | Ex. 13 |
|---|---|---|---|---|---|---|---|---|---|---|---|
| | | | C=M | | W | | N(=E=G ) | | O | | P |
| WCF | HFO-1132 (E) | mass % | 55.4 | 42.4 | 35.1 | 31.6 | 29.6 | 26.3 | 24.0 | 22.4 | 20.9 |
| | R32 | mass % | 0.0 | 5.0 | 10.0 | 14.5 | 18.2 | 27.6 | 36.8 | 44.0 | 51.7 |
| | R1234yf | mass % | 44.0 | 52.0 | 54.3 | 53.3 | 51.6 | 45.5 | 38.6 | 33.0 | 26.8 |
| | $CO_2$ | mass % | 0.6 | 0.6 | 0.6 | 0.6 | 0.6 | 0.6 | 0.6 | 0.6 | 0.6 |
| Leak condition that results in WCFF | | | storage, shipping, -40°C, 0% release, gas phase side | storage, shipping, -40°C, 0% release, gas phase side | storage, shipping, -40°C, 0% release, liquid phase side | storage, shipping, -40°C, 0% release, liquid phase side | storage, shipping, -40°C, 0% release, gas phase side | storage, shipping, -40°C, 0% release, gas phase side | storage, shipping, -40°C, 0% release, liquid phase side | storage, shipping, -40°C, 0% release, liquid phase side | storage, shipping, -40°C, 0% release, liquid phase side |
| WCFF | HFO-1132 (E) | mass % | 72.0 | 58. 6 | 49.7 | 44.5 | 41.3 | 35.8 | 32.1 | 29.8 | 27.8 |
| | R32 | mass % | 0.0 | 8.9 | 16.9 | 23.0 | 27.4 | 36.6 | 44.1 | 49.4 | 54.7 |
| | R1234yf | mass % | 2.7 | 29.1 | 30.2 | 29.4 | 28.3 | 24.8 | 21.1 | 18.2 | 14.9 |
| | $CO_2$ | mass % | 3.3 | 3.4 | 3.2 | 3.1 | 3.0 | 2.8 | 2.7 | 2.6 | 2.6 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 4 647 475 A1

1.2% CO$_2$

| | Item | | Comp. Ex. 50 | Comp. Ex. 51 | Ex.15 | Ex.22 | Ex.23 | Ex.24 | Ex.25 | Ex.26 | Ex.27 |
|---|---|---|---|---|---|---|---|---|---|---|---|
| | | | M | | G=W | | N | | O | | P |
| WCF | HFO-1132 (E ) | mass % | 58.0 | 45.2 | 38.1 | 34.0 | 31.7 | 27.9 | 25.4 | 23.7 | 22.1 |
| | R32 | mass % | 0.0 | 5.0 | 10.0 | 14.4 | 18.2 | 27.6 | 36.8 | 44.0 | 51.7 |
| | R1234yf | mass % | 40.8 | 48.6 | 50.7 | 48.9 | 48.9 | 43.3 | 36.0 | 31.1 | 25.0 |
| | $CO_2$ | mass % | 1.2 | 1.2 | 1.2 | 1.2 | 1.2 | 1.2 | 1.2 | 1.2 | 1.2 |
| Leak condition that results in WCFF | | | storage, shipping, -40°C, 0% release, gas phase side | storage, shipping, -40°C, 6% release, gas phase side | storage, shipping, -40°C, 6% release, liquid phase side | storage, shipping, -40 °C. 4% release, liquid phase side | storage, shipping, -40 °C. 4% release, liquid phase side | storage, shipping, -40 °C. 4% release, liquid phase side | storage, shipping, -40 °C. 4% release, liquid phase side | storage, shipping, -40 °C. 4% release, liquid phase side | storage, shipping, -40 °C. 4% release, liquid phase side |
| WCFF | HFO-1132 (E ) | mass % | 72.0 | 59.3 | 50.9 | 45.6 | 42.2 | 36.4 | 32.7 | 30.3 | 28.3 |
| | R32 | mass % | 0.0 | 8.3 | 15.8 | 21.7 | 26.2 | 35.3 | 42.8 | 48.1 | 53.4 |
| | R1234yf | mass % | 24.8 | 28.0 | 28.5 | 27.7 | 26.7 | 23.6 | 20.0 | 17.1 | 13.9 |
| | $CO_2$ | mass % | 3.2 | 4.4 | 4.8 | 5.0 | 4.9 | 4.7 | 4.5 | 4.5 | 4.4 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

26

1.3% $CO_2$

EP 4 647 475 A1

| Item | | | Comp. Ex.60 | Ex. 35 | Ex.36 | Ex. 37 | Ex.38 | Ex.39 | Ex.40 | Ex.41 | Ex.42 |
|---|---|---|---|---|---|---|---|---|---|---|---|
| | | | M | | W | | N | | O | | P |
| WCF | HFO-1132 (E) | mass % | 58.2 | 45.5 | 38.4 | 34.3 | 31.9 | 28.1 | 25.6 | 23.9 | 22.3 |
| | R32 | mass | 0.0 | 5.0 | 10.0 | 14.4 | 18.2 | 27.6 | 36.8 | 44.0 | 51.7 |
| | R1234yf | mass | 40.5 | 48.2 | 50.3 | 50.0 | 48.6 | 43.0 | 36.3 | 30.8 | 24.7 |
| | $CO_2$ | mass % | 1.3 | 1.3 | 1.3 | 1.3 | 1.3 | 1.3 | 1.3 | 1.3 | 1.3 |
| Leak condition that results in WCFF | | | storage, shipping, -40°C, 0% release, gas phase side | storage, shipping, -40°C, 8% release, gas phase side | storage, shipping, -40°C, 6% release, liquid phase side | storage, shipping, -40°C, 6% release, liquid phase side | storage, shipping, -40°C, 6% release, liquid phase side | storage, shipping, -40°C, 4% release, liquid phase side | storage, shipping, -40°C, 4% release, liquid phase side | storage, shipping, -40°C, 4% release, liquid phase side | storage, shipping, -40°C, 4% release, liquid phase side |
| WCFF | HFO-1132 (E) | mass % | 72.0 | 59.4 | 51.0 | 45.7 | 42.2 | 36.5 | 32.8 | 30.4 | 28.4 |
| | R32 | mass | 0.0 | 8.2 | 15.8 | 21.5 | 26.0 | 35.1 | 42.6 | 47.9 | 53.2 |
| | R1234yf | mass | 25.0 | 27.6 | 28.1 | 27.8 | 26.9 | 26.3 | 19.7 | 16.9 | 13.6 |
| | $CO_2$ | mass % | 3.0 | 4.8 | 5.1 | 5.0 | 4.9 | 5.1 | 4.9 | 4.8 | 4.8 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

28

Table 3

| 2.5% CO$_2$ | | | | | | | | | | | |
|---|---|---|---|---|---|---|---|---|---|---|---|
| Item | | | Comp. Ex.70 | Ex. 50 | Ex. 51 | Ex.52 | Ex.53 | Ex.54 | Ex.55 | Ex.56 | Ex. 57 |
| | | | M | | W | | N | | O | | P |
| WCF | HFO-1132 (E) | mass% | 59.7 | 48.1 | 40.9 | 36.9 | 34.2 | 29.9 | 27.2 | 25.2 | 23.4 |
| | R32 | mass% | 0.0 | 5.0 | 10.0 | 14.4 | 18.2 | 27.6 | 36.8 | 44.0 | 51.7 |
| | R1234yf | mass% | 37.8 | 44.4 | 46.6 | 46.2 | 45.1 | 40.0 | 33.5 | 28.1 | 22.4 |
| | CO$_2$ | mass% | 2.5 | 2.5 | 2.5 | 2.5 | 2.5 | 2.5 | 2.5 | 2.5 | 2.5 |
| Leak condition that results in WCFF | | | storage, shipping, -40°C, 26% release, gas phase side | storage, shipping, -40°C, 20% release, gas phase side | storage, shipping, -40°C, 20% release, gas phase side | storage, shipping, -40°C, 20% release, gas phase side | storage, shipping, -40°C, 18% release, liquid phase side | storage, shipping, -40°C, 18% release, liquid phase side | storage, shipping, -40°C, 18% release, liquid phase side | storage, shipping, -40°C, 20% release, gas phase side | storage, shipping, -40°C, 22% release, gas phase side |
| WCFF | HFO-1132 (E) | mass% | 72.0 | 60.3 | 52.1 | 46.9 | 43.2 | 37.1 | 33.2 | 30.6 | 28.3 |
| | R32 | mass% | 0.0 | 7.5 | 14.6 | 20.2 | 24.7 | 34.1 | 41.8 | 47.6 | 53.4 |
| | R1234yf | mass% | 24.9 | 27.4 | 28.4 | 28.0 | 26.7 | 23.4 | 19.7 | 16.9 | 13.8 |
| | CO$_2$ | mass% | 3.1 | 4.8 | 4.9 | 4.9 | 5.4 | 5.4 | 5.4 | 4.9 | 4.5 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 4 647 475 A1

29

4.0% $CO_2$

| | Item | | Comp. Ex.80 | Ex.65 | Ex. 66 | Ex.67 | Ex. 68 | Ex.69 | Ex.70 | Ex. 71 | Ex. 72 |
|---|---|---|---|---|---|---|---|---|---|---|---|
| | | | M | | W | | N | | O | | P |
| WCF | HFO-1132 (E) | mass% | 60.4 | 49.6 | 42.6 | 38.3 | 35.5 | 31.0 | 28.0 | 25.9 | 23.9 |
| | R32 | mass% | 0.0 | 5.0 | 10.0 | 14.4 | 18.2 | 27.6 | 36.8 | 44.0 | 51.7 |
| | R1234yf | mass% | 35.6 | 41.4 | 43.4 | 43.3 | 42.3 | 37.4 | 31.2 | 26.1 | 20.4 |
| | $CO_2$ | mass% | 4.0 | 4.0 | 4.0 | 4.0 | 4.0 | 4.0 | 4.0 | 4.0 | 4.0 |
| Leak condition that results in WCFF | | | storage, shipping, -40°C, 32% release, gas phase side | storage, shipping, -40°C, 28% release, gas phase side | storage, shipping, -40°C, 28% release, gas phase side | storage, shipping, -40°C, 28% release, gas phase side | storage, shipping, -40°C, 28% release, gas phase side | storage, shipping, -40°C, 28% release, gas phase side | storage, shipping, -40°C, 32% release, gas phase side | storage, shipping, -40°C, 32% release, gas phase side | storage, shipping, -40°C, 32% release, gas phase side |
| WCFF | HFO-1132 (E) | mass% | 72.0 | 60.9 | 52.9 | 47.5 | 43.8 | 37.4 | 33.1 | 30.5 | 28.1 |
| | R32 | mass% | 0.0 | 7.1 | 13.9 | 19.4 | 23.9 | 33.5 | 41.7 | 47.6 | 53.6 |
| | R1234yf | mass% | 24.5 | 27.0 | 28.0 | 27.8 | 26.9 | 23.6 | 20.5 | 17.2 | 13.5 |
| | $CO_2$ | mass% | 3.5 | 5.0 | 5.2 | 5.3 | 5.4 | 5.5 | 4.7 | 4.7 | 4.8 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

EP 4 647 475 A1

31

5.5% $CO_2$

| Item | | | Comp. Ex.90 | Ex.80 | Ex.81 | Ex.82 | Ex.83 | Ex.84 | Ex.85 | Ex.86 | Ex.87 |
|---|---|---|---|---|---|---|---|---|---|---|---|
| | | | M | | W | | N | | O | | P |
| WCF | HFO-1132(E) | mass% | 60.7 | 50.3 | 43.3 | 39.0 | 36.3 | 31.6 | 28.4 | 26.2 | 24.2 |
| | R32 | mass% | 0.0 | 5.0 | 10.0 | 14.4 | 18.2 | 27.6 | 36.8 | 44.0 | 51.7 |
| | R1234yf | mass% | 33.8 | 39.2 | 41.2 | 41.1 | 40.0 | 35.3 | 29.3 | 24.3 | 18.6 |
| | $CO_2$ | mass% | 5.5 | 5.5 | 5.5 | 5.5 | 5.5 | 5.5 | 5.5 | 5.5 | 5.5 |
| Leak condition that results in WCFF | | | storage, shipping, -40°C, 36% release, gas phase side | storage, shipping, -40°C, 34% release, gas phase side | storage, shipping, -40°C, 34% release, gas phase side | storage, shipping, -40°C, 34% release, gas phase side | storage, shipping, -40°C, 34% release, gas phase side | storage, shipping, -40°C, 36% release, gas phase side | storage, shipping, -40°C, 38% release, gas phase side | storage, shipping, -40°C, 40% release, gas phase side | storage, shipping, -40°C, 40% release, gas phase side |
| WCFF | HFO-1132(E) | mass% | 72.0 | 61.2 | 53.2 | 47.8 | 44.2 | 37.6 | 33.2 | 30.3 | 27.9 |
| | R32 | mass% | 0.0 | 6.8 | 13.5 | 19.0 | 23.4 | 33.2 | 41.7 | 47.9 | 54.2 |
| | R1234yf | mass% | 24.0 | 27.0 | 28.1 | 27.7 | 26.8 | 23.9 | 20.2 | 17.3 | 13.3 |
| | $CO_2$ | mass% | 4.0 | 5.0 | 5.2 | 5.5 | 5.6 | 5.3 | 4.9 | 4.5 | 4.6 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

7.0% $CO_2$

| Item | | | Comp. Ex.100 (M) | Ex. 95 | Ex. 96 (W) | Ex. 97 | Ex. 98 (N) | Ex. 99 | Ex.100 (O) | Ex.101 | Ex.102 (P) |
|---|---|---|---|---|---|---|---|---|---|---|---|
| WCF | HFO-1132 (E) | mass% | 60.7 | 50.3 | 43.7 | 39.5 | 36.7 | 31.9 | 28.6 | 26.4 | 24.2 |
| | R32 | mass% | 0.0 | 5.0 | 10.0 | 14.4 | 18.2 | 27.6 | 36.8 | 44.0 | 51.7 |
| | R1234yf | mass% | 32.3 | 37.7 | 39.3 | 39.1 | 38.1 | 33.5 | 27.6 | 22.6 | 17.1 |
| | CO$_2$ | mass% | 7.0 | 7.0 | 7.0 | 7.0 | 7.0 | 7.0 | 7.0 | 7.0 | 7.0 |
| Leak condition that results in WCFF | | | storage, shipping, -40°C, 42% release, gas phase side | storage, shipping, -40°C, 34% release, gas phase side | storage, shipping, -40°C, 38% release, gas phase side | storage, shipping, -40°C, 40% release, gas phase side | storage, shipping, -40°C, 40% release, gas phase side | storage, shipping, -40°C, 42% release, gas phase side | storage, shipping, -40°C, 42% release, gas phase side | storage, shipping, -40°C, 42% release, gas phase side | storage, shipping, -40°C, 44% release, gas phase side |
| WCFF | HFO-1132 (E) | mass% | 72.0 | 61.2 | 53.4 | 48.1 | 44.4 | 37.7 | 33.2 | 30.4 | 27.8 |
| | R32 | mass% | 0.0 | 6.8 | 13.3 | 18.7 | 23.2 | 33.1 | 41.7 | 47.9 | 54.6 |
| | R1234yf | mass% | 24.4 | 27.0 | 27.8 | 28.1 | 27.1 | 24.1 | 19.8 | 16.3 | 12.7 |
| | CO$_2$ | mass% | 3.6 | 5.0 | 5.5 | 5.1 | 5.3 | 5.1 | 5.3 | 5.4 | 4.9 |
| Burning velocity (WCF) | | cm/s | 8 or less | 8 or less | 8 or less | 8 or less | 8 or less | 8 or less | 8 or less | 8 or less | 8 or less |
| Burning velocity (WCFF) | | cm/s | 10 | 10 | 10 | 10 | 10 | 10 | 10 | 10 | 10 |

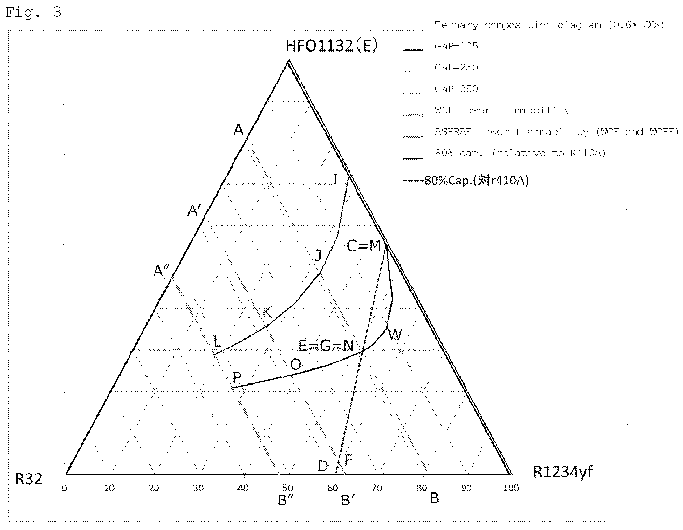

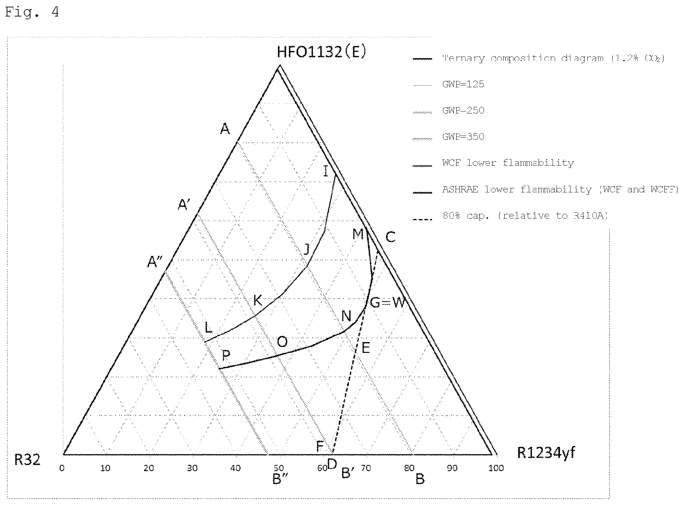

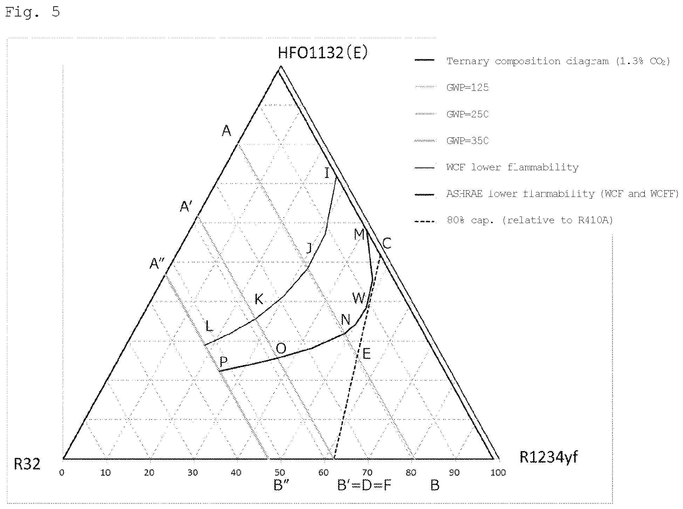

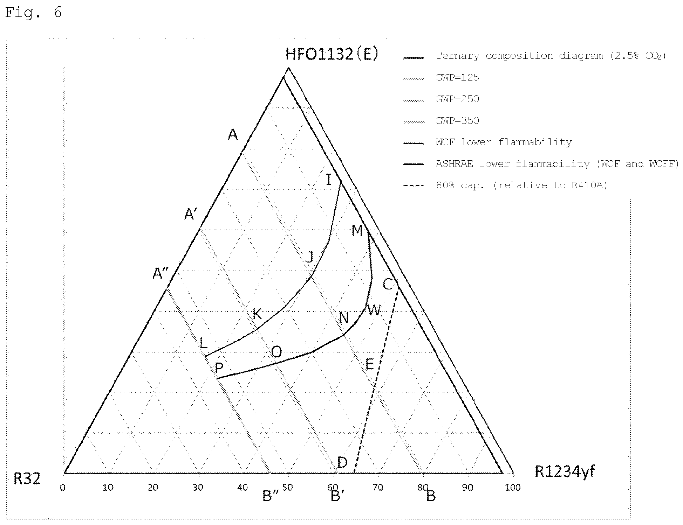

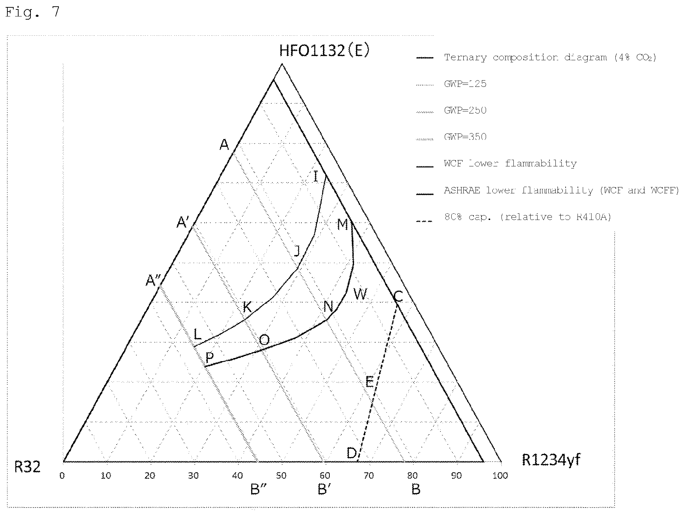

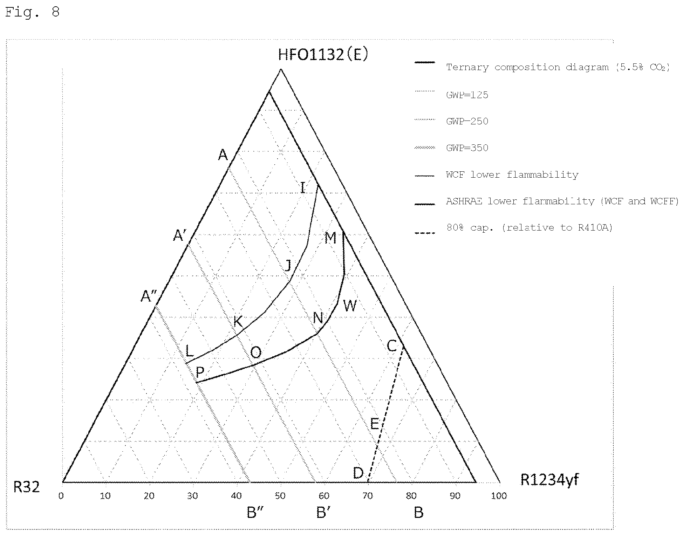

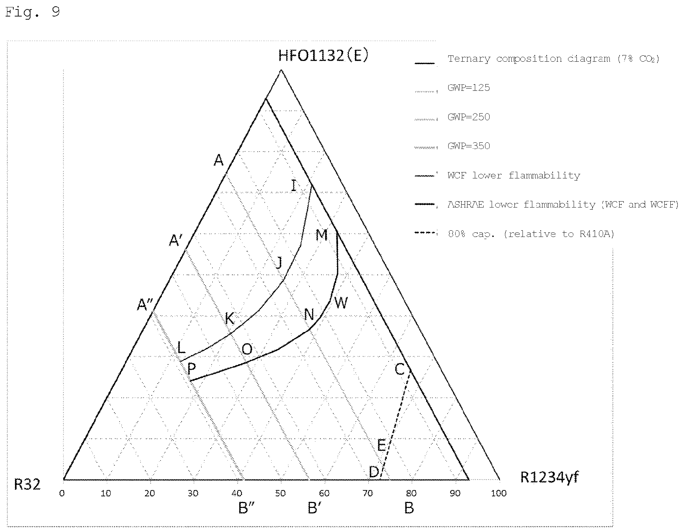

The results indicate that when the mass% of $CO_2$, R32, HFO-1132(E), and R1234yf based on their sum is respectively represented by w, x, y, and z in the ternary composition diagrams of Figs. 2 to 9 in which the sum of R32, HFO-1132(E), and R1234yf is (100-w) mass%, when coordinates(x, y, z) are on or below the straight lines connecting points I, J, K, and L, a WCF lower flammability is achieved.

In the ternary composition diagram of Fig. 2, it is also found that when coordinates (x, y, z) are on or below the straight lines connecting points M, N, O, and P, a ASHRAE lower flammability is achieved.

Mixed refrigerants were prepared by mixing R32, HFO-1132(E), and R1234yf at mass% based on their sum shown in Tables 3 to 10. The coefficient of performance (COP) ratio and the refrigerating capacity ratio of the mixed refrigerants in Tables 3 to 10 relative to those of R410 were determined.

The GWP of compositions each comprising a mixture of R1234yf and R410A (R32 = 50%/R125 = 50%) was evaluated based on the values stated in the Intergovernmental Panel on Climate Change (IPCC), fourth report. The GWP of HFO-1132(E), which was not stated in the report, was assumed to be 1 from HFO-1132a (GWP = 1 or less) and HFO-1123 (GWP = 0.3, described in PTL 1). The refrigerating capacity of compositions each comprising R410A and a mixture of HFO-1132(E), HFO-1123, and R1234yf was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

Evaporation temperature: 5°C
Condensation temperature: 45°C
Superheating temperature: 5 K
Subcooling temperature: 5 K
$E_{comp}$ (compressive modulus): 0.7 kWh

Tables 3 to 10 show these values together with the GWP of each mixed refrigerant. Tables 3 to 10 respectively show the cases in which the $CO_2$ concentrations are 0 mass%, 0.6 mass%, 1.2 mass%, 1.3 mass%, 2.5 mass%, 4 mass%, 5.5 mass%, and 7 mass%.

Table 4

| 0% $CO_2$ | | | | | | | | | | | |
|---|---|---|---|---|---|---|---|---|---|---|---|
| Item | Unit | Comp. Ex.1 | Comp. Ex.2 | Comp. Ex.3 | Comp. Ex.4 | Comp. Ex.5 | Comp. Ex.6 | Comp. Ex.7 | Comp. Ex.8 | Comp. Ex. 9 |
| | | | A | B | A' | B' | A" | B" | C | D |
| HFO-1132 (E) | mass% | R410A | 81.6 | 0.0 | 63.1 | 0.0 | 48.2 | 0.0 | 58.3 | 0.0 |
| R32 | mass% | | 18.4 | 18.1 | 36.9 | 36.7 | 51.8 | 51.5 | 0.0 | 40.3 |
| R1234yf | mass% | | 0.0 | 81.9 | 0.0 | 63.3 | 0.0 | 49.5 | 41.7 | 59.7 |
| $CO_2$ | mass% | | 0.0 | 0.0 | 0.0 | 0.0 | 0.0 | 0.0 | 0.0 | 0.0 |
| GWP | - | 2088 | 125 | 125 | 250 | 250 | 350 | 350 | 2 | 274 |
| COP ratio | % (relative to R410A) | 100 | 98.7 | 103.6 | 98.7 | 102.3 | 99.2 | 102.1 | 100.3 | 102.2 |
| Refrigerating capacity ratio | % (relative to R410A) | 100 | 105.3 | 62.5 | 109.9 | 77.5 | 112.1 | 87.0 | 80.0 | 80.0 |
| Condensation glide | °C | 0.1 | 0.3 | 6.8 | 0.1 | 4.5 | 0.0 | 2.7 | 2.9 | 4.0 |

| Item | Unit | Comp. Ex. 10 | Comp. Ex. 11 | Comp. Ex. 12 | Comp. Ex. 13 | Comp. Ex.14 | Comp. Ex.15 | Comp. Ex. 16 | Comp. Ex. 17 | Comp. Ex.18 |
|---|---|---|---|---|---|---|---|---|---|---|
| | | E | F | G | I | | J | | K | |
| HFO-1132 (E) | mass% | 31.9 | 5.2 | 26.2 | 72.0 | 57.2 | 48.5 | 41.2 | 35.6 | 32.0 |
| R32 | mass% | 18.2 | 36.7 | 22.2 | 0.0 | 10.0 | 18.3 | 27.6 | 36.8 | 44.2 |

(continued)

| Item | Unit | Comp. Ex. 10 | Comp. Ex. 11 | Comp. Ex. 12 | Comp. Ex. 13 | Comp. Ex.14 | Comp. Ex.15 | Comp. Ex. 16 | Comp. Ex. 17 | Comp. Ex.18 |
|---|---|---|---|---|---|---|---|---|---|---|
| | | E | F | G | I | | J | | K | |
| R1234yf | mass% | 49.9 | 58.1 | 51.6 | 28.0 | 32.8 | 33.2 | 31.2 | 27.6 | 23.8 |
| $CO_2$ | mass% | 0.0 | 0.0 | 0.0 | 0.0 | 0.0 | 0.0 | 0.0 | 0.0 | 0.0 |
| GWP | - | 125 | 250 | 152 | 2 | 69 | 125 | 188 | 250 | 300 |
| COP ratio | % (relative to R410A) | 100.3 | 101.8 | 100.5 | 99.9 | 99.5 | 99.4 | 99.5 | 99.6 | 99.8 |
| Refrigerating capacity ratio | % (relative to R410A) | 82.3 | 80.8 | 82.4 | 86.6 | 88.4 | 90.9 | 94.2 | 97.7 | 100.5 |
| Condensation glide | °C | 4.4 | 4.3 | 4.5 | 1.7 | 2.6 | 2.7 | 2.4 | 1.9 | 1.6 |

| Item | Unit | Comp. Ex.19 | Comp. Ex.20 | Comp. Ex. 21 | Comp. Ex.22 | Comp. Ex.23 | Comp. Ex.24 | Comp. Ex.25 | Comp. Ex.26 | Comp. Ex. 27 | Comp. Ex.28 |
|---|---|---|---|---|---|---|---|---|---|---|---|
|  |  | L | M | | W | | N | | O | | P |
| HFO-1132 (E) | mass% | 28.9 | 52.6 | 39.2 | 32.4 | 29.3 | 27.7 | 24.5 | 22.6 | 21.2 | 20.5 |
| R32 | mass% | 51.7 | 0.0 | 5.0 | 10.0 | 14.5 | 18.2 | 27.6 | 36.8 | 44.2 | 51.7 |
| R1234yf | mass% | 19.4 | 47.4 | 55.8 | 57.6 | 56.2 | 54.1 | 47.9 | 40.6 | 34.6 | 27.8 |
| $CO_2$ | mass% | 0.0 | 0.0 | 0.0 | 0.0 | 0.0 | 0.0 | 0.0 | 0.0 | 0.0 | 0.0 |
| GWP | - | 350 | 2 | 36 | 70 | 100 | 125 | 188 | 250 | 300 | 350 |
| COP ratio | % (relative to R410A) | 100.1 | 100.5 | 100.9 | 100.9 | 100.8 | 100.7 | 100.4 | 100.4 | 100.5 | 100.6 |
| Refrigerating capacity ratio | % (relative to R410A) | 103.3 | 77.1 | 74.8 | 75.6 | 77.8 | 80.0 | 85.5 | 91.0 | 95.0 | 99.1 |
| Condensation glide | °C | 1.2 | 3.4 | 4.7 | 5.2 | 5.1 | 4.9 | 4.0 | 3.0 | 2.3 | 1.7 |

Table 5

| 0.6% CO$_2$ | | | | | | | | | | |
|---|---|---|---|---|---|---|---|---|---|---|
| Item | Unit | Comp. Ex.29 | Comp. Ex.30 | Comp. Ex.31 | Comp. Ex.32 | Comp. Ex.33 | Comp. Ex.34 | Comp. Ex.35 | Comp. Ex.36 | Ex.1 |
| | | A | B | A' | B' | A" | B" | C=M | D | E=G=N |
| HFO-1132 (E) | mass% | 81.0 | 0.0 | 62.5 | 0.0 | 47.6 | 0.0 | 55.4 | 0.0 | 29.6 |
| R32 | mass% | 18.4 | 18.1 | 36.9 | 36.7 | 51.8 | 51.6 | 0.0 | 38.6 | 18.2 |
| R1234yf | mass% | 0.0 | 81.3 | 0.0 | 62.7 | 0.0 | 47.8 | 44.0 | 60.8 | 51.6 |
| CO$_2$ | mass% | 0.6 | 0.6 | 0.6 | 0.6 | 0.6 | 0.6 | 0.6 | 0.6 | 0.6 |
| GWP | - | 125 | 125 | 250 | 250 | 350 | 350 | 2 | 263 | 125 |
| COP ratio | % (relative to R410A) | 98.4 | 103.4 | 98.4 | 102.1 | 99.0 | 102.0 | 100.1 | 102.1 | 100.2 |
| Refrigerating capacity ratio | % (relative to R410A) | 106.5 | 63.7 | 111.1 | 78.7 | 113.1 | 88.6 | 80.0 | 80.0 | 82.4 |
| Condensation glide | °C | 0.7 | 7.5 | 0.4 | 4.9 | 0.3 | 3.0 | 3.9 | 4.7 | 5.2 |

| Item | Unit | Ex.2 | Comp. Ex.37 | Ex.3 | Ex.4 | Ex.5 | Ex.6 | Ex.7 | Ex.8 | Comp. Ex.38 |
|---|---|---|---|---|---|---|---|---|---|---|
| | | F | I | | J | | K | | L | |
| HFO-1132 (E) | mass% | 2.7 | 72.0 | 57.2 | 48.5 | 41.2 | 35.6 | 32.0 | 28.9 | 42.4 |
| R32 | mass% | 36.7 | 0.0 | 10.0 | 18.3 | 27.6 | 36.8 | 44.2 | 51.7 | 5.0 |
| R1234yf | mass% | 60.0 | 27.4 | 32.6 | 32.6 | 30.6 | 27.0 | 23.3 | 10.8 | 52.0 |
| CO$_2$ | mass% | 0.6 | 0.6 | 0.6 | 0.6 | 0.6 | 0.6 | 0.6 | 0.6 | 0.6 |
| GWP | - | 250 | 2 | 69 | 125 | 188 | 250 | 300 | 350 | 36 |
| COP ratio | % (relative to R410A) | 101.8 | 99.5 | 99.2 | 99.1 | 99.2 | 99.4 | 99.6 | 99.7 | 100.3 |
| Refrigerating capacity ratio | % (relative to R410A) | 80.4 | 88.1 | 89.7 | 92.3 | 95.5 | 99.0 | 101.7 | 108.2 | 77.9 |
| Condensation glide | °C | 4.8 | 5.2 | 2.4 | 3.2 | 3.1 | 2.8 | 2.3 | 1.9 | 3.9 |

| Item | Unit | Comp. Ex.39 | Comp. Ex.40 | Ex.9 | Ex.10 | Ex.11 | Ex.12 |
|---|---|---|---|---|---|---|---|
| | | W | | | O | | P |
| HFO-1132 (E) | mass% | 35.1 | 31.6 | 26.3 | 24.0 | 22.4 | 20.9 |
| R32 | mass% | 10.0 | 14.5 | 27.6 | 36.8 | 44.0 | 51.7 |
| R1234yf | mass% | 54.3 | 53.3 | 45.5 | 38.6 | 33.0 | 26.8 |
| CO$_2$ | mass% | 0.6 | 0.6 | 0.6 | 0.6 | 0.6 | 0.6 |
| GWP | - | 70 | 100 | 188 | 250 | 299 | 350 |
| COP ratio | % (relative to R410A) | 100.4 | 100.3 | 100.1 | 100.1 | 100.2 | 100.4 |

(continued)

| Item | Unit | Comp. Ex.39 | Comp. Ex.40 | Ex.9 | Ex.10 | Ex.11 | Ex.12 |
|---|---|---|---|---|---|---|---|
| | | W | | | O | | P |
| Refrigerating capacity ratio | % (relative to R410A) | 78.5 | 80.4 | 87.8 | 93.0 | 96.8 | 100.5 |
| Condensation glide | °C | 5.1 | 5.5 | 5.4 | 5.1 | 4.2 | 3.2 |

Table 6

| 1.2% $CO_2$ | | | | | | | | | |
|---|---|---|---|---|---|---|---|---|---|
| Item | Unit | Comp. Ex.41 | Comp. Ex.42 | Comp. Ex.43 | Comp. Ex.44 | Comp. Ex.45 | Comp. Ex.46 | Comp. Ex.47 | Comp. Ex.48 | Ex.13 |
| | | A | B | A' | B' | A" | B" | C | D | E |
| HFO-1132 (E) | mass% | 80.4 | 0.0 | 61.9 | 0.0 | 47.0 | 0.0 | 52.4 | 0.0 | 26.5 |
| R32 | mass% | 18.4 | 18.1 | 36.9 | 36.6 | 51.8 | 51.6 | 0.0 | 36.8 | 18.2 |
| R1234yf | mass% | 0.0 | 80.7 | 0.0 | 62.2 | 0.0 | 46.9 | 46.4 | 62.0 | 54.1 |
| $CO_2$ | mass% | 1.2 | 1.2 | 1.2 | 1.2 | 1.2 | 1.2 | 1.2 | 1.2 | 1.2 |
| GWP | - | 125 | 125 | 250 | 250 | 350 | 350 | 2 | 251 | 125 |
| COP ratio | % (relative to R410A) | 98.1 | 103.2 | 98.2 | 101.9 | 98.7 | 101.7 | 99.9 | 101.9 | 100.2 |
| Refrigerating capacity ratio | % (relative to R410A) | 107.7 | 65.0 | 112.2 | 79.8 | 114.2 | 89.9 | 80.0 | 80.0 | 82.0 |
| Condensation glide | °C | 1.2 | 8.1 | 0.8 | 5.4 | 0.6 | 3.4 | 4.9 | 5.3 | 6.0 |

| Item | Unit | Ex.14 | Ex.15 | Comp. Ex.49 | Ex.16 | Ex.17 | Ex.18 | Ex.19 | Ex.20 | Ex.21 |
|---|---|---|---|---|---|---|---|---|---|---|
| | | F | G=W | I | | J | | K | | L |
| HFO-1132 (E) | mass% | 0.3 | 38.1 | 72.0 | 57.2 | 48.5 | 41.2 | 35.6 | 32.0 | 28.9 |
| R32 | mass% | 36.6 | 10.0 | 0.0 | 10.0 | 18.3 | 27.6 | 36.8 | 44.2 | 51.7 |
| R1234yf | mass% | 61.9 | 50.7 | 26.8 | 31.6 | 32.0 | 30.0 | 26.4 | 22.7 | 18.2 |
| $CO_2$ | mass% | 1.2 | 1.2 | 1.2 | 1.2 | 1.2 | 1.2 | 1.2 | 1.2 | 1.2 |
| GWP | - | 250 | 70 | 2 | 69 | 125 | 188 | 250 | 300 | 350 |
| COP ratio | % (relative to R410A) | 101.9 | 99.9 | 99.2 | 98.9 | 98.8 | 98.9 | 99.1 | 99.4 | 99.6 |
| Refrigerating capacity ratio | % (relative to R410A) | 80.0 | 81.6 | 89.7 | 91.3 | 93.7 | 96.9 | 100.3 | 103.0 | 105.8 |
| Condensation glide | °C | 5.4 | 5.7 | 3.1 | 3.6 | 3.6 | 3.2 | 2.6 | 2.2 | 1.8 |

| Item | Unit | Comp. Ex. 50 | Comp. Ex. 51 | Ex.22 | Ex.23 | Ex.24 | Ex.25 | Ex.26 | Ex.27 |
|---|---|---|---|---|---|---|---|---|---|
| | | M | | | N | | O | | P |
| HFO-1132 (E) | mass% | 58.0 | 45.2 | 34.0 | 31.7 | 27.9 | 25.4 | 23.7 | 22.1 |
| R32 | mass% | 0.0 | 5.0 | 14.4 | 18.2 | 27.6 | 36.8 | 44.0 | 51.7 |
| R1234yf | mass% | 40.8 | 48.6 | 48.9 | 48.9 | 43.3 | 36.0 | 31.1 | 25.0 |
| $CO_2$ | mass% | 1.2 | 1.2 | 1.2 | 1.2 | 1.2 | 1.2 | 1.2 | 1.2 |
| GWP | - | 2 | 36 | 100 | 125 | 188 | 250 | 298 | 350 |
| COP ratio | % (relative to R410A) | 99.6 | 99.8 | 99.8 | 99.8 | 99.7 | 99.7 | 99.9 | 100.0 |
| Refrigerating capacity ratio | % (relative to R410A) | 82.9 | 80.9 | 83.6 | 84.9 | 90.0 | 95.3 | 98.7 | 102.4 |
| Condensation glide | °C | 4.3 | 5.4 | 5.6 | 5.4 | 4.4 | 3.4 | 2.8 | 2.2 |

Table 7

| 1.3% $CO_2$ | | | | | | | | | |
|---|---|---|---|---|---|---|---|---|---|
| Item | Unit | Comp. Ex.52 | Comp. Ex.53 | Comp. Ex.54 | Comp. Ex.55 | Comp. Ex.56 | Comp. Ex.57 | Comp. Ex.58 | Ex.28 | Comp. Ex.59 |
| | | A | B | A' | B'=D=F | A" | B" | C | E | I |
| HFO-1132 (E) | mass% | 80.3 | 0.0 | 61.8 | 0.0 | 46.9 | 0.0 | 51.9 | 26.1 | 72.0 |
| R32 | mass% | 18.4 | 18.1 | 36.9 | 36.6 | 51.8 | 51.6 | 0.0 | 18.2 | 0.0 |
| R1234yf | mass% | 0.0 | 80.6 | 0.0 | 62.1 | 0.0 | 47.1 | 46.8 | 54.4 | 26.7 |
| $CO_2$ | mass% | 1.3 | 1.3 | 1.3 | 1.3 | 1.3 | 1.3 | 1.3 | 1.3 | 1.3 |
| GWP | - | 125 | 125 | 250 | 250 | 350 | 350 | 2 | 125 | 2 |
| COP ratio | % (relative to R410A) | 98.0 | 103.2 | 98.1 | 101.9 | 98.7 | 101.7 | 99.8 | 100.2 | 99.1 |
| Refrigerating capacity ratio | % (relative to R410A) | 107.9 | 65.2 | 112.3 | 80.0 | 114.3 | 90.0 | 80.0 | 82.0 | 89.9 |
| Condensation glide | °C | 1.2 | 8.2 | 0.8 | 5.4 | 0.7 | 3.4 | 5.1 | 6.1 | 3.2 |

| Item | Unit | Ex.29 | Ex. 30 | Ex.31 | Ex. 32 | Ex. 33 | Ex. 34 | Comp. Ex. 60 | Ex. 35 | Ex. 36 |
|---|---|---|---|---|---|---|---|---|---|---|
| | | | J | | K | | L | M | | W |
| HFO-1132 (E) | mass% | 57.2 | 48.5 | 41.2 | 35.6 | 32.0 | 28.9 | 58.2 | 45.5 | 38.4 |
| R32 | mass% | 10.0 | 18.3 | 27.6 | 36.8 | 44.2 | 51.7 | 0.0 | 5.0 | 10.0 |
| R1234yf | mass% | 31.5 | 31.9 | 29.9 | 26.3 | 22.6 | 18.1 | 40.5 | 48.2 | 50.3 |
| $CO_2$ | mass% | 1.3 | 1.3 | 1.3 | 1.3 | 1.3 | 1.3 | 1.3 | 1.3 | 1.3 |
| GWP | - | 69 | 125 | 188 | 250 | 300 | 350 | 2 | 36 | 70 |
| COP ratio | % (relative to R410A) | 98.9 | 98.8 | 98.9 | 99.1 | 99.3 | 99.6 | 99.5 | 99.8 | 99.8 |

(continued)

| Item | Unit | Ex.29 | Ex. 30 | Ex.31 | Ex. 32 | Ex. 33 | Ex. 34 | Comp. Ex. 60 | Ex. 35 | Ex. 36 |
|---|---|---|---|---|---|---|---|---|---|---|
| | | | J | | K | | L | M | | W |
| Refrigerating capacity ratio | % (relative to R410A) | 91.5 | 93.9 | 97.1 | 100.5 | 103.2 | 106.0 | 83.3 | 81.3 | 82.0 |
| Condensation glide | °C | 3.7 | 3.6 | 3.2 | 2.7 | 2.3 | 1.8 | 4.4 | 5.4 | 5.8 |

| Item | Unit | Ex. 37 | Ex.38 | Ex.39 | Ex. 40 | Ex. 41 | Ex. 42 |
|---|---|---|---|---|---|---|---|
| | | | N | | O | | P |
| HEO-1132(E) | mass% | 34.3 | 31.9 | 28.1 | 25.6 | 23.9 | 22.3 |
| R32 | mass% | 14.4 | 18.2 | 27.6 | 36.8 | 44.0 | 51.7 |
| R1234yf | mass% | 50.0 | 48.6 | 43.0 | 36.3 | 30.8 | 24.7 |
| $CO_2$ | mass% | 1.3 | 1.3 | 1.3 | 1.3 | 1.3 | 1.3 |
| GWP | - | 100 | 125 | 188 | 250 | 298 | 350 |
| COP ratio | % (relative to R410A) | 99.8 | 99.8 | 99.6 | 99.7 | 99.8 | 100.0 |
| Refrigerating capacity ratio | % (relative to R410A) | 83.5 | 85.2 | 90.3 | 95.4 | 99.0 | 102.7 |
| Condensation glide | °C | 6 | 5.4 | 4.5 | 3.5 | 2.9 | 2.3 |

Table 8

| 2.5% $CO_2$ | | | | | | | | | |
|---|---|---|---|---|---|---|---|---|---|
| Item | Unit | Comp. Ex.61 | Comp. Ex. 62 | Comp. Ex.63 | Comp. Ex.64 | Comp. Ex.65 | Comp. ExL 66 | Comp. Ex.67 | Comp. Ex. 68 | Ex.43 |
| | | A | B | A' | B' | A" | B" | C | D | E |
| HFO-1132 (E) | mass% | 79.1 | 0.0 | 60.6 | 0.0 | 45.7 | 0.0 | 46.2 | 0.0 | 20.9 |
| R32 | mass% | 18.4 | 18.1 | 36.9 | 36.6 | 51.8 | 51.6 | 0.0 | 33.2 | 18.2 |
| R1234yf | mass% | 0.0 | 79.4 | 0.0 | 60.9 | 0.0 | 45.9 | 51.3 | 64.3 | 58.4 |
| $CO_2$ | mass% | 2.5 | 2.5 | 2.5 | 2.5 | 2.5 | 2.5 | 2.5 | 2.5 | 2.5 |
| GWP | - | 125 | 125 | 250 | 250 | 350 | 350 | 3 | 227 | 125 |
| COP ratio | % (relative to R410A) | 97.4 | 102.7 | 97.6 | 101.5 | 98.3 | 101.3 | 99.6 | 101.6 | 100.2 |
| Refrigerating capacity ratio | % (relative to R410A) | 110.3 | 67.8 | 114.5 | 82.5 | 116.4 | 92.5 | 80.0 | 80.0 | 81.7 |
| Condensation glide | °C | 2.0 | 9.5 | 1.5 | 6.3 | 1.3 | 4.1 | 7.1 | 6.9 | 7.6 |

| Item | Unit | Comp. Ex.69 | Ex. 44 | Ex.45 | Ex. 46 | Ex. 47 | Ex.48 | Ex.49 | Comp. Ex.70 | Ex.50 |
|---|---|---|---|---|---|---|---|---|---|---|
| | | I | | J | | K | | L | M | |
| HFO-1132 (E) | mass% | 72.0 | 57.2 | 48.5 | 41.2 | 35.6 | 32.0 | 28.9 | 59.7 | 48.1 |

(continued)

| Item | Unit | Comp. Ex.69 | Ex. 44 | Ex.45 | Ex. 46 | Ex. 47 | Ex.48 | Ex.49 | Comp. Ex.70 | Ex.50 |
|------|------|------|------|------|------|------|------|------|------|------|
| | | I | | J | | K | | L | M | |
| R32 | mass% | 0.0 | 10.0 | 18.3 | 27.6 | 36.8 | 44.2 | 51.7 | 0.0 | 5.0 |
| R1234yf | mass% | 25.5 | 30.3 | 30.7 | 28.7 | 25.1 | 21.3 | 16.9 | 37.8 | 44.4 |
| $CO_2$ | mass% | 2.5 | 2.5 | 2.5 | 2.5 | 2.5 | 2.5 | 2.5 | 2.5 | 2.5 |
| GWP | - | 2 | 69 | 125 | 188 | 250 | 300 | 350 | 2 | 36 |
| COP ratio | % (relative to R410A) | 98.4 | 98.2 | 98.2 | 98.4 | 98.6 | 98.9 | 99.1 | 98.8 | 99.0 |
| Refrigerating capacity ratio | % (relative to R410A) | 93.1 | 94.5 | 96.7 | 99.8 | 103.1 | 105.9 | 108.6 | 87.1 | 85.7 |
| Condensation glide | °C | 4.4 | 4.7 | 4.5 | 3.9 | 3.3 | 2.8 | 2.4 | 5.6 | 6.3 |

| Item | Unit | Ex.51 | Ex.52 | Ex.53 | Ex.54 | Ex.55 | Ex.56 | Ex.57 |
|------|------|------|------|------|------|------|------|------|
| | | W | | N | | O | | P |
| HFO-1132(E) | mass% | 40.9 | 36.9 | 34.2 | 29.9 | 27.2 | 25.2 | 23.4 |
| R32 | mass% | 10.0 | 14.4 | 18.2 | 27.6 | 36.8 | 44.0 | 51.7 |
| R1234yf | mass% | 46.6 | 46.2 | 45.1 | 40.0 | 33.5 | 28.1 | 22.4 |
| CO2 | mass% | 2.5 | 2.5 | 2.5 | 2.5 | 2.5 | 2.5 | 2.5 |
| GWP | - | 70 | 99 | 125 | 188 | 250 | 298 | 350 |
| COP ratio | % (relative to R410A) | 99.1 | 99.1 | 99.1 | 99.0 | 99.1 | 99.3 | 99.5 |
| Refrigeratin g capacity ratio | % (relative to R410A) | 86.2 | 87.7 | 89.2 | 94.0 | 98.8 | 102.4 | 105.8 |
| Condensation glide | °C | 6 | 6.3 | 6.0 | 5.0 | 4.0 | 3.4 | 2.8 |

Table 9

| 4% $CO_2$ | | | | | | | | | | |
|------|------|------|------|------|------|------|------|------|------|------|
| Item | Unit | Comp. Ex.71 | Comp. Ex.72 | Comp. Ex. 73 | Comp. Ex.74 | Comp. Ex.75 | Comp. Ex.76 | Comp. Ex. 77 | Comp. Ex.78 | Ex.58 |
| | | A | B | A' | B' | A" | B" | C | D | E |
| HFO-1132 (E) | mass% | 77.6 | 0.0 | 59.1 | 0.0 | 44.2 | 0.0 | 39.5 | 0.0 | 14.7 |
| R32 | mass% | 18.4 | 18.1 | 36.9 | 36.6 | 51.8 | 51.6 | 0.0 | 28.9 | 18.1 |
| R1234yf | mass% | 0.0 | 77.9 | 0.0 | 59.4 | 0.0 | 44.4 | 56.5 | 67.1 | 63.2 |
| $CO_2$ | mass% | 4.0 | 4.0 | 4.0 | 4.0 | 4.0 | 4.0 | 4.0 | 4.0 | 4.0 |
| GWP | - | 125 | 125 | 250 | 250 | 350 | 350 | 3 | 198 | 125 |
| COP ratio | % (relative to R410A) | 96.7 | 102.2 | 97.0 | 101.0 | 97.7 | 100.8 | 99.4 | 101.3 | 100.4 |
| Refrigerating capacity ratio | % (relative to R410A) | 113.3 | 71.2 | 117.3 | 85.7 | 118.9 | 95.6 | 80.0 | 80.0 | 81.2 |

(continued)

| 4% CO$_2$ | | | | | | | | | | |
|---|---|---|---|---|---|---|---|---|---|---|
| Item | Unit | Comp. Ex.71 | Comp. Ex.72 | Comp. Ex. 73 | Comp. Ex.74 | Comp. Ex.75 | Comp. Ex.76 | Comp. Ex. 77 | Comp. Ex.78 | Ex.58 |
| | | A | B | A' | B' | A" | B" | C | D | E |
| Condensation glide | °C | 3.0 | 10.9 | 2.2 | 7.2 | 2.0 | 5.0 | 9.6 | 8.7 | 9.6 |

| Item | Unit | Comp. Ex.79 | Ex.59 | Ex. 60 | Ex.61 | Ex. 62 | Ex.63 | Ex.64 | Comp. Ex.80 | Ex. 65 |
|---|---|---|---|---|---|---|---|---|---|---|
| | | I | | J | | K | | L | M | |
| HFO-1132 (E) | mass% | 72.0 | 57.2 | 48.5 | 41.2 | 35.6 | 32.0 | 28.9 | 60.4 | 49.6 |
| R32 | mass% | 0.0 | 10.0 | 18.3 | 27.6 | 36.8 | 44.2 | 51.7 | 0.0 | 5.0 |
| R1234yf | mass% | 24.0 | 28.8 | 29.2 | 27.2 | 23.6 | 19.8 | 15.4 | 35.6 | 41.4 |
| CO$_2$ | mass% | 4.0 | 4.0 | 4.0 | 4.0 | 4.0 | 4.0 | 4.0 | 4.0 | 4.0 |
| GWP | - | 2 | 69 | 125 | 188 | 250 | 300 | 350 | 2 | 36 |
| COP ratio | % (relative to R410A) | 97.6 | 97.5 | 97.5 | 97.7 | 98.0 | 98.3 | 98.6 | 98.0 | 98.2 |
| Refrigerating capacity ratio | % (relative to R410A) | 97.0 | 98.1 | 100.2 | 103.2 | 106.5 | 109.1 | 111.8 | 91.3 | 90.2 |
| Condensation glide | °C | 5.8 | 5.8 | 5.4 | 4.7 | 4.0 | 3.5 | 3.1 | 6.9 | 7.4 |

| Item | Unit | Ex.66 | Ex.67 | Ex.68 | Ex.69 | Ex.70 | Ex.71 | Ex.72 |
|---|---|---|---|---|---|---|---|---|
| | | W | | N | | O | | P |
| HFO-1132(E) | mass% | 42.6 | 38.3 | 35.5 | 31.0 | 28.0 | 25.9 | 23.9 |
| R32 | mass% | 10.0 | 14.4 | 18.2 | 27.6 | 36.8 | 44.0 | 51.7 |
| R1234yf | mass% | 43.4 | 43.3 | 42.3 | 37.4 | 31.2 | 26.1 | 20.4 |
| CO$_2$ | mass% | 4.0 | 4.0 | 4.0 | 4.0 | 4.0 | 4.0 | 4.0 |
| GWP | - | 70 | 99 | 125 | 188 | 250 | 298 | 350 |
| COP ratio | % (relative to R410A) | 98.3 | 98.3 | 98.3 | 98.3 | 98.5 | 98.7 | 98.9 |
| Refrigeratin g capacity ratio | % (relative to R410A) | 90.7 | 92.0 | 93.4 | 97.9 | 102.5 | 105.9 | 109.3 |
| Condensation glide | °C | 7 | 7.2 | 6.9 | 5.8 | 4.7 | 4.0 | 3.4 |

Table 10

| 5.5% CO$_2$ | | | | | | | | | | |
|---|---|---|---|---|---|---|---|---|---|---|
| Item | Unit | Comp. Ex.81 | Comp. Ex.82 | Comp. Ex.83 | Comp. Ex.84 | Comp. Ex.85 | Comp. Ex.86 | Comp. Ex.87 | Comp. Ex.88 | Ex.73 |
| | | A | B | A' | B' | A" | B" | C | D | E |
| HFO-1132 (E) | mass% | 76.1 | 0.0 | 57.6 | 0.0 | 42.7 | 0.0 | 33.0 | 0.0 | 8.8 |
| R32 | mass% | 18.4 | 18.1 | 36.9 | 36.6 | 51.8 | 51.6 | 0.0 | 24.7 | 18.1 |
| R1234yf | mass% | 0.0 | 76.4 | 0.0 | 57.9 | 0.0 | 42.9 | 61.5 | 69.8 | 67.6 |

(continued)

| 5.5% CO$_2$ | | | | | | | | | | |
|---|---|---|---|---|---|---|---|---|---|---|
| Item | Unit | Comp. Ex.81 | Comp. Ex.82 | Comp. Ex.83 | Comp. Ex.84 | Comp. Ex.85 | Comp. Ex.86 | Comp. Ex.87 | Comp. Ex.88 | Ex.73 |
| | | A | B | A' | B' | A" | B" | C | D | E |
| CO$_2$ | mass% | 5.5 | 5.5 | 5.5 | 5.5 | 5.5 | 5.5 | 5.5 | 5.5 | 5.5 |
| GWP | - | 125 | 125 | 250 | 250 | 350 | 350 | 3 | 170 | 125 |
| COP ratio | % (relative to R410A) | 96.0 | 101.8 | 96.4 | 100.5 | 97.2 | 100.3 | 99.4 | 101.2 | 100.6 |
| Refrigerating capacity ratio | % (relative to R410A) | 116.2 | 74.6 | 119.9 | 88.9 | 121.5 | 98.7 | 80.0 | 80.0 | 80.8 |
| Condensation glide | °C | 3.7 | 12.3 | 2.9 | 8.2 | 2.6 | 5.8 | 12.1 | 10.8 | 11.5 |

| Item | Unit | Comp. Ex.89 | Ex.74 | Ex.75 | Ex.76 | Ex. 77 | Ex.78 | Ex.79 | Comp. Ex. 90 | Ex.80 |
|---|---|---|---|---|---|---|---|---|---|---|
| | | I | | J | | K | | L | M | |
| HFO-1132 (E) | mass% | 72.0 | 57.2 | 48.5 | 41.2 | 35.6 | 32.0 | 28.9 | 60.7 | 50.3 |
| R32 | mass% | 0.0 | 10.0 | 18.3 | 27.6 | 36.8 | 44.2 | 51.7 | 0.0 | 5.0 |
| R1234yf | mass% | 22.5 | 27.3 | 27.7 | 25.7 | 22.1 | 18.3 | 13.9 | 33.8 | 39.2 |
| CO$_2$ | mass% | 5.5 | 5.5 | 5.5 | 5.5 | 5.5 | 5.5 | 5.5 | 5.5 | 5.5 |
| GWP | - | 2 | 69 | 125 | 188 | 250 | 299 | 350 | 2 | 36 |
| COP ratio | % (relative to R410A) | 96.8 | 96.8 | 96.9 | 97.1 | 97.4 | 97.7 | 98.0 | 97.2 | 97.4 |
| Refrigerating capacity ratio | % (relative to R410A) | 100.9 | 101.8 | 103.8 | 106.6 | 109.8 | 112.4 | 115.0 | 95.4 | 94.3 |
| Condensation glide | °C | 6.9 | 6.7 | 6.2 | 5.4 | 4.7 | 4.1 | 3.7 | 8.1 | 8.5 |

| Item | Unit | Ex.81 | Ex.82 | Ex.83 | Ex.84 | Ex.85 | Ex.86 | Ex.87 |
|---|---|---|---|---|---|---|---|---|
| | | W | | N | | O | | P |
| HFO-1132(E) | mass% | 43.3 | 39.0 | 36.3 | 31.6 | 28.4 | 26.2 | 24.2 |
| R32 | mass% | 10.0 | 14.4 | 18.2 | 27.6 | 36.8 | 44.0 | 51.7 |
| R1234yf | mass% | 41.2 | 41.1 | 40.0 | 35.3 | 29.3 | 24.3 | 18.6 |
| CO$_2$ | mass% | 5.5 | 5.5 | 5.5 | 5.5 | 5.5 | 5.5 | 5.5 |
| GWP | - | 70 | 99 | 125 | 188 | 250 | 298 | 350 |
| COP ratio | % (relative to R410A) | 97.5 | 97.6 | 97.6 | 97.7 | 97.9 | 98.1 | 98.3 |
| Refrigeratin g capacity ratio | % (relative to R410A) | 94.7 | 95.9 | 97.4 | 101.6 | 106.1 | 109.3 | 112.6 |
| Condensation glide | °C | 8 | 8.1 | 7.6 | 6.5 | 5.4 | 4.7 | 4.0 |

Table 11

| 7% CO$_2$ | | | | | | | | | | |
|---|---|---|---|---|---|---|---|---|---|---|
| Item | Unit | Comp. Ex. 91 | Comp. Ex. 92 | Comp. Ex. 93 | Comp. Ex. 94 | Comp. Ex. 95 | Comp. Ex. 96 | Comp. Ex. 97 | Comp. Ex. 98 | Ex.88 |
| | | A | B | A' | B' | A" | B" | C | D | E |
| HFO-1132 (E) | mass% | 74.6 | 0.0 | 56.1 | 0.0 | 41.2 | 0.0 | 26.8 | 0.0 | 3.1 |
| R32 | mass% | 18.4 | 18.1 | 36.9 | 36.6 | 51.8 | 51.6 | 0.0 | 20.5 | 18.1 |
| R1234yf | mass% | 0.0 | 74.9 | 0.0 | 56.4 | 0.0 | 41.4 | 66.2 | 72.5 | 71.8 |
| CO$_2$ | mass% | 7.0 | 7.0 | 7.0 | 7.0 | 7.0 | 7.0 | 7.0 | 7.0 | 7.0 |
| GWP | - | 125 | 125 | 250 | 250 | 350 | 350 | 3 | 141 | 125 |
| COP ratio | % (relative to R410A) | 95.3 | 101.3 | 95.8 | 100.0 | 96.7 | 99.8 | 99.5 | 101.1 | 100.9 |
| Refrigerating capacity ratio | % (relative to R410A) | 119.0 | 78.0 | 122.6 | 92.2 | 124.0 | 101.9 | 80.0 | 80.0 | 80.3 |
| Condensation glide | °C | 4.4 | 13.6 | 3.4 | 9.0 | 3.1 | 6.5 | 14.6 | 13.0 | 13.3 |

| Item | Unit | Comp. Ex. 99 | Ex.89 | Ex. 90 | Ex. 91 | Ex. 92 | Ex. 93 | Ex. 94 | Comp. Exs 100 | Ex. 95 |
|---|---|---|---|---|---|---|---|---|---|---|
| | | I | | J | | K | | L | M | |
| HFO-1132 (E) | mass% | 72.0 | 57.2 | 48.5 | 41.2 | 35.6 | 32.0 | 28.9 | 60.7 | 50.3 |
| R32 | mass% | 0.0 | 10.0 | 18.3 | 27.6 | 36.8 | 44.2 | 51.7 | 0.0 | 5.0 |
| R1234yf | mass% | 21.0 | 25.8 | 26.2 | 24.2 | 20.6 | 16.8 | 12.4 | 32.3 | 37.7 |
| CO$_2$ | mass% | 7.0 | 7.0 | 7.0 | 7.0 | 7.0 | 7.0 | 7.0 | 7.0 | 7.0 |
| GWP | - | 2 | 69 | 125 | 188 | 250 | 299 | 350 | 2 | 36 |
| COP ratio | % (relative to R410A) | 96.0 | 96.1 | 96.2 | 96.5 | 96.8 | 97.1 | 97.5 | 96.5 | 96.7 |
| Refrigerating capacity ratio | % (relative to R410A) | 104.7 | 105.5 | 107.3 | 110.0 | 113.1 | 115.6 | 118.2 | 99.2 | 98.0 |
| Condensation glide | °C | 7.9 | 7.5 | 6.9 | 6.0 | 5.3 | 4.7 | 4.2 | 9.2 | 9.4 |

| Item | Unit | Ex. 96 | Ex. 97 | Ex.98 | Ex.99 | Ex.100 | Ex.101 | Ex.102 |
|---|---|---|---|---|---|---|---|---|
| | | W | | N | | O | | P |
| HFO-1132(E) | mass% | 43.7 | 39.5 | 36.7 | 31.9 | 28.6 | 26.4 | 24.2 |
| R32 | mass% | 10.0 | 14.4 | 18.2 | 27.6 | 36.8 | 44.0 | 51.7 |
| R1234yf | mass% | 39.3 | 39.1 | 38.1 | 33.5 | 27.6 | 22.6 | 17.1 |
| CO$_2$ | mass% | 7.0 | 7.0 | 7.0 | 7.0 | 7.0 | 7.0 | 7.0 |
| GWP | - | 70 | 99 | 125 | 188 | 250 | 298 | 350 |
| COP ratio | % (relative to R410A) | 96.9 | 96.9 | 97.0 | 97.1 | 97.3 | 97.5 | 97.8 |

(continued)

| Item | Unit | Ex. 96 W | Ex. 97 | Ex.98 N | Ex.99 | Ex.100 O | Ex.101 | Ex.102 P |
|---|---|---|---|---|---|---|---|---|
| Refrigerating capacity ratio | % (relative to R410A) | 98.6 | 99.7 | 101.1 | 105.2 | 109.5 | 112.7 | 115.8 |
| Condensation glide | °C | 9 | 8.8 | 8.4 | 7.1 | 6.0 | 5.2 | 4.6 |

Table 12

| Item | Unit | Comp. Ex.101 | Comp. Ex.102 | Comp. Ex.103 | Ex.103 | Ex.104 | Comp. Ex.104 | Comp. Ex.105 | Comp. Ex.106 |
|---|---|---|---|---|---|---|---|---|---|
| HFO-1132 (E) | mass% | 10.0 | 10.0 | 10.0 | 10.0 | 10.0 | 10.0 | 10.0 | 10.0 |
| R32 | mass% | 78.8 | 68.8 | 58.8 | 48.8 | 38.8 | 28.8 | 18.8 | 8.8 |
| R1234yf | mass% | 10.0 | 20.0 | 30.0 | 40.0 | 50.0 | 60.0 | 70.0 | 80.0 |
| $CO_2$ | mass% | 1.2 | 1.2 | 1.2 | 1.2 | 1.2 | 1.2 | 1.2 | 1.2 |
| GWP | - | 532 | 465 | 398 | 331 | 264 | 197 | 130 | 63 |
| COP ratio | % (relative to R410A) | 101.3 | 101.2 | 101.1 | 101.0 | 101.0 | 101.3 | 102.0 | 102.8 |
| Refrigerating capacity ratio | % (relative to R410A) | 108.5 | 104.1 | 99.2 | 93.6 | 87.2 | 80.1 | 72.2 | 63.1 |
| Condensation glide | °C | 1.1 | 1.6 | 2.2 | 3.1 | 4.3 | 5.8 | 7.4 | 8.4 |

| Item | Unit | Comp. Ex. 107 | Comp. Ex.108 | Ex.105 | Ex.106 | Ex.107 | Comp. Ex.109 | Comp. Ex. 110 | Comp. Ex.111 |
|---|---|---|---|---|---|---|---|---|---|
| HFO-1132 (E) | mass% | 20.0 | 20.0 | 20.0 | 20.0 | 20.0 | 20.0 | 20.0 | 30.0 |
| R32 | mass% | 68.8 | 58.8 | 48.8 | 38.8 | 28.8 | 18.8 | 8.8 | 58.8 |
| R1234yf | mass% | 10.0 | 20.0 | 30.0 | 40.0 | 50.0 | 60.0 | 70.0 | 10.0 |
| $CO_2$ | mass% | 1.2 | 1.2 | 1.2 | 1.2 | 1.2 | 1.2 | 1.2 | 1.2 |
| GWP | - | 465 | 398 | 331 | 264 | 197 | 130 | 62 | 398 |
| COP ratio | % (relative to R410A) | 100.6 | 100.5 | 100.4 | 100.3 | 100.4 | 100.9 | 101.8 | 100.0 |
| Refrigerating capacity ratio | % (relative to R410A) | 108.6 | 103.9 | 98.6 | 92.6 | 85.8 | 78.2 | 69.6 | 108.3 |
| Condensation glide | °C | 1.1 | 1.7 | 2.5 | 3.5 | 4.8 | 6.4 | 7.7 | 1.2 |

| Item | Unit | Ex.108 | Ex.109 | Ex.110 | Ex.111 | Comp. Ex. 112 | Comp. Ex. 113 | Comp. Ex. 114 | Ex.112 |
|---|---|---|---|---|---|---|---|---|---|
| HFO-1132 (E) | mass% | 30.0 | 30.0 | 30.0 | 30.0 | 30.0 | 40.0 | 40.0 | 40.0 |
| R32 | mass% | 48.8 | 38.8 | 28.8 | 18.8 | 8.8 | 48.8 | 38.8 | 28.8 |
| R1234yf | mass% | 20.0 | 30.0 | 40.0 | 50.0 | 60.0 | 10.0 | 20.0 | 30.0 |
| $CO_2$ | mass% | 1.2 | 1.2 | 1.2 | 1.2 | 1.2 | 1.2 | 1.2 | 1.2 |

(continued)

| Item | Unit | Ex.108 | Ex.109 | Ex.110 | Ex.111 | Comp. Ex. 112 | Comp. Ex. 113 | Comp. Ex. 114 | Ex.112 |
|---|---|---|---|---|---|---|---|---|---|
| GWP | - | 331 | 263 | 196 | 129 | 62 | 330 | 263 | 196 |
| COP ratio | % (relative to R410A) | 99.9 | 99.8 | 99.8 | 100.1 | 100.8 | 99.4 | 99.3 | 99.3 |
| Refrigerating capacity ratio | % (relative to R410A) | 103.2 | 97.5 | 91.0 | 83.7 | 75.6 | 107.5 | 102.0 | 95.8 |
| Condensation glide | °C | 1.8 | 2.7 | 3.8 | 5.2 | 6.6 | 1.3 | 2.0 | 2.9 |

| Item | Unit | Ex.113 | Ex.114 | Comp. Ex. 115 | Comp. Ex. 116 | Comp. Ex. 117 | Ex.115 | Comp. Ex. 118 | Comp. Ex. 119 |
|---|---|---|---|---|---|---|---|---|---|
| HFO-1132 (E) | mass% | 40.0 | 40.0 | 50.0 | 50.0 | 50.0 | 50.0 | 60.0 | 60.0 |
| R32 | mass% | 18.8 | 8.8 | 38.8 | 28.8 | 18.8 | 8.8 | 28.8 | 18.8 |
| R1234yf | mass% | 40.0 | 50.0 | 10.0 | 20.0 | 30.0 | 40.0 | 10.0 | 20.0 |
| $CO_2$ | mass% | 1.2 | 1.2 | 1.2 | 1.2 | 1.2 | 1.2 | 1.2 | 1.2 |
| GWP | - | 129 | 62 | 263 | 196 | 129 | 62 | 195 | 128 |
| COP ratio | % (relative to R410A) | 99.5 | 100.0 | 99.0 | 98.9 | 99.0 | 99.4 | 98.7 | 98.7 |
| Refrigerating capacity ratio | % (relative to R410A) | 88.9 | 81.1 | 106.2 | 100.3 | 93.7 | 86.2 | 104.5 | 98.2 |
| Condensation glide | °C | 4.1 | 5.4 | 1.4 | 2.2 | 3.2 | 4.3 | 1.5 | 2.4 |

| Item | Unit | Comp. Ex.120 | Comp. Ex. 121 | Comp. Ex.122 | Comp. Ex.123 | Ex. 116 | Ex.117 | Ex.118 | Ex.119 |
|---|---|---|---|---|---|---|---|---|---|
| HFO-1132 (E) | mass% | 60.0 | 70.0 | 70.0 | 80.0 | 15.0 | 15.0 | 15.0 | 15.0 |
| R32 | mass% | 8.8 | 18.8 | 8.8 | 8.8 | 48.8 | 46.3 | 43.8 | 41.3 |
| R1234yf | mass% | 30.0 | 10.0 | 20.0 | 10.0 | 35.0 | 37.5 | 40.0 | 42.5 |
| $CO_2$ | mass% | 1.2 | 1.2 | 1.2 | 1.2 | 1.2 | 1.2 | 1.2 | 1.2 |
| GWP | - | 61 | 128 | 61 | 61 | 331 | 314 | 297 | 281 |
| COP ratio | % (relative to R410A) | 99.0 | 98.5 | 98.8 | 98.6 | 100.7 | 100.7 | 100.6 | 100.6 |
| Refrigerating capacity ratio | % (relative to R410A) | 91.0 | 102.4 | 95.5 | 99.7 | 96.1 | 94.7 | 93.1 | 91.6 |
| Condensation glide | °C | 3.3 | 1.7 | 2.5 | 1.9 | 2.8 | 3.0 | 3.3 | 3.6 |

| Item | Unit | Ex.120 | Ex. 121 | Ex. 122 | Ex.123 | Ex. 124 | Ex.125 | Ex.126 | Ex.127 |
|---|---|---|---|---|---|---|---|---|---|
| HFO-1132 (E) | mass% | 15.0 | 15.0 | 15.0 | 15.0 | 15.0 | 17.5 | 17.5 | 17.5 |
| R32 | mass% | 38.8 | 36.3 | 33.8 | 31.3 | 28.8 | 48.8 | 46.3 | 43.8 |
| R1234yf | mass% | 45.0 | 47.5 | 50.0 | 52.5 | 55.0 | 32.5 | 35.0 | 37.5 |
| $CO_2$ | mass% | 1.2 | 1.2 | 1.2 | 1.2 | 1.2 | 1.2 | 1.2 | 1.2 |
| GWP | - | 264 | 247 | 230 | 214 | 197 | 331 | 314 | 297 |
| COP ratio | % (relative to R410A) | 100.6 | 100.7 | 100.7 | 100.7 | 100.8 | 100.5 | 100.5 | 100.5 |
| Refrigerating capacity ratio | % (relative to R410A) | 89.9 | 88.3 | 86.6 | 84.8 | 83.0 | 97.4 | 95.9 | 94.4 |
| Condensation glide | °C | 3.9 | 4.2 | 4.6 | 4.9 | 5.3 | 2.6 | 2.9 | 3.1 |

Table 13

| Item | Unit | Ex.128 | Ex.129 | Ex.130 | Ex.131 | Ex.132 | Ex.133 | Ex. 134 | Ex.135 |
|---|---|---|---|---|---|---|---|---|---|
| HFO-1132 (E) | mass% | 17.5 | 17.5 | 17.5 | 17.5 | 17.5 | 17.5 | 17.5 | 20.0 |
| R32 | mass% | 41.3 | 38.8 | 36.3 | 33.8 | 31.3 | 28.8 | 26.3 | 46.3 |
| R1234yf | mass% | 40.0 | 42.5 | 45.0 | 47.5 | 50.0 | 52.5 | 55.0 | 32.5 |
| $CO_2$ | mass% | 1.2 | 1.2 | 1.2 | 1.2 | 1.2 | 1.2 | 1.2 | 1.2 |
| GWP | - | 281 | 264 | 247 | 230 | 213 | 197 | 180 | 314 |
| COP ratio | % (relative to R410A) | 100.5 | 100.5 | 100.5 | 100.5 | 100.6 | 100.6 | 100.7 | 100.4 |
| Refrigerating capacity ratio | % (relative to R410A) | 92.9 | 91.3 | 89.6 | 87.9 | 86.2 | 84.4 | 82.6 | 97.1 |
| Condensation glide | °C | 3.4 | 3.7 | 4.0 | 4.3 | 4.7 | 5.1 | 5.4 | 2.7 |

| Item | Unit | Ex.136 | Ex.137 | Ex.138 | Ex. 139 | Ex.140 | Ex.141 | Ex.142 | Ex.143 |
|---|---|---|---|---|---|---|---|---|---|
| HFO-1132(E) | mass% | 20.0 | 20.0 | 20.0 | 20.0 | 20.0 | 20.0 | 22.5 | 22.5 |
| R32 | mass% | 43.8 | 41.3 | 36.3 | 33.8 | 31.3 | 26.3 | 46.3 | 43.8 |
| R1234yf | mass%% | 35.0 | 37.5 | 42.5 | 45.0 | 47.5 | 52.5 | 30.0 | 32.5 |
| CO2 | mass%% | 1.2 | 1.2 | 1.2 | 1.2 | 1.2 | 1.2 | 1.2 | 1.2 |
| GWP | - | 297 | 280 | 247 | 230 | 213 | 180 | 314 | 297 |
| COP比 | % (relative to R410A) | 100.3 | 100.3 | 100.3 | 100.3 | 100.4 | 100.5 | 100.2 | 100.2 |
| Refrigerating capacity ratio | % (relative to R410A) | 95.7 | 94.1 | 90.9 | 89.3 | 87.5 | 84.0 | 98.4 | 96.9 |
| Condensation glide | °C | 2.9 | 3.2 | 3.8 | 4.1 | 4.4 | 5.2 | 2.5 | 2.7 |

| Item | Unit | Ex.144 | Ex.145 | Ex.146 | Ex.147 | Ex.148 | Ex.149 | Ex.150 | Ex.151 |
|---|---|---|---|---|---|---|---|---|---|
| HFO-1132 (E) | mass% | 22.5 | 22.5 | 22.5 | 22.5 | 22.5 | 22.5 | 22.5 | 22.5 |
| R32 | mass% | 41.3 | 38.8 | 36.3 | 33.8 | 31.3 | 28.8 | 26.3 | 23.8 |
| R1234yf | mass% | 35.0 | 37.5 | 40.0 | 42.5 | 45.0 | 47.5 | 50.0 | 52.5 |
| $CO_2$ | mass% | 1.2 | 1.2 | 1.2 | 1.2 | 1.2 | 1.2 | 1.2 | 1.2 |
| GWP | - | 280 | 264 | 247 | 230 | 213 | 197 | 180 | 163 |
| COP ratio | % (relative to R410A) | 100.2 | 100.2 | 100.2 | 100.2 | 100.2 | 100.3 | 100.3 | 100.4 |
| Refrigerating capacity ratio | % (relative to R410A) | 95.4 | 93.8 | 92.2 | 90.6 | 88.9 | 87.1 | 85.3 | 83.5 |
| Condensation glide | °C | 3.0 | 3.3 | 3.6 | 3.9 | 4.2 | 4.5 | 4.9 | 5.3 |

| Item | Unit | Ex.152 | Ex.153 | Ex.154 | Ex.155 | Ex.156 | Ex.157 | Ex.158 | Ex.159 |
|---|---|---|---|---|---|---|---|---|---|
| HFO-1132 (E) | mass% | 25.0 | 25.0 | 25.0 | 25.0 | 25.0 | 25.0 | 27.5 | 27.5 |
| R32 | mass% | 33.8 | 31.3 | 28.8 | 26.3 | 23.8 | 21.3 | 21.9 | 21.9 |
| R1234yf | mass% | 40.0 | 42.5 | 45.0 | 47.5 | 50.0 | 52.5 | 45.0 | 47.5 |
| $CO_2$ | mass% | 1.2 | 1.2 | 1.2 | 1.2 | 1.2 | 1.2 | 1.2 | 1.2 |
| GWP | - | 230 | 213 | 196 | 180 | 163 | 146 | 150 | 150 |
| COP ratio | % (relative to R410A) | 100.0 | 100.0 | 100.1 | 100.1 | 100.2 | 100.3 | 100.0 | 100.1 |
| Refrigerating capacity ratio | % (relative to R410A) | 91.8 | 90.2 | 88.4 | 86.7 | 84.8 | 83.0 | 86.3 | 85.4 |
| Condensation glide | °C | 3.6 | 4.0 | 4.3 | 4.7 | 5.0 | 5.4 | 4.8 | 4.9 |

| Item | Unit | Ex.160 | Ex.161 | Ex. 162 | Ex.163 | Ex.164 |
|---|---|---|---|---|---|---|
| HFO-1132 (E) | mass% | 27.5 | 27.5 | 30.0 | 32.0 | 34.0 |
| R32 | mass% | 21.9 | 21.9 | 21.9 | 21.9 | 13.8 |
| R1234yf | mass% | 50.0 | 52.5 | 52.5 | 51.0 | 51.0 |
| $CO_2$ | mass% | 1.2 | 1.2 | 1.2 | 1.2 | 1.2 |
| GWP | - | 150 | 150 | 150 | 150 | 96 |
| COP ratio | % (relative to R410A) | 100.1 | 100.2 | 100.1 | 100.0 | 100.1 |
| Refrigerating capacity ratio | % (relative to R410A) | 84.5 | 83.7 | 84.2 | 85.1 | 82.0 |
| Condensation glide | °C | 5.1 | 5.2 | 5.0 | 4.9 | 5.5 |

Table 14

| Item | Unit | Comp. Ex.125 | Comp. Ex.126 | Comp. Ex. 127 | Ex.166 | Ex.167 | Ex.168 | Comp. Ex. 128 | Comp. Ex.129 |
|---|---|---|---|---|---|---|---|---|---|
| HFO-1132 (E) | mass% | 10.0 | 10.0 | 10.0 | 10.0 | 10.0 | 10.0 | 10.0 | 10.0 |

(continued)

| Item | Unit | Comp. Ex.125 | Comp. Ex.126 | Comp. Ex. 127 | Ex.166 | Ex.167 | Ex.168 | Comp. Ex. 128 | Comp. Ex.129 |
|---|---|---|---|---|---|---|---|---|---|
| R32 | mass% | 77.5 | 67.5 | 57.5 | 47.5 | 37.5 | 27.5 | 17.5 | 7.5 |
| R1234yf | mass% | 10.0 | 20.0 | 30.0 | 40.0 | 50.0 | 60.0 | 70.0 | 80.0 |
| $CO_2$ | mass% | 2.5 | 2.5 | 2.5 | 2.5 | 2.5 | 2.5 | 2.5 | 2.5 |
| GWP | - | 524 | 457 | 389 | 322 | 255 | 188 | 121 | 54 |
| COP ratio | % (relative to R410A) | 100.9 | 100.8 | 100.6 | 100.5 | 100.5 | 100.9 | 101.6 | 102.4 |
| Refrigerating capacity ratio | % (relative to R410A) | 110.6 | 106.2 | 101.2 | 95.5 | 89.1 | 81.9 | 74.0 | 64.8 |
| Condensation glide | °C | 1.8 | 2.3 | 3.0 | 4.0 | 5.3 | 7.0 | 8.8 | 10.1 |

| Item | Unit | Comp. Ex. 130 | Comp. Ex. 131 | Ex.169 | Ex.170 | Ex.171 | Comp. Ex. 132 | Comp. Ex. 133 | Comp. Ex. 134 |
|---|---|---|---|---|---|---|---|---|---|
| HFO-1132 (E) | mass% | 20.0 | 20.0 | 20.0 | 20.0 | 20.0 | 20.0 | 20.0 | 30.0 |
| R32 | mass% | 67.5 | 57.5 | 47.5 | 37.5 | 27.5 | 17.5 | 7.5 | 57.5 |
| R1234yf | mass% | 10.0 | 20.0 | 30.0 | 40.0 | 50.0 | 60.0 | 70.0 | 10.0 |
| $CO_2$ | mass% | 2.5 | 2.5 | 2.5 | 2.5 | 2.5 | 2.5 | 2.5 | 2.5 |
| GWP | - | 456 | 389 | 322 | 255 | 188 | 121 | 54 | 389 |
| COP ratio | % (relative to R410A) | 100.1 | 100.0 | 99.9 | 99.8 | 100.0 | 100.5 | 101.3 | 99.5 |
| Refrigerating capacity ratio | % (relative to R410A) | 110.7 | 106.0 | 100.6 | 94.5 | 87.7 | 80.1 | 71.5 | 110.4 |
| Condensation glide | °C | 1.8 | 2.5 | 3.3 | 4.4 | 5.9 | 7.7 | 9.3 | 1.9 |

| Item | Unit | Ex.172 | Ex.173 | Ex. 174 | Ex.175 | Comp. Ex. 135 | Comp. Ex. 136 | Comp. Ex.137 | Ex. 176 |
|---|---|---|---|---|---|---|---|---|---|
| HFO-1132 (E) | mass% | 30.0 | 30.0 | 30.0 | 30.0 | 30.0 | 40.0 | 40.0 | 40.0 |
| R32 | mass% | 47.5 | 37.5 | 27.5 | 17.5 | 7.5 | 47.5 | 37.5 | 27.5 |
| R1234yf | mass% | 20.0 | 30.0 | 40.0 | 50.0 | 60.0 | 10.0 | 20.0 | 30.0 |
| $CO_2$ | mass% | 2.5 | 2.5 | 2.5 | 2.5 | 2.5 | 2.5 | 2.5 | 2.5 |
| GWP | - | 322 | 255 | 188 | 120 | 53 | 321 | 254 | 187 |
| COP ratio | % (relative to R410A) | 99.3 | 99.2 | 99.3 | 99.6 | 100.3 | 98.9 | 98.8 | 98.7 |
| Refrigerating capacity ratio | % (relative to R410A) | 105.3 | 99.5 | 93.0 | 85.7 | 77.5 | 109.6 | 104.1 | 97.9 |

(continued)

| Item | Unit | Ex.172 | Ex.173 | Ex. 174 | Ex.175 | Comp. Ex. 135 | Comp. Ex. 136 | Comp. Ex.137 | Ex. 176 |
|---|---|---|---|---|---|---|---|---|---|
| Condensation glide | °C | 2.6 | 3.6 | 4.8 | 6.4 | 8.1 | 2.0 | 2.8 | 3.9 |

| Item | Unit | Ex.177 | Ex.178 | Comp. Ex. 138 | Comp. Exc 139 | Comp. Ex. 140 | Ex. 179 | Comp. Ex. 141 | Comp. Ex. 142 |
|---|---|---|---|---|---|---|---|---|---|
| HFO-1132 (E) | mass% | 40.0 | 40.0 | 50.0 | 50.0 | 50.0 | 50.0 | 60.0 | 60.0 |
| R32 | mass% | 17.5 | 7.5 | 37.5 | 27.5 | 17.5 | 7.5 | 27.5 | 17.5 |
| R1234yf | mass% | 40.0 | 50.0 | 10.0 | 20.0 | 30.0 | 40.0 | 10.0 | 20.0 |
| $CO_2$ | mass% | 2.5 | 2.5 | 2.5 | 2.5 | 2.5 | 2.5 | 2.5 | 2.5 |
| GWP | - | 120 | 53 | 254 | 187 | 120 | 53 | 187 | 120 |
| COP ratio | % (relative to R410A) | 98.9 | 99.4 | 98.4 | 98.3 | 98.4 | 98.8 | 98.0 | 98.1 |
| Refrigerating capacity ratio | % (relative to R410A) | 91.0 | 83.1 | 108.4 | 102.5 | 95.9 | 88.4 | 106.8 | 100.4 |
| Condensation glide | °C | 5.3 | 6.8 | 2.2 | 3.1 | 4.3 | 5.6 | 2.4 | 3.4 |

| Item | Unit | Ex.180 | Comp. Ex.143 | Comp. Ex.144 | Comp. Ex.145 | Ex.181 | Ex.182 | Ex.183 | Ex.184 |
|---|---|---|---|---|---|---|---|---|---|
| HFO-1132 (E) | mass% | 60.0 | 70.0 | 70.0 | 80.0 | 15.0 | 15.0 | 15.0 | 15.0 |
| R32 | mass% | 7.5 | 17.5 | 7.5 | 7.5 | 50.0 | 47.5 | 45.0 | 42.5 |
| R1234yf | mass% | 30.0 | 10.0 | 20.0 | 10.0 | 32.5 | 35.0 | 37.5 | 40.0 |
| $CO_2$ | mass% | 2.5 | 2.5 | 2.5 | 2.5 | 2.5 | 2.5 | 2.5 | 2.5 |
| GWP | - | 52 | 119 | 52 | 52 | 339 | 322 | 305 | 289 |
| COP ratio | % (relative to R410A) | 98.4 | 97.9 | 98.1 | 98.0 | 100.2 | 100.2 | 100.2 | 100.2 |
| Refrigerating capacity ratio | % (relative to R410A) | 93.3 | 104.7 | 97.8 | 102.1 | 99.6 | 98.1 | 96.6 | 95.1 |
| Condensation glide | °C | 4.6 | 2.7 | 3.8 | 3.0 | 3.4 | 3.6 | 3.9 | 4.2 |

| Item | Unit | Ex.185 | Ex.186 | Ex.187 | Ex.188 | Ex.189 | Ex.190 | Ex.191 | Ex.192 |
|---|---|---|---|---|---|---|---|---|---|
| HFO-1132 (E) | mass% | 15.0 | 15.0 | 15.0 | 15.0 | 15.0 | 15.0 | 15.0 | 17.5 |
| R32 | mass% | 40.0 | 37.5 | 35.0 | 32.5 | 30.0 | 27.5 | 25.0 | 50.0 |
| R1234yf | mass% | 42.5 | 45.0 | 47.5 | 50.0 | 52.5 | 55.0 | 57.5 | 30.0 |
| $CO_2$ | mass% | 2.5 | 2.5 | 2.5 | 2.5 | 2.5 | 2.5 | 2.5 | 2.5 |
| GWP | - | 272 | 255 | 238 | 222 | 205 | 188 | 171 | 339 |

(continued)

| Item | Unit | Ex.185 | Ex.186 | Ex.187 | Ex.188 | Ex.189 | Ex.190 | Ex.191 | Ex.192 |
|---|---|---|---|---|---|---|---|---|---|
| COP ratio | % (relative to R410A) | 100.2 | 100.2 | 100.2 | 100.2 | 100.3 | 100.4 | 100.5 | 100.1 |
| Refrigerating capacity ratio | % (relative to R410A) | 93.5 | 91.9 | 90.2 | 88.5 | 86.7 | 84.9 | 83.0 | 100.8 |
| Condensation glide | °C | 4.5 | 4.8 | 5.2 | 5.6 | 6.0 | 6.4 | 6.9 | 3.2 |

Table 15

| Item | Unit | Ex.193 | Ex.194 | Ex.195 | Ex.196 | Ex.197 | Ex.198 | Ex.199 | Ex. 200 |
|---|---|---|---|---|---|---|---|---|---|
| HFO-1132 (E) | mass% | 17.5 | 17.5 | 17.5 | 17.5 | 17.5 | 17.5 | 17.5 | 17.5 |
| R32 | mass% | 47.5 | 45.0 | 42.5 | 40.0 | 37.5 | 35.0 | 32.5 | 30.0 |
| R1234yf | mass% | 32.5 | 35.0 | 37.5 | 40.0 | 42.5 | 45.0 | 47.5 | 50.0 |
| $CO_2$ | mass% | 2.5 | 2.5 | 2.5 | 2.5 | 2.5 | 2.5 | 2.5 | 2.5 |
| GWP | - | 322 | 305 | 289 | 272 | 255 | 238 | 221 | 205 |
| COP ratio | % (relative to R410A) | 100.0 | 100.0 | 100.0 | 100.0 | 100.0 | 100.0 | 100.0 | 100.1 |
| Refrigerating capacity ratio | % (relative to R410A) | 99.4 | 97.9 | 96.4 | 94.8 | 93.2 | 91.5 | 89.8 | 88.1 |
| Condensation glide | °C | 3.5 | 3.7 | 4.0 | 4.3 | 4.6 | 5.0 | 5.3 | 5.7 |

| Item | Unit | Ex. 201 | Ex. 202 | Ex. 203 | Ex. 204 | Ex. 205 | Ex. 206 | Ex. 207 | Ex. 208 |
|---|---|---|---|---|---|---|---|---|---|
| HFO-1132 (E) | mass% | 17.5 | 17.5 | 17.5 | 20.0 | 20.0 | 20.0 | 20.0 | 20.0 |
| R32 | mass% | 27.5 | 25.0 | 22.5 | 50.0 | 45.0 | 42.5 | 40.0 | 35.0 |
| R1234yf | mass% | 52.5 | 55.0 | 57.5 | 27.5 | 32.5 | 35.0 | 37.5 | 42.5 |
| $CO_2$ | mass% | 2.5 | 2.5 | 2.5 | 2.5 | 2.5 | 2.5 | 2.5 | 2.5 |
| GWP | - | 188 | 171 | 154 | 339 | 305 | 289 | 272 | 238 |
| COP ratio | % (relative to R410A) | 100.2 | 100.3 | 100.4 | 99.9 | 99.9 | 99.8 | 99.8 | 99.8 |
| Refrigerating capacity ratio | % (relative to R410A) | 86.3 | 84.4 | 82.6 | 102.0 | 99.2 | 97.7 | 96.1 | 92.9 |
| Condensation glide | °C | 6.2 | 6.6 | 7.0 | 3.1 | 3.5 | 3.8 | 4.1 | 4.7 |

| Item | Unit | Ex. 209 | Ex. 210 | Ex. 211 | Ex. 212 | Ex. 213 | Ex. 214 | Ex. 215 | Ex. 216 |
|---|---|---|---|---|---|---|---|---|---|
| HFO-1132 (E) | mass% | 20.0 | 20.0 | 20.0 | 20.0 | 20.0 | 22.5 | 22.5 | 22.5 |
| R32 | mass% | 32.5 | 30.0 | 25.0 | 22.5 | 20.0 | 50.0 | 47.5 | 45.0 |

(continued)

| Item | Unit | Ex. 209 | Ex. 210 | Ex. 211 | Ex. 212 | Ex. 213 | Ex. 214 | Ex. 215 | Ex. 216 |
|---|---|---|---|---|---|---|---|---|---|
| R1234yf | mass% | 45.0 | 47.5 | 52.5 | 55.0 | 57.5 | 25.0 | 27.5 | 30.0 |
| $CO_2$ | mass% | 2.5 | 2.5 | 2.5 | 2.5 | 2.5 | 2.5 | 2.5 | 2.5 |
| GWP | - | 221 | 205 | 171 | 154 | 138 | 339 | 322 | 305 |
| COP ratio | % (relative to R410A) | 99.8 | 99.9 | 100.0 | 100.2 | 100.3 | 99.8 | 99.7 | 99.7 |
| Refrigerating capacity ratio | % (relative to R410A) | 91.2 | 89.5 | 85.9 | 84.0 | 82.1 | 103.2 | 101.8 | 100.4 |
| Condensation glide | °C | 5.1 | 5.5 | 6.3 | 6.7 | 7.2 | 2.9 | 3.1 | 3.4 |

| Item | Unit | Ex. 217 | Ex. 218 | Ex. 219 | Ex. 220 | Ex. 221 | Ex. 222 | Ex. 223 | Ex. 224 |
|---|---|---|---|---|---|---|---|---|---|
| HFO-1132 (E) | mass% | 22.5 | 22.5 | 22.5 | 22.5 | 22.5 | 22.5 | 22.5 | 22.5 |
| R32 | mass% | 42.5 | 40.0 | 37.5 | 35.0 | 32.5 | 30.0 | 27.5 | 25.0 |
| R1234yf | mass% | 32.5 | 35.0 | 37.5 | 40.0 | 42.5 | 45.0 | 47.5 | 50.0 |
| $CO_2$ | mass% | 2.5 | 2.5 | 2.5 | 2.5 | 2.5 | 2.5 | 2.5 | 2.5 |
| GWP | - | 288 | 272 | 255 | 238 | 221 | 205 | 188 | 171 |
| COP ratio | % (relative to R410A) | 99.7 | 99.7 | 99.7 | 99.7 | 99.7 | 99.7 | 99.8 | 99.8 |
| Refrigerating capacity ratio | % (relative to R410A) | 98.9 | 97.4 | 95.8 | 94.2 | 92.5 | 90.8 | 89.0 | 87.2 |
| Condensation glide | °C | 3.6 | 3.9 | 4.2 | 4.5 | 4.9 | 5.2 | 5.6 | 6.0 |

| Item | Unit | Ex. 225 | Ex. 226 | Exe 227 | Ex. 228 | Ex. 229 | Ex. 230 | Ex. 231 | Ex. 232 |
|---|---|---|---|---|---|---|---|---|---|
| HFO-1132 (E) | mass% | 22.5 | 22.5 | 22.5 | 25.0 | 25.0 | 25.0 | 25.0 | 25.0 |
| R32 | mass% | 22.5 | 20.0 | 17.5 | 40.0 | 37.5 | 35.0 | 32.5 | 30.0 |
| R1234yf | mass% | 52.5 | 55.0 | 57.5 | 32.5 | 35.0 | 37.5 | 40.0 | 42.5 |
| $CO_2$ | mass% | 2.5 | 2.5 | 2.5 | 2.5 | 2.5 | 2.5 | 2.5 | 2.5 |
| GWP | - | 154 | 137 | 121 | 272 | 255 | 238 | 221 | 204 |
| COP ratio | % (relative to R410A) | 99.9 | 100.1 | 100.2 | 99.5 | 99.5 | 99.5 | 99.5 | 99.5 |
| Refrigerating capacity ratio | % (relative to R410A) | 85.4 | 83.5 | 81.5 | 98.6 | 97.1 | 95.5 | 93.8 | 92.1 |
| Condensation glide | °C | 6.5 | 6.9 | 7.3 | 3.7 | 4.0 | 4.3 | 4.6 | 5.0 |

| Item | Unit | Ex. 233 | Ex. 234 | Ex. 235 | Ex. 236 | Ex. 237 | Ex. 238 | Ex. 239 | Ex. 240 |
|---|---|---|---|---|---|---|---|---|---|
| HFO-1132 (E) | mass% | 25.0 | 25.0 | 25.0 | 25.0 | 25.0 | 27.5 | 27.5 | 27.5 |
| R32 | mass% | 27.5 | 25.0 | 22.5 | 20.0 | 17.5 | 32.5 | 30.0 | 27.5 |
| R1234yf | mass% | 45.0 | 47.5 | 50.0 | 52.5 | 55.0 | 37.5 | 40.0 | 42.5 |
| $CO_2$ | mass% | 2.5 | 2.5 | 2.5 | 2.5 | 2.5 | 2.5 | 2.5 | 2.5 |
| GWP | - | 188 | 171 | 154 | 137 | 121 | 221 | 204 | 188 |
| COP ratio | % (relative to R410A) | 99.6 | 99.6 | 99.7 | 99.9 | 100.0 | 99.4 | 99.4 | 99.4 |
| Refrigerating capacity ratio | % (relative to R410A) | 90.4 | 88.6 | 86.8 | 84.9 | 83.0 | 95.1 | 93.4 | 91.7 |
| Condensation glide | °C | 5.4 | 5.7 | 6.2 | 6.6 | 7.0 | 4.4 | 4.7 | 5.1 |

Table 16

| Item | Unit | Ex. 241 | Ex. 242 | Ex. 243 | Ex. 244 | Ex. 245 | Ex. 246 | Ex. 247 | Ex. 248 |
|---|---|---|---|---|---|---|---|---|---|
| HFO-1132 (E) | mass% | 27.5 | 27.5 | 27.5 | 27.5 | 27.5 | 30.0 | 30.0 | 30.0 |
| R32 | mass% | 25.0 | 22.5 | 20.0 | 17.5 | 15.0 | 25.0 | 22.5 | 20.0 |
| R1234yf | mass% | 45.0 | 47.5 | 50.0 | 52.5 | 55.0 | 42.5 | 45.0 | 47.5 |
| $CO_2$ | mass% | 2.5 | 2.5 | 2.5 | 2.5 | 2.5 | 2.5 | 2.5 | 2.5 |
| GWP | - | 171 | 154 | 137 | 121 | 104 | 171 | 154 | 137 |
| COP ratio | % (relative to R410A) | 99.5 | 99.5 | 99.6 | 99.8 | 99.9 | 99.3 | 99.4 | 99.5 |
| Refrigerating capacity ratio | % (relative to R410A) | 89.9 | 88.1 | 86.3 | 84.3 | 82.4 | 91.3 | 89.5 | 87.6 |
| Condensation glide | °C | 5.5 | 5.9 | 6.3 | 6.7 | 7.2 | 5.2 | 5.6 | 6.0 |

| Item | Unit | Ex. 249 | Ex. 250 | Ex. 251 | Exn 252 | Ex. 253 | Ex. 254 | Ex. 255 | Ex. 256 |
|---|---|---|---|---|---|---|---|---|---|
| HFO-1132 (E) | mass% | 30.0 | 30.0 | 32.5 | 32.5 | 32.5 | 32.5 | 35.0 | 35.0 |
| R32 | mass% | 15.0 | 12.5 | 20.0 | 17.5 | 15.0 | 12.5 | 15.0 | 12.5 |
| R1234yf | mass% | 52.5 | 55.0 | 45.0 | 47.5 | 50.0 | 52.5 | 47.5 | 50.0 |
| $CO_2$ | mass% | 2.5 | 2.5 | 2.5 | 2.5 | 2.5 | 2.5 | 2.5 | 2.5 |
| GWP | - | 104 | 87 | 137 | 120 | 104 | 87 | 104 | 87 |
| COP ratio | % (relative to R410A) | 99.7 | 99.9 | 99.3 | 99.4 | 99.5 | 99.7 | 99.3 | 99.5 |
| Refrigerating capacity ratio | % (relative to R410A) | 83.8 | 81.8 | 88.9 | 87.1 | 85.1 | 83.1 | 86.5 | 84.5 |

(continued)

| Item | Unit | Ex. 249 | Ex. 250 | Ex. 251 | Exn 252 | Ex. 253 | Ex. 254 | Ex. 255 | Ex. 256 |
|---|---|---|---|---|---|---|---|---|---|
| Condensation glide | °C | 6.8 | 7.3 | 5.7 | 6.1 | 6.5 | 7.0 | 6.2 | 6.6 |

| Item | Unit | Ex. 257 | Ex. 258 | Ex. 259 | Ex. 260 | Ex. 261 | Ex. 262 | Ex. 263 | Ex. 264 |
|---|---|---|---|---|---|---|---|---|---|
| HFO-1132 (E) | mass% | 35.0 | 37.5 | 37.5 | 37.5 | 40.0 | 40.0 | 42.5 | 42.5 |
| R32 | mass% | 10.0 | 12.5 | 10.0 | 7.5 | 10.0 | 5.0 | 7.5 | 5.0 |
| R1234yf | mass% | 52.5 | 47.5 | 50.0 | 52.5 | 47.5 | 52.5 | 47.5 | 50.0 |
| $CO_2$ | mass% | 2.5 | 2.5 | 2.5 | 2.5 | 2.5 | 2.5 | 2.5 | 2.5 |
| GWP | - | 70 | 87 | 70 | 53 | 70 | 36 | 53 | 36 |
| COP ratio | % (relative to R410A) | 99.6 | 99.3 | 99.4 | 99.6 | 99.3 | 99.6 | 99.3 | 99.4 |
| Refrigerating capacity ratio | % (relative to R410A) | 82.5 | 85.8 | 83.8 | 81.8 | 85.2 | 81.0 | 84.5 | 82.4 |
| Condensation glide | °C | 7.1 | 6.3 | 6.7 | 7.1 | 6.4 | 7.2 | 6.5 | 6.9 |

| Item | Unit | Ex. 265 | Ex. 266 | Ex. 267 | Ex. 268 | Ex. 269 | Ex. 270 | Ex. 271 |
|---|---|---|---|---|---|---|---|---|
| HFO-1132 (E) | mass% | 45.0 | 45.0 | 47.5 | 47.5 | 50.0 | 52.5 | 55.0 |
| R32 | mass% | 5.0 | 2.5 | 4.0 | 1.5 | 2.5 | 1.5 | 1.0 |
| R1234yf | mass% | 47.5 | 50.0 | 46.0 | 48.5 | 45.0 | 43.5 | 41.5 |
| $CO_2$ | mass% | 2.5 | 2.5 | 2.5 | 2.5 | 2.5 | 2.5 | 2.5 |
| GWP | - | 36 | 19 | 29 | 13 | 19 | 12 | 9 |
| COP ratio | % (relative to R410A) | 99.3 | 99.4 | 99.2 | 99.3 | 99.1 | 99.1 | 99.0 |
| Refrigerating capacity ratio | % (relative to R410A) | 83.7 | 81.6 | 84.2 | 82.0 | 84.2 | 84.7 | 85.6 |
| Condensation glide | °C | 6.6 | 6.9 | 6.4 | 6.7 | 6.3 | 6.2 | 5.9 |

Table 17

| Item | Unit | Comp. Ex.146 | Comp. Ex. 147 | Comp. Ex.148 | Ex. 272 | Ex. 273 | Ex. 274 | Comp. Ex.149 | Comp. Ex. 150 |
|---|---|---|---|---|---|---|---|---|---|
| HFO-1132 (E) | mass% | 10.0 | 10.0 | 10.0 | 10.0 | 10.0 | 10.0 | 10.0 | 10.0 |
| R32 | mass% | 76.0 | 66.0 | 56.0 | 46.0 | 36.0 | 26.0 | 16.0 | 6.0 |
| R1234yf | mass% | 10.0 | 20.0 | 30.0 | 40.0 | 50.0 | 60.0 | 70.0 | 80.0 |
| $CO_2$ | mass% | 4.0 | 4.0 | 4.0 | 4.0 | 4.0 | 4.0 | 4.0 | 4.0 |
| GWP | - | 514 | 446 | 379 | 312 | 245 | 178 | 111 | 44 |
| COP ratio | % (relative to R410A) | 100.3 | 100.2 | 100.1 | 100.0 | 100.0 | 100.4 | 101.2 | 102.0 |

(continued)

| Item | Unit | Comp. Ex.146 | Comp. Ex. 147 | Comp. Ex.148 | Ex. 272 | Ex. 273 | Ex. 274 | Comp. Ex.149 | Comp. Ex. 150 |
|---|---|---|---|---|---|---|---|---|---|
| Refrigerating capacity ratio | % (relative to R410A) | 113.0 | 108.6 | 103.5 | 97.8 | 91.3 | 84.1 | 76.1 | 66.8 |
| Condensation glide | °C | 2.5 | 3.1 | 3.9 | 5.0 | 6.4 | 8.3 | 10.4 | 12.2 |

| Item | Unit | Comp. Ex.146 | Comp. Ex. 147 | Ex. 275 | Ex. 276 | Ex. 277 | Ex. 278 | Comp. Ex.153 | Comp. Ex.154 |
|---|---|---|---|---|---|---|---|---|---|
| HFO-1132 (E) | mass% | 20.0 | 20.0 | 20.0 | 20.0 | 20.0 | 20.0 | 20.0 | 30.0 |
| R32 | mass% | 66.0 | 56.0 | 46.0 | 36.0 | 26.0 | 16.0 | 6.0 | 56.0 |
| R1234yf | mass% | 10.0 | 20.0 | 30.0 | 40.0 | 50.0 | 60.0 | 70.0 | 10.0 |
| $CO_2$ | mass% | 4.0 | 4.0 | 4.0 | 4.0 | 4.0 | 4.0 | 4.0 | 4.0 |
| GWP | - | 446 | 379 | 312 | 245 | 178 | 111 | 44 | 379 |
| COP ratio | % (relative to R410A) | 99.6 | 99.5 | 99.3 | 99.2 | 99.4 | 100.0 | 100.9 | 98.9 |
| Refrigerating capacity ratio | % (relative to R410A) | 113.1 | 108.4 | 103.0 | 96.8 | 89.9 | 82.3 | 73.7 | 112.9 |
| Condensation glide | °C | 2.6 | 3.3 | 4.2 | 5.5 | 7.1 | 9.2 | 11.2 | 2.7 |

| Item | Unit | Exo 279 | Ex. 280 | Ex. 281 | Ex. 282 | Comp. Ex.155 | Comp. Ex.156 | Comp. Ex. 157 | Ex. 283 |
|---|---|---|---|---|---|---|---|---|---|
| HFO-1132 (E) | mass% | 30.0 | 30.0 | 30.0 | 30.0 | 30.0 | 40.0 | 40.0 | 40.0 |
| R32 | mass% | 46.0 | 36.0 | 26.0 | 16.0 | 6.0 | 46.0 | 36.0 | 26.0 |
| R1234yf | mass% | 20.0 | 30.0 | 40.0 | 50.0 | 60.0 | 10.0 | 20.0 | 30.0 |
| $CO_2$ | mass% | 4.0 | 4.0 | 4.0 | 4.0 | 4.0 | 4.0 | 4.0 | 4.0 |
| GWP | - | 312 | 245 | 177 | 110 | 43 | 311 | 244 | 177 |
| COP ratio | % (relative to R410A) | 98.7 | 98.6 | 98.7 | 99.0 | 99.8 | 98.3 | 98.1 | 98.1 |
| Refrigerating capacity ratio | % (relative to R410A) | 107.7 | 101.9 | 95.4 | 88.0 | 79.9 | 112.1 | 106.6 | 100.4 |
| Condensation glide | °C | 3.5 | 4.6 | 6.0 | 7.8 | 9.8 | 2.8 | 3.8 | 5.0 |

| Item | Unit | Ex. 284 | Ex. 285 | Comp. Ex.158 | Comp. Ex.159 | Ex. 286 | Ex. 287 | Comp. Ex. 160 | Comp. Ex. 161 |
|---|---|---|---|---|---|---|---|---|---|
| HFO-1132 (E) | mass% | 40.0 | 40.0 | 50.0 | 50.0 | 50.0 | 50.0 | 60.0 | 60.0 |
| R32 | mass% | 16.0 | 6.0 | 36.0 | 26.0 | 16.0 | 6.0 | 26.0 | 16.0 |
| R1234yf | mass% | 40.0 | 50.0 | 10.0 | 20.0 | 30.0 | 40.0 | 10.0 | 20.0 |

(continued)

| Item | Unit | Ex. 284 | Ex. 285 | Comp. Ex.158 | Comp. Ex.159 | Ex. 286 | Ex. 287 | Comp. Ex. 160 | Comp. Ex. 161 |
|---|---|---|---|---|---|---|---|---|---|
| $CO_2$ | mass% | 4.0 | 4.0 | 4.0 | 4.0 | 4.0 | 4.0 | 4.0 | 4.0 |
| GWP | - | 110 | 43 | 244 | 177 | 110 | 43 | 177 | 109 |
| COP ratio | % (relative to R410A) | 98.3 | 98.8 | 97.7 | 97.7 | 97.8 | 98.2 | 97.3 | 97.4 |
| Refrigerating capacity ratio | % (relative to R410A) | 93.4 | 85.6 | 110.9 | 105.0 | 98.4 | 90.9 | 109.3 | 103.0 |
| Condensation glide | °C | 6.6 | 8.4 | 3.1 | 4.1 | 5.5 | 7.1 | 3.4 | 4.6 |

| Item | Unit | Ex. 288 | Comp. Ex.162 | Comp. Ex.163 | Comp. Ex.164 | Ex. 289 | Ex. 290 | Ex. 291 | Ex. 292 |
|---|---|---|---|---|---|---|---|---|---|
| HFO-1132 (E) | mass% | 60.0 | 70.0 | 70.0 | 80.0 | 15.0 | 15.0 | 15.0 | 15.0 |
| R32 | mass% | 6.0 | 16.0 | 6.0 | 6.0 | 48.5 | 46.0 | 43.5 | 41.0 |
| R1234yf | mass% | 30.0 | 10.0 | 20.0 | 10.0 | 32.5 | 35.0 | 37.5 | 40.0 |
| $CO_2$ | mass% | 4.0 | 4.0 | 4.0 | 4.0 | 4.0 | 4.0 | 4.0 | 4.0 |
| GWP | - | 42 | 109 | 42 | 42 | 329 | 312 | 295 | 279 |
| COP ratio | % (relative to R410A) | 97.7 | 97.2 | 97.4 | 97.2 | 99.7 | 99.6 | 99.6 | 99.6 |
| Refrigerating capacity ratio | % (relative to R410A) | 95.9 | 107.3 | 100.5 | 104.9 | 101.9 | 100.4 | 98.9 | 97.4 |
| Condensation glide | °C | 6.0 | 3.8 | 5.1 | 4.3 | 4.3 | 4.6 | 4.9 | 5.2 |

| Item | Unit | Ex. 293 | Ex= 294 | Ex. 295 | Ex. 296 | Ex. 297 | Ex. 298 | Ex. 299 | Ex. 300 |
|---|---|---|---|---|---|---|---|---|---|
| HFO-1132 (E) | mass% | 15.0 | 15.0 | 15.0 | 15.0 | 15.0 | 15.0 | 15.0 | 15.0 |
| R32 | mass% | 38.5 | 36.0 | 33.5 | 31.0 | 28.5 | 26.0 | 23.5 | 21.0 |
| R1234yf | mass% | 42.5 | 45.0 | 47.5 | 50.0 | 52.5 | 55.0 | 57.5 | 60.0 |
| $CO_2$ | mass% | 4.0 | 4.0 | 4.0 | 4.0 | 4.0 | 4.0 | 4.0 | 4.0 |
| GWP | - | 262 | 245 | 228 | 211 | 195 | 178 | 161 | 144 |
| COP ratio | % (relative to R410A) | 99.6 | 99.6 | 99.6 | 99.7 | 99.8 | 99.9 | 100.0 | 100.2 |
| Refrigerating capacity ratio | % (relative to R410A) | 95.8 | 94.1 | 92.4 | 90.7 | 88.9 | 87.1 | 85.2 | 83.3 |
| Condensation glide | °C | 5.6 | 5.9 | 6.3 | 6.8 | 7.2 | 7.7 | 8.2 | 8.7 |

Table 18

| Item | Unit | Ex. 301 | Ex. 302 | Ex. 303 | Ex.304 | Ex. 305 | Ex.306 | Ex. 307 | Ex. 308 |
|---|---|---|---|---|---|---|---|---|---|
| HFO-1132 (E) | mass% | 15.0 | 17.5 | 17.5 | 17.5 | 17.5 | 17.5 | 17.5 | 17.5 |
| R32 | mass% | 18.5 | 48.5 | 46.0 | 43.5 | 41.0 | 38.5 | 36.0 | 33.5 |
| R1234yf | mass% | 62.5 | 30.0 | 32.5 | 35.0 | 37.5 | 40.0 | 42.5 | 45.0 |
| $CO_2$ | mass% | 4.0 | 4.0 | 4.0 | 4.0 | 4.0 | 4.0 | 4.0 | 4.0 |
| GWP | - | 128 | 329 | 312 | 295 | 278 | 262 | 245 | 228 |
| COP ratio | % (relative to R410A) | 100.4 | 99.5 | 99.5 | 99.4 | 99.4 | 99.4 | 99.4 | 99.4 |
| Refrigerating capacity ratio | % (relative to R410A) | 81.3 | 103.1 | 101.7 | 100.2 | 98.7 | 97.1 | 95.5 | 93.8 |
| Condensation glide | °C | 9.3 | 4.1 | 4.4 | 4.7 | 5.0 | 5.3 | 5.7 | 6.1 |

| Item | Unit | Ex.309 | Ex.310 | Ex. 311 | Ex. 312 | Ex. 313 | Ex. 314 | Ex. 315 | Ex. 316 |
|---|---|---|---|---|---|---|---|---|---|
| HFO-1132 (E) | mass% | 17.5 | 17.5 | 17.5 | 17.5 | 17.5 | 17.5 | 20.0 | 20.0 |
| R32 | mass% | 31.0 | 28.5 | 26.0 | 23.5 | 21.0 | 18.5 | 48.5 | 43.5 |
| R1234yf | mass% | 47.5 | 50.0 | 52.5 | 55.0 | 57.5 | 60.0 | 27.5 | 32.5 |
| $CO_2$ | mass% | 4.0 | 4.0 | 4.0 | 4.0 | 4.0 | 4.0 | 4.0 | 4.0 |
| GWP | - | 211 | 195 | 178 | 161 | 144 | 127 | 329 | 295 |
| COP ratio | % (relative to R410A) | 99.5 | 99.5 | 99.6 | 99.8 | 99.9 | 100.1 | 99.3 | 99.3 |
| Refrigerating capacity ratio | % (relative to R410A) | 92.1 | 90.3 | 88.5 | 86.7 | 84.8 | 82.8 | 104.4 | 101.5 |
| Condensation glide | °C | 6.5 | 7.0 | 7.4 | 7.9 | 8.4 | 9.0 | 4.0 | 4.5 |

| Item | Unit | Ex.317 | Ex. 318 | Ex. 319 | Exl 320 | Ex. 321 | Ex. 322 | Ex.323 | Ex. 324 |
|---|---|---|---|---|---|---|---|---|---|
| HFO-1132 (E) | mass% | 20.0 | 20.0 | 20.0 | 20.0 | 20.0 | 20.0 | 20.0 | 20.0 |
| R32 | mass% | 41.0 | 38.5 | 33.5 | 31.0 | 28.5 | 23.5 | 21.0 | 18.5 |
| R1234yf | mass% | 35.0 | 37.5 | 42.5 | 45.0 | 47.5 | 52.5 | 55.0 | 57.5 |
| $CO_2$ | mass% | 4.0 | 4.0 | 4.0 | 4.0 | 4.0 | 4.0 | 4.0 | 4.0 |
| GWP | - | 278 | 262 | 228 | 211 | 195 | 161 | 144 | 127 |
| COP ratio | % (relative to R410A) | 99.3 | 99.2 | 99.3 | 99.3 | 99.3 | 99.5 | 99.6 | 99.8 |
| Refrigerating capacity ratio | % (relative to R410A) | 100.0 | 98.4 | 95.2 | 93.5 | 91.7 | 88.1 | 86.2 | 84.3 |

(continued)

| Item | Unit | Ex.317 | Ex. 318 | Ex. 319 | Exl 320 | Ex. 321 | Ex. 322 | Ex.323 | Ex. 324 |
|---|---|---|---|---|---|---|---|---|---|
| Condensation glide | °C | 4.8 | 5.1 | 5.8 | 6.2 | 6.7 | 7.6 | 8.1 | 8.6 |

| Item | Unit | Ex.325 | Ex.326 | Ex.327 | Ex. 328 | Ex. 329 | Ex. 330 | Ex.331 | Ex. 332 |
|---|---|---|---|---|---|---|---|---|---|
| HFO-1132 (E) | mass% | 22.5 | 22.5 | 22.5 | 22.5 | 22.5 | 22.5 | 22.5 | 22.5 |
| R32 | mass% | 48.5 | 46.0 | 43.5 | 41.0 | 38.5 | 36.0 | 33.5 | 31.0 |
| R1234yf | mass% | 25.0 | 27.5 | 30.0 | 32.5 | 35.0 | 37.5 | 40.0 | 42.5 |
| $CO_2$ | mass% | 4.0 | 4.0 | 4.0 | 4.0 | 4.0 | 4.0 | 4.0 | 4.0 |
| GWP | - | 329 | 312 | 295 | 278 | 262 | 245 | 228 | 211 |
| COP ratio | % (relative to R410A) | 99.2 | 99.2 | 99.1 | 99.1 | 99.1 | 99.1 | 99.1 | 99.1 |
| Refrigerating capacity ratio | % (relative to R410A) | 105.6 | 104.2 | 102.7 | 101.3 | 99.7 | 98.1 | 96.5 | 94.8 |
| Condensation glide | °C | 3.8 | 4.0 | 4.3 | 4.6 | 4.9 | 5.2 | 5.6 | 6.0 |

| Item | Unit | Ex.333 | Ex.334 | Ex.335 | Ex.336 | Ex.337 | Ex.338 | Ex.339 | Ex.340 |
|---|---|---|---|---|---|---|---|---|---|
| HFO-1132 (E) | mass% | 22.5 | 22.5 | 22.5 | 22.5 | 22.5 | 22.5 | 22.5 | 25.0 |
| R32 | mass% | 28.5 | 26.0 | 23.5 | 21.0 | 18.5 | 16.0 | 13.5 | 43.5 |
| R1234yf | mass% | 45.0 | 47.5 | 50.0 | 52.5 | 55.0 | 57.5 | 60.0 | 27.5 |
| $CO_2$ | mass% | 4.0 | 4.0 | 4.0 | 4.0 | 4.0 | 4.0 | 4.0 | 4.0 |
| GWP | - | 194 | 178 | 161 | 144 | 127 | 111 | 94 | 295 |
| COP ratio | % (relative to R410A) | 99.1 | 99.2 | 99.3 | 99.4 | 99.5 | 99.7 | 99.9 | 99.0 |
| Refrigerating capacity ratio | % (relative to R410A) | 93.1 | 91.3 | 89.5 | 87.7 | 85.8 | 83.8 | 81.8 | 104.0 |
| Condensation glide | °C | 6.4 | 6.8 | 7.3 | 7.8 | 8.3 | 8.8 | 9.3 | 4.1 |

| Item | Unit | Ex.341 | Ex.342 | Ex.343 | Ex.344 | Ex.345 | Ex.346 | Ex.347 | Ex. 348 |
|---|---|---|---|---|---|---|---|---|---|
| HFO-1132 (E) | mass% | 25.0 | 25.0 | 25.0 | 25.0 | 25.0 | 25.0 | 25.0 | 25.0 |
| R32 | mass% | 41.0 | 38.5 | 36.0 | 33.5 | 31.0 | 28.5 | 26.0 | 23.5 |
| R1234yf | mass% | 30.0 | 32.5 | 35.0 | 37.5 | 40.0 | 42.5 | 45.0 | 47.5 |
| $CO_2$ | mass% | 4.0 | 4.0 | 4.0 | 4.0 | 4.0 | 4.0 | 4.0 | 4.0 |
| GWP | - | 278 | 261 | 245 | 228 | 211 | 194 | 178 | 161 |
| COP ratio | % (relative to R410A) | 98.9 | 98.9 | 98.9 | 98.9 | 98.9 | 99.0 | 99.0 | 99.1 |

(continued)

| Item | Unit | Ex.341 | Ex.342 | Ex.343 | Ex.344 | Ex.345 | Ex.346 | Ex.347 | Ex. 348 |
|---|---|---|---|---|---|---|---|---|---|
| Refrigerating capacity ratio | % (relative to R410A) | 102.5 | 101.0 | 99.4 | 97.8 | 96.1 | 94.4 | 92.7 | 90.9 |
| Condensation glide | °C | 4.4 | 4.7 | 5.0 | 5.4 | 5.7 | 6.1 | 6.5 | 7.0 |

Table 19

| Item | Unit | Ex.349 | Ex. 350 | Ex. 351 | Ex. 352 | Ex.353 | Ex.354 | Ex. 355 | Ex.356 |
|---|---|---|---|---|---|---|---|---|---|
| HFO-1132 (E) | mass% | 25.0 | 25.0 | 25.0 | 25.0 | 27.5 | 27.5 | 27.5 | 27.5 |
| R32 | mass% | 21.0 | 18.5 | 16.0 | 13.5 | 35.0 | 31.0 | 28.5 | 26.0 |
| R1234yf | mass% | 50.0 | 52.5 | 55.0 | 57.5 | 35.0 | 37.5 | 40.0 | 42.5 |
| $CO_2$ | mass% | 4.0 | 4.0 | 4.0 | 4.0 | 4.0 | 4.0 | 4.0 | 4.0 |
| GWP | - | 144 | 127 | 110 | 94 | 238 | 211 | 194 | 178 |
| COP ratio | % (relative to R410A) | 99.2 | 99.3 | 99.5 | 99.7 | 98.8 | 98.8 | 98.8 | 98.8 |
| Refrigerating capacity ratio | % (relative to R410A) | 89.1 | 87.2 | 85.2 | 83.2 | 99.4 | 97.4 | 95.8 | 94.0 |
| Condensation glide | °C | 7.5 | 8.0 | 8.5 | 9.0 | 5.0 | 5.5 | 5.9 | 6.3 |

| Item | Unit | Ex. 357 | Ex. 358 | Ex.359 | Ex.360 | Ex. 361 | Ex. 362 | Ex. 363 | Ex.364 |
|---|---|---|---|---|---|---|---|---|---|
| HFO-1132 (E) | mass% | 27.5 | 27.5 | 27.5 | 27.5 | 27.5 | 27.5 | 30.0 | 30.0 |
| R32 | mass% | 23.5 | 21.0 | 18.5 | 16.0 | 13.5 | 11.0 | 23.5 | 21.0 |
| R1234yf | mass% | 45.0 | 47.5 | 50.0 | 52.5 | 55.0 | 57.5 | 42.5 | 45.0 |
| $CO_2$ | mass% | 4.0 | 4.0 | 4.0 | 4.0 | 4.0 | 4.0 | 4.0 | 4.0 |
| GWP | - | 161 | 144 | 127 | 110 | 94 | 77 | 161 | 144 |
| COP ratio | % (relative to R410A) | 98.9 | 99.0 | 99.1 | 99.2 | 99.4 | 99.6 | 98.7 | 98.8 |
| Refrigerating capacity ratio | % (relative to R410A) | 92.3 | 90.4 | 88.6 | 86.7 | 84.7 | 82.6 | 93.6 | 91.8 |
| Condensation glide | °C | 6.7 | 7.2 | 7.6 | 8.1 | 8.7 | 9.2 | 6.4 | 6.9 |

| Item | Unit | Ex.365 | Ex.366 | Ex.367 | Ex.368 | Ex.369 | Ex. 400 | Ex. 401 | Ex. 402 |
|---|---|---|---|---|---|---|---|---|---|
| HFO-1132 (E) | mass% | 30.0 | 30.0 | 30.0 | 30.0 | 32.5 | 32.5 | 32.5 | 32.5 |
| R32 | mass% | 18.5 | 13.5 | 11.0 | 8.5 | 21.0 | 18.5 | 16.0 | 35.0 |
| R1234yf | mass% | 47.5 | 52.5 | 55.0 | 57.5 | 42.5 | 45.0 | 47.5 | 50.0 |
| $CO_2$ | mass% | 4.0 | 4.0 | 4.0 | 4.0 | 4.0 | 4.0 | 4.0 | 4.0 |
| GWP | - | 127 | 94 | 77 | 60 | 144 | 127 | 110 | 239 |

(continued)

| Item | Unit | Ex.365 | Ex.366 | Ex.367 | Ex.368 | Ex.369 | Ex. 400 | Ex. 401 | Ex. 402 |
|---|---|---|---|---|---|---|---|---|---|
| COP ratio | % (relative to R410A) | 98.9 | 99.2 | 99.3 | 99.5 | 98.6 | 98.7 | 98.8 | 99.1 |
| Refrigerating capacity ratio | % (relative to R410A) | 89.9 | 86.1 | 84.1 | 82.0 | 93.1 | 91.3 | 89.4 | 94.0 |
| Condensation glide | °C | 7.3 | 8.3 | 8.8 | 9.3 | 6.6 | 7.0 | 7.5 | 5.5 |

| Item | Unit | Ex. 403 | Ex. 404 | Ex. 405 | Ex. 406 | Ex. 407 | Ex. 408 | Ex. 409 | Ex. 410 |
|---|---|---|---|---|---|---|---|---|---|
| HFO-1132 (E) | mass% | 32.5 | 32.5 | 32.5 | 35.0 | 35.0 | 35.0 | 35.0 | 35.0 |
| R32 | mass% | 11.0 | 8.5 | 6.0 | 16.0 | 13.5 | 11.0 | 8.5 | 6.0 |
| R1234yf | mass% | 52.5 | 55.0 | 57.5 | 45.0 | 47.5 | 50.0 | 52.5 | 55.0 |
| $CO_2$ | mass% | 4.0 | 4.0 | 4.0 | 4.0 | 4.0 | 4.0 | 4.0 | 4.0 |
| GWP | - | 77 | 60 | 43 | 110 | 93 | 77 | 60 | 43 |
| COP ratio | % (relative to R410A) | 99.1 | 99.3 | 99.5 | 98.6 | 98.7 | 98.9 | 99.1 | 99.3 |
| Refrigerating capacity ratio | % (relative to R410A) | 85.5 | 83.4 | 81.3 | 90.8 | 88.8 | 86.9 | 84.8 | 82.8 |
| Condensation glide | °C | 8.5 | 9.0 | 9.5 | 7.2 | 7.6 | 8.1 | 8.6 | 9.1 |

| Item | Unit | Ex. 411 | Ex. 412 | Ex. 413 | Ex.414 | Ex. 415 | Ex. 416 | Ex.417 | Ex. 418 |
|---|---|---|---|---|---|---|---|---|---|
| HFO-1132 (E) | mass% | 37.5 | 37.5 | 37.5 | 37.5 | 37.5 | 40.0 | 40.0 | 40.0 |
| R32 | mass% | 13.5 | 11.0 | 8.5 | 6.0 | 3.5 | 11.0 | 8.5 | 3.5 |
| R1234yf | mass% | 45.0 | 47.5 | 50.0 | 52.5 | 55.0 | 45.0 | 47.5 | 52.5 |
| $CO_2$ | mass% | 4.0 | 4.0 | 4.0 | 4.0 | 4.0 | 4.0 | 4.0 | 4.0 |
| GWP | - | 93 | 77 | 60 | 43 | 26 | 76 | 60 | 26 |
| COP ratio | % (relative to R410A) | 98.6 | 98.7 | 98.9 | 99.0 | 99.2 | 98.5 | 98.7 | 99.0 |
| Refrigerating capacity ratio | % (relative to R410A) | 90.2 | 88.2 | 86.2 | 84.2 | 82.0 | 89.6 | 87.6 | 83.4 |
| Condensation glide | °C | 7.3 | 7.8 | 8.3 | 8.8 | 9.2 | 7.5 | 7.9 | 8.9 |

| Item | Unit | Ex.419 | Ex. 420 | Ex. 421 | Ex. 422 | Ex.423 | Ex. 424 | Ex.425 | Ex. 426 |
|---|---|---|---|---|---|---|---|---|---|
| HFO-1132 (E) | mass% | 40.0 | 42.5 | 42.5 | 42.5 | 42.5 | 45.0 | 45.0 | 45.0 |
| R32 | mass% | 1.0 | 8.5 | 35.0 | 3.5 | 1.0 | 6.0 | 3.5 | 1.0 |
| R1234yf | mass% | 55.0 | 45.0 | 47.5 | 50.0 | 52.5 | 45.0 | 47.5 | 50.0 |

(continued)

| Item | Unit | Ex.419 | Ex. 420 | Ex. 421 | Ex. 422 | Ex.423 | Ex. 424 | Ex.425 | Ex. 426 |
|---|---|---|---|---|---|---|---|---|---|
| $CO_2$ | mass% | 4.0 | 4.0 | 4.0 | 4.0 | 4.0 | 4.0 | 4.0 | 4.0 |
| GWP | - | 9 | 60 | 239 | 26 | 9 | 43 | 26 | 9 |
| COP ratio | % (relative to R410A) | 99.2 | 98.5 | 98.8 | 98.8 | 99.0 | 98.5 | 98.6 | 98.8 |
| Refrigerating capacity ratio | % (relative to R410A) | 81.2 | 88.9 | 95.6 | 84.8 | 82.6 | 88.3 | 86.2 | 84.0 |
| Condensation glide | °C | 9.3 | 7.6 | 5.0 | 8.5 | 9.0 | 7.8 | 8.2 | 8.7 |

Table 20

| Item | Unit | Ex.427 | Ex. 428 | Ex. 429 | Ex. 430 | Ex.431 | Ex. 432 |
|---|---|---|---|---|---|---|---|
| HFO-1132 (E) | mass% | 47.5 | 47.5 | 50.0 | 50.0 | 52.5 | 55.0 |
| R32 | mass% | 4.5 | 2.0 | 3.5 | 1.0 | 2.0 | 1.0 |
| R1234yf | mass% | 44.0 | 46.5 | 42.5 | 45.0 | 41.5 | 40.0 |
| $CO_2$ | mass% | 4.0 | 4.0 | 4.0 | 4.0 | 4.0 | 4.0 |
| GWP | - | 33 | 16 | 26 | 9 | 16 | 9 |
| COP ratio | % (relative to R410A) | 98.4 | 98.6 | 98.3 | 98.5 | 98.3 | 98.2 |
| Refrigerating capacity ratio | % (relative to R410A) | 88.4 | 86.3 | 88.9 | 86.8 | 88.9 | 89.4 |
| Condensation glide | °C | 7.7 | 8.1 | 7.6 | 8.0 | 7.5 | 7.4 |

The results indicate that when the mass% of $CO_2$, R32, HFO-1132(E), and R1234yf based on their sum is respectively represented by w, x, y, and z, in the ternary composition diagrams of Figs. 2 to 9 in which the sum of R32, HFO-1132(E), and R1234yf is (100-w) mass%, when coordinates (x, y, z) are on the straight line A"B", the GWP of the mixed refrigerant is 350, and when the coordinates are on the right side of the straight line, the GWP of the mixed refrigerant is less than 350. The results also indicate that in the ternary composition diagrams of Figs. 2 to 9, when coordinates (x, y, z) are on the straight line A'B', the GWP of the mixed refrigerant is 250, and when the coordinates are on the right side of the straight line, the GWP of the mixed refrigerant is less than 250. The results further indicate that in the ternary composition diagrams of Figs. 2 to 9, when coordinates (x, y, z) are on the straight line AB, the GWP of the mixed refrigerant is 125, and when the coordinates are on the right side of the straight line, the GWP of the mixed refrigerant is less than 125.

It is found that the straight line connecting points D and C is positioned at the slightly left side of the curve connecting points at which the refrigerating capacity ratio relative to R410A is 80%. Accordingly, it is indicated that when the coordinates (x, y, z) are on the left side of the straight line connecting points D and C, the refrigerating capacity of the mixed refrigerant is 80% or more relative to R410A.

Coordinates of points A and B, A' and B', and A'' and B'' were determined by obtaining the approximate expression based on each of the points shown in the tables. Specifically, calculation was performed according to Table 11 (points A and B), Table 12 (points A' and B'), and Table 13 (points A'' and B").

Table 21

| Point A | | | | | | | | | |
|---|---|---|---|---|---|---|---|---|---|
| Item | $1.2 \geq CO_2 > 0$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 81.6 | 81.0 | 80.4 | 80.4 | 79.1 | 77.6 | 77.6 | 76.1 | 74.6 |
| R32 | 18.4 | 18.4 | 18.4 | 18.4 | 18.4 | 18.4 | 18.4 | 18.4 | 18.4 |
| R1234yf | 0.0 | 0.0 | 0.0 | 0.0 | 0.0 | 0.0 | 0.0 | 0.0 | 0.0 |

(continued)

| Point A | | | |
|---|---|---|---|
| Item | $1.2 \geq CO_2 > 0$ | $4.0 \geq CO_2 \geq 1.2$ | $7.0 \geq CO_2 \geq 4.0$ |
| $CO_2$ | w | w | w |
| HEO-1132(E) approximate expression | -w+81.6 | -w+81.6 | -w+81.6 |
| R32 approximate expression | 18.4 | 18.4 | 18.4 |
| R1234yf approximate expression | 0.0 | 0.0 | 0.0 |

Point B

| Item | $1.2 \geq CO_2 > 0$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 0.0 | 0.0 | 0.0 | 0.0 | 0.0 | 0.0 | 0.0 | 0.0 | 0.0 |
| R32 | 18.1 | 18.1 | 18.1 | 18.1 | 18.1 | 18.1 | 18.1 | 18.1 | 18.1 |
| R1234yf | 81.9 | 81.3 | 80.7 | 80.7 | 79.4 | 77.9 | 77.9 | 76.4 | 74.9 |
| $CO_2$ | w | | | w | | | w | | |
| HEO-1132(E) approximate expression | 0.0 | | | 0.0 | | | 0.0 | | |
| R32 approximate expression | 18.1 | | | 18.1 | | | 18.1 | | |
| R1234yf approximate expression | -w+81.9 | | | -w+81.9 | | | -w+81.9 | | |

Table 22

| Point A' | | | | | | | | | |
|---|---|---|---|---|---|---|---|---|---|
| Item | $1.2 \geq CO_2 > 0$ | | | $4.0 \geq CO_2 \geq 1.2$ | | | $7.0 \geq CO_2 \geq 4.0$ | | |
| $CO_2$ | 0.0 | 0.6 | 1.2 | 1.2 | 2.5 | 4.0 | 4.0 | 5.5 | 7.0 |
| E-HFO-1132 | 63.1 | 62.5 | 61.9 | 61.9 | 60.6 | 59.1 | 59.1 | 57.6 | 56.1 |
| R32 | 36.9 | 36.9 | 36.9 | 36.9 | 36.9 | 36.9 | 36.9 | 36.9 | 36.9 |
| R1234yf | 0.0 | 0.0 | 0.0 | 0.0 | 0.0 | 0.0 | 0.0 | 0.0 | 0.0 |
| $CO_2$ | w | | | w | | | w | | |
| HEO-1132(E) approximate expression | -w+63.1 | | | -w+63.1 | | | -w+63.1 | | |
| R32 approximate expression | 36.9 | | | 36.9 | | | 36.9 | | |
| R1234yf approximate expression | 0.0 | | | 0.0 | | | 0.0 | | |

Point B'

| Item | $1.2 \geq CO_2 > 0$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 0.0 | 0.0 | 0.0 | 0.0 | 0.0 | 0.0 | 0.0 | 0.0 | 0.0 |
| R32 | 36.7 | 36.7 | 36.6 | 36.6 | 36.6 | 36.6 | 36.6 | 36.6 | 36.6 |
| R1234yf | 63.3 | 62.7 | 62.2 | 62.2 | 60.9 | 59.4 | 59.4 | 57.9 | 56.4 |

(continued)

| Item | 1.2≥CO$_2$>0 | 4.0≥CO$_2$≥1.2 | 7.0≥CO$_2$≥4.0 |
|---|---|---|---|
| CO$_2$ | w | w | w |
| HEO-1132(E) approximate expression | 0 | 0.0 | 0.0 |
| R32 approximate expression | -0.0833w+36.717 | 36.6 | 36.6 |
| R1234yf approximate expression | -0.9167w+63.283 | -w+63.4 | -w+63.4 |

Table 23

| Point A" | | | | | | | | | |
|---|---|---|---|---|---|---|---|---|---|
| Item | 1.2≥CO$_2$>0 | | | 4.0≥CO$_2$≥1.2 | | | 7.0≥CO$_2$≥4.0 | | |
| CO$_2$ | 0.0 | 0.6 | 1.2 | 1.2 | 2.5 | 4.0 | 4.0 | 5.5 | 7.0 |
| E-HFO-1132 | 48.2 | 47.6 | 47.0 | 47.0 | 45.7 | 44.2 | 44.2 | 42.7 | 41.2 |
| R32 | 51.8 | 51.8 | 51.8 | 51.8 | 51.8 | 51.8 | 51.8 | 51.8 | 51.8 |
| R1234yf | 0.0 | 0.0 | 0.0 | 0.0 | 0.0 | 0.0 | 0.0 | 0.0 | 0.0 |
| CO$_2$ | w | | | w | | | w | | |
| HEO-1132(E) approximate expression | -w+48.2 | | | -w+48.2 | | | -w+48.2 | | |
| R32 approximate expression | 51.8 | | | 51.8 | | | 51.8 | | |
| R1234yf approximate expression | 0.0 | | | 0.0 | | | 0.0 | | |

Point B"

| Item | 1.2≥CO$_2$>0 | | | 4.0≥CO$_2$≥1.2 | | | 7.0≥CO$_2$≥4.0 | | |
|---|---|---|---|---|---|---|---|---|---|
| CO$_2$ | 0.0 | 0.6 | 1.2 | 1.2 | 2.5 | 4.0 | 4.0 | 5.5 | 7.0 |
| E-HFO-1132 | 0.0 | 0.0 | 0.0 | 0.0 | 0.0 | 0.0 | 0.0 | 0.0 | 0.0 |
| R32 | 51.5 | 51.6 | 51.6 | 51.6 | 51.6 | 51.6 | 51.6 | 51.6 | 51.6 |
| R1234yf | 49.5 | 47.8 | 47.2 | 47.2 | 45.9 | 44.4 | 44.4 | 42.9 | 41.4 |
| CO$_2$ | w | | | w | | | w | | |
| HEO-1132(E) approximate expression | 0.0 | | | 0.0 | | | 0.0 | | |
| R32 approximate expression | $-1.5278w^2+2.75w+50.5$ | | | 51.6 | | | 51.6 | | |
| R1234yf approximate expression | $1.5278w^2-3.75w+49.5$ | | | -w+48.4 | | | -w+48.4 | | |

Coordinates of points C to G were determined by obtaining the approximate expression based on each of the points shown in the above tables. Specifically, calculation was performed as shown in Table 14.

Table 24

| Point C | | | | | | | | | |
|---|---|---|---|---|---|---|---|---|---|
| Item | 1.2≥CO$_2$>0 | | | 4.0≥CO$_2$≥1.2 | | | 7.0≥CO$_2$≥4.0 | | |
| CO$_2$ | 0.0 | 0.6 | 1.2 | 1.2 | 2.5 | 4.0 | 4.0 | 5.5 | 7.0 |
| E-HFO-1132 | 58.3 | 55.4 | 52.4 | 52.4 | 46.2 | 39.5 | 39.5 | 33.0 | 26.8 |
| R32 | 0.0 | 0.0 | 0.0 | 0.0 | 0.0 | 0.0 | 0.0 | 0.0 | 0.0 |
| R1234yf | 41.7 | 44.0 | 46.4 | 46.4 | 51.3 | 56.5 | 56.5 | 61.5 | 66.2 |

(continued)

| Point C | | | |
|---|---|---|---|
| Item | 1.2≥CO$_2$>0 | 4.0≥CO$_2$≥1.2 | 7.0≥CO$_2$≥4.0 |
| CO$_2$ | w | w | w |
| HEO-1132(-E) approximate expression | -4.9167w+58.317 | 0.1081w$^2$-5.169w+58.447 | 0.0667w$^2$-4.9667w+58.3 |
| R32 approximate expression | 0.0 | 0.0 | 0.0 |
| R1234yf approximate expression | 3.9167w+41.683 | -0.1081w$^2$+4.169w+41.553 | -0.0667w$^2$+3.9667w+41.7 |

Point D

| Item | 1.2≥CO$_2$>0 | | | 4.0≥CO$_2$≥1.2 | | | 7.0≥CO$_2$≥4.0 | | |
|---|---|---|---|---|---|---|---|---|---|
| CO$_2$ | 0.0 | 0.6 | 1.2 | 1.2 | 2.5 | 4.0 | 4.0 | 5.5 | 7.0 |
| E-HFO-1132 | 0.0 | 0.0 | 0.0 | 0.0 | 0.0 | 0.0 | 0.0 | 0.0 | 0.0 |
| R32 | 40.3 | 38.6 | 36.8 | 36.8 | 33.2 | 28.9 | 28.9 | 24.7 | 20.5 |
| R1234yf | 59.7 | 60.8 | 62.0 | 62.0 | 64.3 | 67.1 | 67.1 | 69.8 | 72.5 |
| CO$_2$ | w | | | w | | | w | | |
| HEO-1132(E) approximate expression | 0.0 | | | 0.0 | | | 0.0 | | |
| R32 approximate expression | -2.9167w+40.317 | | | -2.8226w+40.211 | | | -2.8w+40.1 | | |
| R1234yf approximate expression | 1.9167w+59.683 | | | 1.8226w+59.789 | | | 1.8w+59.9 | | |

Point E

| Item | 1.2≥CO$_2$>0 | | | 4.0≥CO$_2$≥1.2 | | | 7.0≥CO$_2$≥4.0 | | |
|---|---|---|---|---|---|---|---|---|---|
| CO$_2$ | 0.0 | 0.6 | 1.2 | 1.2 | 2.5 | 4.0 | 4.0 | 5.5 | 7.0 |
| E-HFO-1132 | 31.9 | 29.6 | 26.5 | 26.5 | 20.9 | 14.7 | 14.7 | 8.8 | 3.1 |
| R32 | 18.2 | 18.2 | 18.2 | 18.2 | 18.2 | 18.1 | 18.1 | 18.1 | 18.1 |
| R1234yf | 49.9 | 51.6 | 54.1 | 54.1 | 58.4 | 63.2 | 63.2 | 67.6 | 71.8 |
| CO$_2$ | w | | | w | | | w | | |
| HEO-1132(E) approximate expression | $-1.1111w^2-3.1667w+31.9$ | | | $0.0623w^2-4.5381w+31.856$ | | | $0.0444w^2-4.3556w+31.411$ | | |
| R32 approximate expression | 18.2 | | | $-0.0365w+18.26$ | | | 18.1 | | |
| R1234yf approximate expression | $1.1111w^2+2.1667w+49.9$ | | | $-0.0623w^2+3.5746w+49.884$ | | | $-0.0444w^2+3.3556w+50.489$ | | |

Point F

| Item | 1.2≥CO₂>0 | | | 1.3≥CO₂>1.2 | |
|---|---|---|---|---|---|
| $CO_2$ | 0.0 | 0.6 | 1.2 | 1.2 | 1.3 |
| E-HFO-1132 | 5.2 | 2.7 | 0.3 | 0.3 | 0 |
| R32 | 36.7 | 36.7 | 36.6 | 36.6 | 36.6 |
| R1234yf | 58.1 | 60.0 | 61.9 | 61.9 | 62.1 |
| $CO_2$ | w | | | w | |
| HFO-1132(E) approximate expression | $-4.0833w+5.1833$ | | | $-3.0w+3.9$ | |
| R32 approximate expression | $-0.0833w+36.717$ | | | 36.6 | |
| R1234yf approximate expression | $3.1666w+58.0997$ | | | $2.0w+59.5$ | |

Point G

| Item | 1.2≥CO₂>0 | | |
|---|---|---|---|
| $CO_2$ | 0.0 | 0.6 | 1.2 |
| E-HFO-1132 | 26.2 | 29.6 | 38.1 |
| R32 | 22.2 | 18.2 | 10.0 |
| R1234yf | 51.6 | 51.6 | 50.7 |
| $CO_2$ | w | | |
| HFO-1132(E) approximate expression | $7.0833w^2+1.4167w+26.2$ | | |
| R32 approximate expression | $-5.8333w^2-3.1667w+22.2$ | | |
| R1234yf approximate expression | $-1.25w^2+0.75w+51.6$ | | |

Table 25

| Point M | | | | | | | | | |
|---|---|---|---|---|---|---|---|---|---|
| Item | 1.2≥CO₂>0 | | | 4.0≥CO₂≥1.2 | | | 7.0≥CO₂≥4.0 | | |
| $CO_2$ | 0.0 | 0.6 | 1.2 | 1.2 | 2.5 | 4.0 | 4.0 | 5.5 | 7.0 |
| E-HFO-1132 | 52.6 | 55.4 | 58.0 | 58.0 | 59.7 | 60.4 | 0.0 | 33.0 | 26.8 |
| R32 | 0.0 | 0.0 | 0.0 | 0.0 | 0.0 | 0.0 | 0.0 | 0.0 | 0.0 |
| R1234yf | 47.4 | 44.0 | 40.8 | 40.8 | 37.8 | 35.6 | 56.5 | 61.5 | 66.2 |
| $CO_2$ | w | | | w | | | w | | |
| HEO-1132(-E) approximate expression | $-0.2778w^2+4.8333w+52.6$ | | | $-0.3004w^2+2.419w+55.53$ | | | $-0.0667w^z+0.8333w+58.133$ | | |
| R32 approximate expression | 0.0 | | | 0.0 | | | 0.0 | | |

(continued)

| Point M | | | |
| --- | --- | --- | --- |
| Item | $1.2 \geq CO_2 > 0$ | $4.0 \geq CO_2 \geq 1.2$ | $7.0 \geq CO_2 \geq 4.0$ |
| R1234yf approximate expression | $0.2778w^2 - 5.8333w + 47.4$ | $0.3004w^2 - 3.419w + 44.47$ | $0.0667w^2 - 1.8333w + 41.867$ |

Point W

| Item | $1.2 \geq CO_2 > 0$ | | | $4.0 \geq CO_2 \geq 1.2$ | | | $7.0 \geq CO_2 \geq 4.0$ | | |
| --- | --- | --- | --- | --- | --- | --- | --- | --- | --- |
| $CO_2$ | 0.0 | 0.6 | 1.2 | 1.2 | 2.5 | 4.0 | 4.0 | 5.5 | 7.0 |
| E-HFO-1132 | 32.4 | 35.1 | 38.1 | 38.1 | 40.9 | 42.6 | 42.6 | 43.3 | 43.7 |
| R32 | 10.0 | 10.0 | 10.0 | 10.0 | 10.0 | 10.0 | 10.0 | 10.0 | 10.0 |
| R1234yf | 57.6 | 54.3 | 50.7 | 50.7 | 46.6 | 43.4 | 43.4 | 41.2 | 39.3 |
| $CO_2$ | w | | | w | | | w | | |
| HEO-1132(-E) approximate expression | $0.4167w^2 + 4.25w + 32.4$ | | | $-0.3645w^2 + 3.5024w + 34.422$ | | | $-0.0667w^2 + 1.1w + 39.267$ | | |
| R32 approximate expression | 10.0 | | | 10.0 | | | 10.0 | | |
| R1234yf approximate expression | $-0.4167w^2 - 5.25w + 57.6$ | | | $0.3645w^2 - 4.5024w + 55.578$ | | | $0.0667w^2 - 2.1w + 50.733$ | | |

Point N

| Item | $1.2 \geq CO_2 > 0$ | | | $4.0 \geq CO_2 \geq 1.2$ | | | $7.0 \geq CO_2 \geq 4.0$ | | |
| --- | --- | --- | --- | --- | --- | --- | --- | --- | --- |
| $CO_2$ | 0.0 | 0.6 | 1.2 | 1.2 | 2.5 | 4.0 | 4.0 | 5.5 | 7.0 |
| E-HFO-1132 | 27.7 | 29.6 | 31.7 | 31.7 | 34.2 | 35.5 | 35.5 | 36.3 | 36.7 |
| R32 | 18.2 | 18.2 | 18.2 | 18.2 | 18.2 | 18.2 | 18.2 | 18.2 | 18.2 |
| R1234yf | 54.1 | 51.6 | 48.9 | 48.9 | 45.1 | 42.3 | 42.3 | 40.0 | 38.1 |
| $CO_2$ | w | | | w | | | w | | |
| HFO-1132(-E) approximate expression | $0.2778w^2 + 3.0w + 27.7$ | | | $-0.3773w^2 + 3.319w + 28.26$ | | | $-0.0889w^2 + 1.3778w + 31.411$ | | |
| R32 approximate expression | 18.2 | | | 18.2 | | | 18.2 | | |

(continued)

| Item | $1.2 \geq CO_2 > 0$ | $4.0 \geq CO_2 \geq 1.2$ | $7.0 \geq CO_2 \geq 4.0$ |
|---|---|---|---|
| R1234yf approximate expression | $-0.2778w^2 - 4.0w + 54.1$ | $0.3773w^2 - 4.319w + 53.54$ | $0.0889w^2 - 2.3778w + 50.389$ |

Point O

| Item | 1.2≥$CO_2$>0 | | | 4.0≥$CO_2$≥1.2 | | | 7.0≥$CO_2$≥4.0 | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 22.6 | 24.0 | 25.4 | 25.4 | 27.2 | 28.0 | 28.0 | 28.4 | 28.6 |
| R32 | 36.8 | 36.8 | 36.8 | 36.8 | 36.8 | 36.8 | 36.8 | 36.8 | 36.8 |
| R1234yf | 40.6 | 38.6 | 36.0 | 36.0 | 33.5 | 31.2 | 31.2 | 29.3 | 27.6 |
| $CO_2$ | w | | | w | | | w | | |
| HEO-1132(E) approximate expression | $0.8333w^2+1.8333w+22.6$ | | | $-0.1392w^2+1.4381w+24.475$ | | | $-0.0444w^2+0.6889w+25.956$ | | |
| R32 approximate expression | 36.8 | | | 36.8 | | | 36.8 | | |
| R1234yf approximate expression | $-0.8333w^2-2.8333w+40.6$ | | | $0.1392w^2-2.4381w+38.725$ | | | $0.0444w^2-1.6889w+37.244$ | | |

Point P

| Item | $1.2 \geq CO_2 > 0$ | | | $4.0 \geq CO_2 \geq 1.2$ | | | $7.0 \geq CO_2 \geq 4.0$ | | |
|---|---|---|---|---|---|---|---|---|---|
| $CO_2$ | 0.0 | 0.6 | 1.2 | 1.2 | 2.5 | 4.0 | 4.0 | 5.5 | 7.0 |
| E-HFO-1132 | 20.5 | 20.9 | 22.1 | 22.1 | 23.4 | 23.9 | 23.9 | 24.2 | 24.2 |
| R32 | 51.7 | 51.7 | 51.7 | 51.7 | 51.7 | 51.7 | 51.7 | 51.7 | 51.7 |
| R1234yf | 27.8 | 26.8 | 25.0 | 25.0 | 22.4 | 20.4 | 20.4 | 18.6 | 17.1 |
| $CO_2$ | w | | | w | | | w | | |
| HEO-1132(-E) approximate expression | $1.1111w^2+20.5$ | | | $-0.2381w^2+1.881w+20.186$ | | | $-0.0667w^2+0.8333w+21.633$ | | |
| R32 approximate expression | 51.7 | | | 51.7 | | | 51.7 | | |
| R1234yf approximate expression | $-1.1111w^2-w+27.8$ | | | $0.2381w^2-2.881w+28.114$ | | | $0.0667w^2-1.8333w+26.667$ | | |

Coordinates of points on the curves IJ, JK, and KL were determined by obtaining the approximate expression based on each of the points shown in the above tables. Specifically, calculation was performed as shown in Table 15.

Table 26

| CO$_2$ | Kind of refrigerant | I | Example | J | J | Example | K | K | Example | L |
|---|---|---|---|---|---|---|---|---|---|---|
| CO$_2$ | R32 | 0.0 | 10.0 | 18.3 | 18.3 | 27.6 | 36.8 | 36.8 | 44.2 | 51.7 |
| 0.0 | E-HFO-1132 | 72.0 | 57.2 | 48.5 | 48.5 | 41.2 | 35.6 | 35.6 | 32.0 | 28.9 |
| 0.0 | R1234yf | 28.0 | 32.8 | 33.2 | 33.2 | 31.2 | 27.6 | 27.6 | 23.8 | 19.4 |
| 0.6 | E-HEO-1132 | 72.0 | 57.2 | 48.5 | 48.5 | 41.2 | 35.6 | 35.6 | 32.0 | 28.9 |
| 0.6 | R1234yf | 27.4 | 32.2 | 32.6 | 32.6 | 30.6 | 27.0 | 27.0 | 23.2 | 18.8 |
| 1.2 | E-HFO-1132 | 72.0 | 57.2 | 48.5 | 48.5 | 41.2 | 35.6 | 35.6 | 32.0 | 28.9 |
| 1.2 | R1234yf | 26.8 | 31.6 | 32.0 | 32.0 | 30.0 | 26.4 | 26.4 | 22.6 | 18.2 |
| 2.5 | E-HFO-1132 | 72.0 | 57.2 | 48.5 | 48.5 | 41.2 | 35.6 | 35.6 | 32.0 | 28.9 |
| 2.5 | R1234yf | 25.5 | 30.3 | 30.7 | 30.7 | 28.7 | 25.1 | 25.1 | 21.3 | 16.9 |
| 4.0 | E-HFO-1132 | 72.0 | 57.2 | 48.5 | 48.5 | 41.2 | 35.6 | 35.6 | 32.0 | 28.9 |
| 4.0 | R1234yf | 24.0 | 28.8 | 29.2 | 29.2 | 27.2 | 23.6 | 23.6 | 19.8 | 15.4 |
| 5.5 | E-HFO-1132 | 72.0 | 57.2 | 48.5 | 48.5 | 41.2 | 35.6 | 35.6 | 32.0 | 28.9 |
| 5.5 | R1234yf | 22.5 | 27.3 | 27.7 | 27.7 | 25.7 | 22.1 | 22.1 | 18.3 | 13.9 |
| 7.0 | E-HFO-1132 | 72.0 | 57.2 | 48.5 | 48.5 | 41.2 | 35.6 | 35.6 | 32.0 | 28.9 |
| 7.0 | R1234yf | 21.0 | 25.8 | 26.2 | 26.2 | 24.2 | 20.6 | 20.6 | 16.8 | 12.4 |
| w=CO$_2$ | E-HEO-1132 approximate expression When x=R32, | $0.0236x^2-1.716x+72.0$ | | $0.0095x^2-1.2222x+67.676$ | | | $0.0049x^2-0.8842x+61.488$ | | | |
| w=CO$_2$ | R1234yf | $-0.0236x^2+0.716x+28.0-w$ | | $-0.0095x^2+0.2222x+32.324-w$ | | | $-0.0049x^2-0.1158x+38.512-w$ | | | |

Coordinates of points on the curves MW and WM were determined by obtaining the approximate expression based on each of the points shown in the above tables. Specifically, calculation was performed as shown in Table 16 (when 0 mass% < $CO_2$ concentration $\leq$ 1.2 mass%), Table 17 (when 1.2 mass% < $CO_2$ concentration $\leq$ 4.0 mass%), and Table 18 (4.0 mass% < $CO_2$ concentration $\leq$ 7.0 mass%).

Table 27

| 1.2$\geq$CO$_2$>0 | | | | | | |
|---|---|---|---|---|---|---|
| Item | M | Ex. | W | W | Ex. | N |
| | 0.0 | 5.0 | 10.0 | 10.0 | 14.5 | 18.2 |
| $CO_2$=0 mass% | 52.6 | 39.2 | 32.4 | 32.4 | 29.3 | 27.7 |
| When x=R32, E-HFO-1132 approximate expression | $0.132x^2-3.34x+52.6$ | | | $0.0313x^2-1.4551x+43.824$ | | |
| $CO_2$=0.6 mass% | 55.4 | 42.4 | 35.1 | 35.1 | 31.6 | 29.6 |
| When x=R32, E-HFO-1132 approximate expression | $0.114x^2-3.17x+55.4$ | | | $0.0289x^2-1.4866x+47.073$ | | |
| $CO_2$=1.2 mass% | 58.0 | 45.2 | 38.1 | 38.1 | 34.0 | 31.7 |
| When x=R32, E-HFO-1132 approximate expression | $0.114x^2-3.13x+58.0$ | | | $0.0353x^2-1.776x+52.330$ | | |
| Approximate expression of coefficients a, b, and c when w=CO$_2$ concentration in E-HFO-1132 approximate expression ax$^2$+bx+c | | | | | | |
| Coefficient a approximate expression | $0.025w^2-0.045w+0.132$ | | | $0.0122w^2-0.0113w+0.0313$ | | |
| Coefficient b approximate expression | $-0.1806w^2+0.3917w-3.34$ | | | $-0.3582w^2+0.1624w-1.4551$ | | |
| Coefficient c approximate expression | $-0.2778w^2+4.8333w+52.6$ | | | $2.7889w^2+3.7417w+43.824$ | | |
| x=R32, w-CO$_2$ 1.2$\geq$w>0 E-HFO-1132 approximate expression | $(0.025w^2-0.045w+0.132)x^2$ $+(-0.1806w^2+0.3917w-3.34)x$ $+(-0.2778w^2+4.8333w+52.6)$ | | | $(0.0122w^2-0.0113w+0.0313)x^2$ $+(-0.3582w^2+0.1624w-1.4551)x$ $+(2.7889w^2+3.7417w+43.824)$ | | |
| R1234yf | | 100-w-x-y | | 100-w-x-y | | |

Table 28

| 4.0≥CO$_2$≥1.2 | | | | | | |
|---|---|---|---|---|---|---|
| Item | M | Ex. | W | W | Ex. | N |
| | 0.0 | 5.0 | 10.0 | 10.0 | 14.5 | 18.2 |
| CO$_2$=1.2 mass% | 58 | 45.2 | 38.1 | 38.1 | 34 | 31.7 |
| When x=R32, E-HFO-1132 approximate expression | 0.114x$^2$-3.13x+58.0 | | | 0.0353x$^2$-1.776x+52.330 | | |
| CO$_2$=2.5 mass% | 59.7 | 48.1 | 40.9 | 40.9 | 36.9 | 34.2 |
| When x=R32, E-HFO-1132 approximate expression | 0.088x$^2$-2.76x+59.7 | | | 0.0194x$^2$-1.3644x+52.603 | | |
| CO$_2$=4.0 mass% | 60.4 | 49.6 | 42.6 | 42.6 | 38.3 | 35.5 |
| When x=R32, E-HFO-1132 approximate expression | 0.076x$^2$-2.54x+60.4 | | | 0.0242x$^2$-1.5495x+55.671 | | |
| Approximate expression of coefficients a, b, and c when w=CO$_2$ concentration in E-HFO-1132 approximate expression ax$^2$+bx+c | | | | | | |
| Coefficient a approximate expression | 0.0043w$^2$-0.0359w+0.1509 | | | 0.0055w$^2$-0.0326w+0.0665 | | |
| Coefficient b approximate expression | -0.0493w$^2$+0.4669w-3.6193 | | | -0.1571w$^2$+0.8981w-2.6274 | | |
| Coefficient c approximate expression | -0.3004w$^2$+2.419w+55.53 | | | 0.6555w$^2$-2.2153w+54.044 | | |
| x=R32, w-CO$_2$ 4.0≥w≥1.2 E-HFO-1132 approximate expression | (0.0043w$^2$-0.0359w+0.1509)x$^2$ +(-0.0493w$^2$ +0.4669w-3.6193)x +(-0.3004w$^2$ +2.419w+55.53) | | | (0.0055w$^2$-0.0326w+0.0665)x$^2$ +(-0.1571w$^2$ +0.8981w-2.6274)x +(0.6555w$^2$-2.2153w+54.044) | | |
| R1234yf | 100-w-x-y | | | 100-w-x-y | | |

Table 29

| $7.0 \geq CO_2 \geq 4.0$ | | | | | | |
|---|---|---|---|---|---|---|
| Item | M | Example | W | W | Example | N |
| | 0.0 | 5.0 | 10.0 | 10.0 | 14.5 | 18.2 |
| $CO_2$=4.0 mass% | 60.4 | 49.6 | 42.6 | 42.6 | 38.3 | 35.5 |
| When x=R32, E-HFO-1132 approximate expression | $0.076x^2-2.54x+60.4$ | | | $0.0242x^2-1.5495x+55.671$ | | |
| $CO_2$=5.5 mass% | 60.7 | 50.3 | 43.3 | 43.3 | 39 | 36.3 |
| When x=R32, E-HFO-1132 approximate expression | $0.068x'-2.42x+60.7$ | | | $0.0275x^2-1.6303x+56.849$ | | |
| $CO_2$=7.0 mass% | 60.7 | 50.3 | 43.7 | 43.7 | 39.5 | 36.7 |
| When x=R32, E-HFO-1132 approximate expression | $0.076x^2-2.46x+60.7$ | | | $0.0215x^2-1.4609x+56.156$ | | |
| Approximate expression of coefficients a, b, and c when w-$CO_2$ concentration in E-HFO-1132 approximate expression $ax^2+bx+c$ | | | | | | |
| Coefficient a approximate expression | $0.00357w^2-0.0391w+0.1756$ | | | $-0.002061w^2+0.0218w-0.0301$ | | |
| Coefficient b approximate expression | $-0.0356w^2+0.4178w-3.6422$ | | | $0.0556w^z-0.5821w-0.1108$ | | |
| Coefficient c approximate expression | $-0.0667w^2+0.8333w+58.103$ | | | $-0.4158w^2+4.7352w+43.383$ | | |
| x=R32, w-$CO_2$ $7.0 \geq w \geq 4.0$ E-HFO-1132 approximate expression | $(0.00357w^2-0.0391w+0.1756)x^2 +(-0.0356w^2+0.4178w-3.6422)x +(-0.0667w^2+0.8333w+58.103)$ | | | $(-0.002061w^2+0.0218w-0.0301)x^2 +(0.0556w^2-0.5821w-0.1108)x +(-0.4158w^2+4.7352w+43.383)$ | | |
| R1234yf | 100-w-x-y | | | 100-w-x-y | | |

Coordinates of points on the curves NO and OP were determined by obtaining the approximate expression based on each of the points shown in the above tables. Specifically, calculation was performed as shown in Table 19 (when 0 mass% < $CO_2$ concentration $\leq$ 1.2 mass%), Table 20 (when 1.2 mass% < $CO_2$ concentration $\leq$ 4.0 mass%), and Table 21 (4.0 mass% < $CO_2$ concentration $\leq$ 7.0 mass%).

Table 30

| 1.2≥CO₂>0 | | | | | | |
|---|---|---|---|---|---|---|
| Item | N | Example | O | O | Example | P |
| | 18.2 | 27.6 | 36.8 | 36.8 | 44.2 | 51.7 |
| $CO_2=0$ mass% | 27.7 | 24.5 | 22.6 | 22.6 | 21.2 | 20.5 |
| When x=R32, E-HFO-1132 approximate expression | $0.0072x^2-0.6701x+37.512$ | | | $0.0064x^2-0.7103x+40.07$ | | |
| $CO_2=0.6$ mass% | 29.6 | 26.3 | 24 | 24 | 22.4 | 20.9 |
| When x=R32, E-HFO-1132 approximate expression | $0.0054x^2-0.5999x+38.719$ | | | $0.0011x^2-0.3044x+33.727$ | | |
| $CO_2=1.2$ mass% | 31.7 | 27.9 | 25.4 | 25.4 | 23.7 | 22.1 |
| When x=R32, E-HFO-1132 approximate expression | $0.0071x^2-0.7306x+42.636$ | | | $0.0011x^2-0.3189x+35.644$ | | |
| Approximate expression of coefficients a, b, and c when w=CO₂ concentration in E-HFO-1132 approximate expression $ax^2+bx+c$ | | | | | | |
| Coefficient a approximate expression | $0.00487w^2-0.0059w+0.0072$ | | | $0.0074w^2-0.0133w+0.0064$ | | |
| Coefficient b approximate expression | $-0.279w^2+0.2844w-0.6701$ | | | $-0.5839w^2+1.0268w-0.7103$ | | |
| Coefficient c approximate expression | $3.7639w^2-0.2467w+37.512$ | | | $11.472w^2-17.455w+40.07$ | | |
| x=R32, w-CO₂ 1.2≥w>0 E-HFO-1132 approximate expression | $(0.00487w^2-0.0059w+0.0072)x^2 +(-0.279w^2 +0.2844w-0.6701)x +(3.7639w^2-0.2467w+37.512)$ | | | $(0.0074w^2-0.0133w+0.0064)x^2 +(-0.5839w^{?2} +1.0268w-0.7103)x +(11.472w^2-17.455w+40.07)$ | | |
| R1234yf | 100-w-x-y | | | 100-w-x-y | | |

Table 31

| 4.0≥CO₂≥1.2 | | | | | | |
|---|---|---|---|---|---|---|
| Item | N | Ex. | O | O | Ex. | P |
| | 18.2 | 27.6 | 36.8 | 36.8 | 44.2 | 51.7 |

(continued)

| 4.0≥CO₂≥1.2 | | | | | | |
|---|---|---|---|---|---|---|
| $CO_2$=1.2 mass% | 31.7 | 27.9 | 25.4 | 25.4 | 23.7 | 22.1 |
| When x=R32, E-HFO-1132 approximate expression | $0.0071x^2-0.7306x+42.636$ | | | $0.0011x^2-0.3189x+35.644$ | | |
| $CO_2$=2.5 mass% | 34.2 | 29.9 | 27.2 | 27.2 | 25.2 | 23.4 |
| When x=R32, E-HFO-1132 approximate expression | $0.0088x^2-0.8612x+46.954$ | | | $0.002x^2-0.4348x+40.5$ | | |
| $CO_2$=4.0 mass% | 35.5 | 31 | 28 | 28 | 25.9 | 23.9 |
| When x=R32, E-HFO-1132 approximate expression | $0.0082x^2-0.8546x+48.335$ | | | $0.0011x^2-0.3768x+40.412$ | | |
| Approximate expressions of coefficients a, b, and c when W-CO₂ concentration in E-HFO-1132 approximate expression $ax^2+bx+c$ | | | | | | |
| Coefficient a approximate expression | $-0.00062w^2+0.0036w+0.0037$ | | | $-0.000463w^2+0.0024w-0.0011$ | | |
| Coefficient b approximate expression | $0.0375w^2-0.239w-0.4977$ | | | $0.0457w^2-0.2581w-0.075$ | | |
| Coefficient c approximate expression | $-0.8575w^2+6.4941w+36.078$ | | | $-1.355w^2+8.749w+27.096$ | | |
| x=R32, w-CO₂ 4.0≥w≥1.2 E-HFO-1132 approximate expression | $(-0.00062w^2+0.0036w+0.0037)x^2$ $+(0.0375w^2-0.239w-0.4977)x +(-0.8575w^2$ $+6.4941w+36.078)$ | | | $(-0.000463w^2+0.0024w-0.0011)x^2$ $+(0.0457w^2-0.2581w-0.075)x +(-1.355w^2$ $+8.749w+27.096)$ | | |
| R1234yf | 100-w-x-y | | | 100-w-x-y | | |

Table 32

| 7.0≥CO₂≥4.0 | | | | | | |
|---|---|---|---|---|---|---|
| Item | N | Ex. | O | O | Ex. | P |
| | 18.2 | 27.6 | 36.8 | 36.8 | 44.2 | 51.7 |
| $CO_2$=4.0 mass% | 35.5 | 31.0 | 28.0 | 28.0 | 25.9 | 23.9 |

(continued)

| 7.0≥CO₂≥4.0 | | | | | | |
|---|---|---|---|---|---|---|
| Item | N | Ex. | O | O | Ex. | P |
| | 18.2 | 27.6 | 36.8 | 36.8 | 44.2 | 51.7 |
| When x=R32, E-HFO-1132 approximate expression | $0.0082x^2-0.8546x+48.335$ | | | $0.0011x^2-0.3768x+40.412$ | | |
| $CO_2$=5.5 mass% | 36.3 | 31.6 | 28.4 | 28.4 | 26.2 | 24.2 |
| When x=R32, E-HFO-1132 approximate expression | $0.0082x^2-0.8747x+49.51$ | | | $0.0021x^2-0.4638x+42.584$ | | |
| $CO_2$=7.0 mass% | 36.7 | 31.9 | 28.6 | 28.6 | 26.4 | 24.2 |
| When x=R32, E-HFO-1132 approximate expression | $0.0082x^2-0.8848x+50.097$ | | | $0.0003x^2-0.3188x+39.923$ | | |
| Approximate expression of Coefficients a, b, and c when w=CO₂ concentration In E-HFO-1132 approximate expression $ax^2+bx+c$ | | | | | | |
| Coefficient a approximate expression | 0.0082 | | | $-0.0006258w^2+0.0066w-0.0153$ | | |
| Coefficient b approximate expression | $0.0022w^2-0.0345w-0.7521$ | | | $0.0516w-0.5478w+0.9894$ | | |
| Coefficient c approximate expression | $-0.1307w^2+2.0247w+42.327$ | | | $-1.074w^2+11.651w+10.992$ | | |
| x=R32, w-CO₂ 7.0≥w≥4.0 E-HFO-1132 approximate expression | $0.0082x^2 +(0.0022w^2-0.0345w-0.7521)x +(-0.1307w+2.0247w+42.327)$ | | | $(-0.0006258w^2+0.0066w-0.0153)x^2 +(0.0516w^2-0.5478w+0.9894)x +(-1.074w^2 +11.651w+10.992)$ | | |
| R1234yf | 100-w-x-y | | | 100-w-x-y | | |

Description of Reference Numerals

1: Sample cell

2: High-speed camera

3: Xenon lamp

4: Collimating lens

5: Collimating lens

6: Ring filter

List of Embodiments

[Embodiment 1]

A composition comprising a refrigerant,

the refrigerant comprising $CO_2$, trans-1,2-difluoroethylene (HFO-1132(E)), difluoromethane (R32), and 2,3,3,3-tetrafluoro-1-propene (R1234yf),
wherein

when the mass% of $CO_2$, R32, HFO-1132(E), and R1234yf based on their sum is respectively represented by w, x, y, and z;
if 0<w≤1.2, coordinates (x,y,z) in a ternary composition diagram in which the sum of R32, HFO-1132(E), and R1234yf is (100-w) mass% are within the range of a figure surrounded by curves IJ, JK, and KL, and straight lines LB", B"D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" ($-1.5278w^2+2.75w+50.5$, 0.0, $1.5278w^2-3.75w+49.5$),
point D ($-2.9167w+40.317$, 0.0, $1.9167w+59.683$), and
point C (0.0, $-4.9167w+58.317$, $3.9167w+41.683$),
or on the above line segments (excluding points on the straight lines B"D and CI);

if 1.2<w≤4.0, coordinates (x,y,z) in a ternary composition diagram are within the range of a figure surrounded by curves IJ, JK, and KL, and straight lines LB", B"D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" (51.6, 0.0, 48.4-w),
point D ($-2.8226w+40.211$, 0.0, $1.8226w+59.789$), and
point C (0.0, $0.1081w^2-5.169w+58.447$, $-0.1081w^2+4.169w+41.553$), or on the above line segments (excluding points on the straight lines B"D and CI); or

if 4.0<w≤7.0, coordinates (x,y,z) in a ternary composition diagram are within the range of a figure surrounded by curves IJ, JK, and KL, and straight lines LB", B" D, DC, and CI that connect the following 7 points:

point I (0.0, 72.0, 28.0-w),
point J (18.3, 48.5, 33.2-w),
point K (36.8, 35.6, 27.6-w),
point L (51.7, 28.9, 19.4-w),
point B" (51.6, 0.0, 48.4-w),
point D ($-2.8w+40.1$, 0.0, $1.8w+59.9$), and
point C (0.0, $0.0667w^2-4.9667w+58.3$, $-0.0667w^2+3.9667w+41.7$), or on the above line segments (excluding points on the straight lines B"D and CI);

the curve IJ is represented by coordinates (x, $0.0236x^2-1.716x+72$, $-0.0236x^2+0.716x+28-w$),
the curve JK is represented by coordinates (x, $0.0095x^2-1.2222x+67.676$, $-0.0095x^2+0.2222x+32.324-w$), and
the curve KL is represented by coordinates (x, $0.0049x^2-0.8842x+61.488$, $-0.0049x^2-0.1158x+38.512-w$).

[Embodiment 2]

A composition comprising a refrigerant,

the refrigerant comprising $CO_2$, trans-1,2-difluoroethylene (HFO-1132(E)), difluoromethane (R32), and 2,3,3,3-tetrafluoro-1-propene (R1234yf),
wherein

when the mass% of $CO_2$, R32, HFO-1132(E), and R1234yf based on their sum is respectively represented by w, x, y, and z;
if 0<w≤1.2, coordinates (x,y,z) in a ternary composition diagram in which the sum of R32, HFO-1132(E), and R1234yf is (100-w) mass% are within the range of a figure surrounded by curves IJ and JK, and straight lines KF, FC, and CI that connect the following 5 points:

point I (0.0, 72.0, 28.0-w),
point J (18.3, 48.5, 33.2-w),
point K (36.8, 35.6, 27.6-w),
point F (-0.0833w+36.717, -4.0833w+5.1833, 3.1666w+58.0997), and
point C (0.0, -4.9167w+58.317, 3.9167w+41.683), or on the above line segments (excluding points on the straight line CI);

if 1.2<w≤1.3, coordinates (x,y,z) in a ternary composition diagram are within the range of a figure surrounded by curves IJ and JK, and straight lines KF, FC, and CI that connect the following 5 points:

point I (0.0, 72.0, 28.0-w),
point J (18.3, 48.5, 33.2-w),
point K (36.8, 35.6, 27.6-w),
point F (36.6, -3w+3.9, 2w+59.5), and
point C (0.0, $0.1081w^2$-5.169w+58.447, $-0.1081w^2$+4.169w+41.553), or on the above line segments (excluding points on the straight line CI);

if 1.3<w≤4.0, coordinates (x,y,z) in a ternary composition diagram are within the range of a figure surrounded by curves IJ and JK, and straight lines KB', B'D, DC, and CI that connect the following 6 points:

point I (0.0, 72.0, 28.0-w),
point J (18.3, 48.5, 33.2-w),
point K (36.8, 35.6, 27.6-w),
point B' (36.6, 0.0, -w+63.4),
point D (-2.8226w+40.211, 0.0, 1.8226w+59.789), and
point C (0.0, $0.1081w^2$-5.169w+58.447, $-0.1081w^2$+4.169w+41.553), or on the above line segments (excluding points on the straight line CI); or

if 4.0<w≤7.0, coordinates (x,y,z) in a ternary composition diagram are within the range of a figure surrounded by curves IJ and JK, and straight lines KB', B'D, DC, and CI that connect the following 6 points:

point I (0.0, 72.0, 28.0-w),
point J (18.3, 48.5, 33.2-w),
point K (36.8, 35.6, 27.6-w),
point B' (36.6, 0.0, -w+63.4),
point D (-2.8w+40.1, 0.0, 1.8w+59.9), and
point C (0.0, $0.0667w^2$-4.9667w+58.3, $-0.0667w^2$+3.9667w+41.7),
or on the above line segments (excluding points on the straight line CI);

the curve IJ is represented by coordinates (x, $0.0236x^2$-1.716x+72, $-0.0236x^2$+0.716x+28-w); and
the curve JK is represented by coordinates (x, $0.0095x^2$-1.2222x+67.676, $-0.0095x^2$+0.2222x+32.324-w).

[Embodiment 3]

A composition comprising a refrigerant,
the refrigerant comprising $CO_2$, R32, HFO-1132(E), and R1234yf, wherein

when the mass% of $CO_2$, R32, HFO-1132(E), and R1234yf based on their sum is respectively represented by w, x, y, and z,
if $0<w\leq1.2$, coordinates (x,y,z) in a ternary composition diagram in which the sum of R32, HFO-1132(E), and R1234yf is (100-w) mass% are within the range of a figure surrounded by curves IJ and JK, and straight lines KF, FC, and CI that connect the following 4 points:

point I (0.0, 72.0, 28.0-w),
point J (18.3, 48.5, 33.2-w),
point E (18.2, $-1.1111w^2-3.1667w+31.9$, $1.1111w^2+2.1667w+49.9$), and
point C (0.0, $-4.9167w+58.317$, $3.9167w+41.683$), or on the above line segments (excluding points on the straight line CI);

if $1.2<w\leq4.0$, coordinates (x,y,z) in a ternary composition diagram are within the range of a figure surrounded by curves IJ and JK, and straight lines KF, FC, and CI that connect the following 4 points:

point I (0.0, 72.0, 28.0-w),
point J (18.3, 48.5, 33.2-w),
point E ($-0.0365w+18.26$, $0.0623w^2-4.5381w+31.856$, $-0.0623w^2+3.5746w+49.884$), and
point C (0.0, $0.1081w^2-5.169w+58.447$, $-0.1081w^2+4.169w+41.553$), or on the above line segments (excluding points on the straight line CI); or

if $4.0<w\leq7.0$, coordinates (x,y,z) in a ternary composition diagram are within the range of a figure surrounded by curves IJ and JK, and straight lines KF, FC, and CI that connect the following 4 points:

point I (0.0, 72.0, 28.0-w),
point J (18.3, 48.5, 33.2-w),
point E (18.1, $0.0444w^2-4.3556w+31.411$, $-0.0444w^2+3.3556w+50.489$), and
point C (0.0, $0.0667w^2-4.9667w+58.3$, $-0.0667w^2+3.9667w+41.7$), or on the above line segments (excluding points on the straight line CI), and
the curve IJ is represented by coordinates (x, $0.0236x^2-1.716x+72$, $-0.0236x^2+0.716x+28-w$).

[Embodiment 4]

A composition comprising a refrigerant,
the refrigerant comprising $CO_2$, R32, HFO-1132(E), and R1234yf, wherein

when the mass% of $CO_2$, R32, HFO-1132(E), and R1234yf based on their sum is respectively represented by w, x, y, and z,
if $0<w\leq0.6$, coordinates (x,y,z) in a ternary composition diagram in which the sum of R32, HFO-1132(E), and R1234yf is (100-w) mass% are within the range of a figure surrounded by curves GO and OP, and straight lines PB", B"D, and DG that connect the following 5 points:

point G ($-5.8333w^2-3.1667w+22.2$, $7.0833w^2+1.4167w+26.2$, $-1.25w^2+0.75w+51.6$),
point O (36.8, $0.8333w^2+1.8333w+22.6$, $-0.8333w^2-2.8333w+40.6$),
point P (51.7, $1.1111w^2+20.5$, $-1.1111w^2-w+27.8$),
point B" ($-1.5278w^2+2.75w+50.5$, 0.0, $1.5278w^2-3.75w+49.5$), and
point D ($-2.9167w+40.317$, 0.0, $1.9167w+59.683$), or on the above line segments (excluding points on the straight line B"D);

if $0.6<w\leq1.2$, coordinates (x,y,z) in a ternary composition diagram are within the range of a figure surrounded by curves GN, NO, and OP, and straight lines PB", B"D, and DG that connect the following 6 points:

point G ($-5.8333w^2-3.1667w+22.2$, $7.0833w^2+1.4167w+26.2$, $- 1.25w^2+0.75w+51.6$),

point N (18.2, $0.2778w^2+3w+27.7$, $-0.2778w^2-4w+54.1$),

point O (36.8, $0.8333w^2+1.8333w+22.6$, $-0.8333w^2-2.8333w+40.6$),

point P (51.7, $1.1111w^2+20.5$, $-1.1111w^2-w+27.8$),

point B" ($-1.5278w^2+2.75w+50.5$, 0.0, $1.5278w^2-3.75w+49.5$), and

point D ($-2.9167w+40.317$, 0.0, $1.9167w+59.683$), or on the above line segments (excluding points on the straight line B"D);

if $0<w\leq0.6$, the curve GO is represented by coordinates (x, $(0.00487w^2-0.0059w+0.0072)x^2+(-0.279w^2+0.2844w-0.6701)x+3.7639w^2-0.2467w+37.512$, $100-w-x-y$);

if $0.6<w\leq1.2$, the curve GN is represented by coordinates (x, $(0.0122w^2-0.0113w+0.0313)x^2+(-0.3582w^2+0.1624w-1.4551)x+2.7889w^2+3.7417w+43.824$ , $100-w-x-y$);

if $0.6<w\leq1.2$, the curve NO is represented by coordinates (x, $(0.00487w^2-0.0059w+0.0072)x^2+(-0.279w^2+0.2844w-0.6701)x+3.7639w^2-0.2467w+37.512$, $100-w-x-y$);

if $0<w\leq1.2$, the curve OP is represented by coordinates (x, $(0.0074w^20.0133w+0.0064)x^2+(-0.5839w^2+1.0268w-0.7103)x+11.472w^2-17.455w+40.07$, $100-w-x-y$);

if $1.2<w\leq4.0$, coordinates $(x,y,z)$ in a ternary composition diagram are within the range of a figure surrounded by curves MW, WN, NO, and OP, and straight lines PB", B"D, DC, and CM that connect the following 8 points:

point M (0.0, $-0.3004w^2+2.419w+55.53$, $0.3004w^2-3.419w+44.47$),

point W (10.0, $-0.3645w^2+3.5024w+34.422$, $0.3645w^2-4.5024w+55.578$),

point N (18.2, $-0.3773w^2+3.319w+28.26$, $0.3773w^2-4.319w+53.54$),

point O (36.8, $-0.1392w^2+1.4381w+24.475$, $0.1392w^2-2.4381w+38.725$),

point P (51.7, $-0.2381w^2+1.881w+20.186$, $0.2381w^2-2.881w+28.114$),

point B" (51.6, 0.0, $-w+48.4$),

point D ($-2.8226w+40.211$, 0.0, $1.8226w+59.789$), and

point C (0.0, $0.1081w^2-5.169w+58.447$, $-0.1081w^2+4.169w+41.553$), or on the above line segments (excluding points on the straight lines B"D and CM);

the curve MW is represented by coordinates (x, $(0.0043w^2-0.0359w+0.1509)x^2+(-0.0493w^2+0.4669w-3.6193)x-0.3004w^2+2.419w+55.53$, $100-w-x-y$),

the curve WN is represented by coordinates (x, $(0.0055w^2-0.0326w+0.0665)x^2+(-0.1571w^2+0.8981w-2.6274)x+0.6555w^2-2.2153w+54.044$, $100-w-x-y$),

the curve NO is represented by coordinates (x, $(-0.00062w^2+0.0036w+0.0037)x^2+(0.0375w^2-0.239w-0.4977)x-0.8575w^2+6.4941w+36.078$, $100-w-x-y$), and

the curve OP is represented by coordinates (x, $(-0.000463w^2+0.0024w-0.0011)x^2+(0.0457w^2-0.2581w-0.075)x-1.355w^2+8.749w+27.096$, $100-w-x-y$); or

if $4.0<w\leq7.0$, coordinates $(x,y,z)$ in a ternary composition diagram are within the range of a figure surrounded by curves MW, WN, NO, and OP, and straight lines PB", B"D, DC, and CM that connect the following 8 points:

point M (0.0, $-0.0667w^2+0.8333w+58.133$, $0.0667w^2-1.8333w+41.867$),

point W (10.0, $-0.0667w^2+1.1w+39.267$, $0.0667w^2-2.1w+50.733$),

point N (18.2, $-0.0889w^2+1.3778w+31.411$, $0.0889w^2-2.3778w+50.389$),

point O (36.8, $-0.0444w^2+0.6889w+25.956$, $0.0444w^2-1.6889w+37.244$),

point P (51.7, $-0.0667w^2+0.8333w+21.633$, $0.0667w^2-1.8333w+26.667$),

point B" (51.6, 0.0, $-w+48.4$),

point D ($-2.8w+40.1$, 0.0, $1.8w+59.9$), and

point C (0.0, $0.0667w^2-4.9667w+58.3$, $-0.0667w^2+3.9667w+41.7$), or on the above line segments (excluding points on the straight lines B"D and CM);

the curve MW is represented by coordinates (x, $(0.00357w^2-0.0391w+0.1756)x^2+(-0.0356w^2+0.4178w-3.6422)x-0.0667w^2+0.8333w+58.103$, $100-w-x-y$),

the curve WN is represented by coordinates (x, $(-0.002061w^2+0.0218w-0.0301)x^2+(0.0556w^2-0.5821w-0.1108)x-0.4158w^2+4.7352w+43.383$, $100-w-x-y$),

the curve NO is represented by coordinates (x, $0.0082x^2+(0.0022w^2-0.0345w-0.7521)x-0.1307w^2+2.0247w+42.327$, $100-w-x-y$), and

the curve OP is represented by coordinates (x, $(-0.0006258w^2+0.0066w-0.0153)x^2+(0.0516w^2-0.5478w+0.9894)x-1.074w^2+11.651w+10.992$, $100-w-x-y$).

[Embodiment 5]

A composition comprising a refrigerant,
the refrigerant comprising $CO_2$, R32, HFO-1132(E), and R1234yf, wherein

when the mass% of $CO_2$, R32, HFO-1132(E), and R1234yf based on their sum is respectively represented by w, x, y, and z,
if $0<w\leq0.6$, coordinates (x,y,z) in a ternary composition diagram in which the sum of R32, HFO-1132(E), and R1234yf is (100-w) mass% are within the range of a figure surrounded by a curve GO, and straight lines OF and FG that connect the following 3 points:

point G ($-5.8333w^2-3.1667w+22.2$, $7.0833w^2+1.4167w+26.2$, $-1.25w^2+0.75w+51.6$),
point O (36.8, $0.8333w^2+1.8333w+22.6$, $-0.8333w^2-2.8333w+40.6$), and
point F ($-0.0833w+36.717$, $-4.0833w+5.1833$, $3.1666w+58.0997$), or
the above line segments;
the curve GO is represented by coordinates (x, $(0.00487w^2-0.0059w+0.0072)x^2+(-0.279w^2+0.2844w-0.6701)x+3.7639w^2-0.2467w+37.512$, 100-w-x-y);

if $0.6<w\leq1.2$, coordinates (x,y,z) in a ternary composition diagram are within the range of a figure surrounded by curves GN and NO, and straight lines OF and FG that connect the following 4 points:

point G ($-5.8333w^2-3.1667w+22.2$, $7.0833w^2+1.4167w+26.2$, $-1.25w^2+0.75w+51.6$),
point N (18.2, $0.2778w^2+3.0w+27.7$, $-0.2.778w^2-4.0w+54.1$),
point O (36.8, $0.8333w^2+1.8333w+22.6$, $-0.8333w^2-2.8333w+40.6$), and
point F ($-0.0833w+36.717$, $-4.0833w+5.1833$, $3.1666w+58.0997$), or on the above line segments;

if $0.6<w\leq1.2$, the curve GN is represented by coordinates (x, $(0.0122w^2-0.0113w+0.0313)x^2+(-0.3582w^2+0.1624w-1.4551)x+2.7889w^2+3.7417w+43.824$, 100-w-x-y);
if $0.6<w\leq1.2$, the curve NO is represented by coordinates (x, $(0.00487w^2-0.0059w+0.0072)x^2+(-0.279w^2+0.2844w-0.6701)x+3.7639w^2-0.2467w+37.512$, 100-w-x-y);
if $1.2<w\leq1.3$, coordinates (x,y,z) in a ternary composition diagram are within the range of a figure surrounded by curves MW, WN, and NO, and straight lines OF, FC, and CM that connect the following 6 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point O (36.8, $-0.1392w^2+1.4381w+24.475$, $0.1392w^2-2.4381w+38.725$),
point F (36.6, $-3w+3.9$, $2w+59.5$), and
point C (0.0, $0.1081w^2-5.169w+58.447$, $-0.1081w^2+4.169w+41.553$), or on the above line segments (excluding points on the straight line CM);

the curve MW is represented by coordinates (x, $(0.0043w^2-0.0359w+0.1509)x^2+(-0.0493w^2+0.4669w-3.6193)x-0.3004w^2+2.419w+55.53$, 100-w-x-y),
the curve WN is represented by coordinates (x, $(0.0055w^2-0.0326w+0.0665)x^2+(-0.1571w^2+0.8981w-2.6274)x+0.6555w^2-2.2153w+54.044$, 100-w-x-y), and
the curve NO is represented by coordinates (x, $(-0.00062w^2+0.0036w+0.0037)x^2+(0.0375w^2-0.239w-0.4977)x-0.8575w^2+6.4941w+36.078$, 100-w-x-y);
if $1.3<w\leq4.0$, coordinates (x,y,z) in a ternary composition diagram are within the range of a figure surrounded by curves MW, WN, and NO, and straight lines OB', B'D, DC, and CM that connect the following 7 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point O (36.8, $-0.1392w^2+1.4381w+24.475$, $0.1392w^2-2.4381w+38.725$),
point B' (36.6, 0.0, $-w+63.4$),
point D ($-2.8226w+40.211$, 0.0, $1.8226w+59.789$), and
point C (0.0, $0.1081w^2-5.169w+58.447$, $-0.1081w^2+4.169w+41.553$), or on the above line segments (excluding points on the straight line CM);

the curve MW is represented by coordinates (x, $(0.0043w^2-0.0359w+0.1509)x^2+(-0.0493w^2+0.4669w-3.6193)$ $x-0.3004w^2+2.419w+55.53$, 100-w-x-y),

the curve WN is represented by coordinates (x, $(0.0055w^2-0.0326w+0.0665)x^2+(-0.1571w^2+0.8981w-2.6274)$ $x+0.6555w^2-2.2153w+54.044$, 100-w-x-y), and

the curve NO is represented by coordinates (x, $(-0.00062w^2+0.0036w+0.0037)x^2+(0.0375w^2-0.239w-0.4977)$ $x+(-0.8575w^2+6.4941w+36.078)$, 100-w-x-y); or

if $4.0<w\leq7.0$, coordinates (x,y,z) in a ternary composition diagram are within the range of a figure surrounded by curves MW, WN, and NO, and straight lines OB', B'D, DC, and CM that connect the following 7 points:

point M (0.0, $-0.0667w^2+0.8333w+58.133$, $0.0667w^2-1.8333w+41.867$),
point W (10.0, $-0.0667w^2+1.1w+39.267$, $0.0667w^2-2.1w+50.733$),
point N (18. 2, $-0.0889w^2+1.3778w+31.411$, $0.0889w^2-2.3778w+50.389$),
point O (36.8, $-0.0444w^2+0.6889w+25.956$, $0.0444w^2-1.6889w+37.244$),
point B' (36.6, 0.0, -w+63.4),
point D (-2.8w+40. 1, 0.0, 1.8w+59.9), and
point C (0.0, $0.0667w^2-4.9667w+58.3$, $-0.0667w^2+3.9667w+41.7$), or on the above line segments (excluding points on the straight line CM);

the curve MW is represented by coordinates (x, $(0.00357w^2-0.0391w+0.1756)x^2+(-0.0356w^2+0.4178w-3.6422)$ $x-0.0667w^2+0.8333w+58.103$, 100-w-x-y),

the curve WN is represented by coordinates (x, $(-0.002061w^2+0.0218w-0.0301)x^2+(0.0556w^2-0.5821w-0.1108)$ $x-0.4158w^2+4.7352w+43.383$, 100-w-x-y), and

the curve NO is represented by coordinates (x, $(0.0082x^2+(0.0022w^2-0.0345w-0.7521)x-0.1307w^2$ $+2.0247w+42.327$, 100-w-x-y).

[Embodiment 6]

A composition comprising a refrigerant,

the refrigerant comprising $CO_2$, R32, HFO-1132(E), and R1234yf, wherein

when the mass% of $CO_2$, R32, HFO-1132(E), and R1234yf based on their sum is respectively represented by w, x, y, and z,

if $1.2<w\leq4.0$, coordinates (x,y,z) in a ternary composition diagram in which the sum of R32, HFO-1132(E), and R1234yf is (100-w) mass% are within the range of a figure surrounded by curves MW and WN, and straight lines NE, EC, and CM that connect the following 5 points:

point M (0.0, $-0.3004w^2+2.419w+55.53$, $0.3004w^2-3.419w+44.47$),
point W (10.0, $-0.3645w^2+3.5024w+34.422$, $0.3645w^2-4.5024w+55.578$),
point N (18.2, $-0.3773w^2+3.319w+28.26$, $0.3773w^2-4.319w+53.54$),
point E (-0.0365w+18.26, $0.0623w^2-4.5381w+31.856$, - $0.0623w^2+3.5746w+49.884$), and
point C (0.0, $0.1081w^2-5.169w+58.447$, $-0.1081w^2+4.169w+41.553$), or on the above line segments (excluding points on the straight line CM);

the curve MW is represented by coordinates (x, $(0.0043w^2-0.0359w+0.1509)x^2+(-0.0493w^2+0.4669w-3.6193)$ $x-0.3004w^2+2.419w+55.53$, 100-w-x-y), and

the curve WN is represented by coordinates (x, $(0.0055w^2-0.0326w+0.0665)x^2+(-0.1571w^2+0.8981w-2.6274)$ $x+0.6555w^2-2.2153w+54.044$, 100-w-x-y); or

if $4.0<w\leq7.0$, coordinates (x,y,z) in a ternary composition diagram are within the range of a figure surrounded by curves MW and WN, and straight lines NE, EC, and CM that connect the following 5 points:

point M (0.0, $-0.0667w^2+0.8333w+58.133$, $0.0667w^2-1.8333w+41.867$),
point W (10.0, $-0.0667w^2+1.1w+39.267$, $0.0667w^2-2.1w+50.733$),
point N (18.2, $-0.0889w^2+1.3778w+31.411$, $0.0889w^2-2.3778w+50.389$),
point E (18.1, $0.0444w^2-4.3556w+31.411$, $-0.0444w^2+3.3556w+50.489$), and
point C (0.0, $0.0667w^2-4.9667w+58.3$, $-0.0667w^2+3.9667w+41.7$), or on the above line segments (excluding points on the straight line CM);

the curve MW is represented by coordinates (x, $(0.00357w^2-0.0391w+0.1756)x^2+(-0.0356w^2+0.4178w-3.6422)$

x-0.0667w$^2$+0.8333w+58.103, 100-w-x-y), and

the curve WN is represented by coordinates (x, (-0.002061w$^2$+0.0218w-0.0301)X$^2$+(0.0556w$^2$-0.5821w-0.1108) x-0.4158w$^2$+4.7352w+43.383, 100-w-x-y).

[Embodiment 7]

The composition according to any one of Embodiment 1 to 6, for use as a working fluid for a refrigerating machine, wherein the composition further comprises a refrigeration oil.

[Embodiment 8]

The composition according to any one of Embodiment 1 to 7, for use as an alternative refrigerant for R410A.

[Embodiment 9]

Use of the composition according to any one of Embodiment 1 to 7 as an alternative refrigerant for R410A.

[Embodiment 10]

A refrigerating machine comprising the composition according to any one of Embodiment 1 to 7 as a working fluid.

[Embodiment 11]

A method for operating a refrigerating machine, comprising the step of circulating the composition according to any one of Embodiment 1 to 7 as a working fluid in a refrigerating machine.

**Claims**

1. A composition comprising a refrigerant comprising $CO_2$, trans-1,2-difluoroethylene (HFO-1132(E)), difluoromethane (R32), and 2,3,3,3-tetrafluoro-1-propene (R1234yf), wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are within the range of a figure surrounded by curves IJ, JK, and KL, and straight lines LB", B"D, DC and CI that connect the points I, J, K, L, B", D and C, or on the above line segments (excluding points on the straight lines B"D and CI):

|   |   |
|---|---|
| I | (0.0, 72.0, 28.0-w), |
| J | (18.3, 48.5, 33.2-w), |
| K | (36.8, 35.6, 27.6-w), |
| L | (51.7, 28.9, 19.4-w); and |

if 0 < w ≤ 1.2:

|   |   |
|---|---|
| B" | (-1.5278w$^2$+2.75w+50.5, 0.0, 1.5278w$^2$-3.75w+49.5), |
| D | (-2.9167w+40.317, 0.0, 1.9167w+59.683), |
| C | (0.0, -4.9167w+58.317, 3.9167w+41.683); |

if 1.2 < w ≤ 4.0:

|   |   |
|---|---|
| B" | (51.6, 0.0, 48.4-w), |
| D | (-2.8226w+40.211, 0.0, 1.8226w+59.789), |
| C | (0.0, 0.1081w$^2$-5.169w+58.447, -0.1081w$^2$+4.169w+41.553); |

if 4.0 < w ≤ 7.0:

$$B'' \quad (51.6, 0.0, 48.4\text{-}w),$$
$$D \quad (\text{-}2.8w+40.1, 0.0, 1.8w+59.9),$$
$$C \quad (0.0, 0.0667w^2\text{-}4.9667w+58.3, \text{-}0.0667w^2+3.9667w+41.7);$$

the curves IJ, JK and KL being represented by the following coordinates:

$$IJ \quad (x, 0.0236x^2\text{-}1.716x+72, \text{-}0.0236x^2+0.716x+28\text{-}w),$$
$$JK \quad (x, 0.0095x^2\text{-}1.2222x+67.676, \text{-}0.0095x^2+0.2222x+32.324\text{-}w),$$
$$KL \quad (x, 0.0049x^2\text{-}0.8842x+61.488, \text{-}0.0049x^2\text{-}0.1158x+38.512\text{-}w).$$

2. A composition comprising a refrigerant comprising $CO_2$, trans-1,2-difluoroethylene (HFO-1132(E)), difluoromethane (R32), and 2,3,3,3-tetrafluoro-1-propene (R1234yf),

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are
within the range of a figure surrounded by curves IJ and JK, and straight lines KF, FC and CI that connect the points I, J, K, L, F and C, or on the above line segments (excluding points on the straight line CI):

$$I \quad (0.0, 72.0, 28.0\text{-}w),$$
$$J \quad (18.3, 48.5, 33.2\text{-}w),$$
$$K \quad (36.8, 35.6, 27.6\text{-}w), \text{ and}$$

if $0 < w \leq 1.2$:

$$F \quad (\text{-}0.0833w+36.717, \text{-}4.0833w+5.1833, 3.1666w+58.0997),$$
$$C \quad (0.0, \text{-}4.9167w+58.317, 3.9167w+41.683);$$

if $1.2 < w \leq 1.3$:

$$F \quad (36.6, \text{-}3w+3.9, 2w+59.5),$$
$$C \quad (0.0, 0.1081w^2\text{-}5.169w+58.447, \text{-}0.1081w^2+4.169w+41.553);$$

or within the range of a figure surrounded by curves IJ and JK, and straight lines KB', B'D, DC and CI that connect the points I, J, K, B', D and C, or on the above line segments (excluding points on the straight line CI):

$$I \quad (0.0, 72.0, 28.0\text{-}w),$$
$$J \quad (18.3, 48.5, 33.2\text{-}w),$$
$$K \quad (36.8, 35.6, 27.6\text{-}w),$$
$$B' \quad (36.6, 0.0, \text{-}w+63.4), \text{ and}$$

if $1.3 < w \leq 4.0$:

$$D \quad (\text{-}2.8226w+40.211, 0.0, 1.8226w+59.789),$$
$$C \quad (0.0, 0.1081w^2\text{-}5.169w+58.447, \text{-}0.1081w^2+4.169w+41.553);$$

if $4.0 < w \leq 7.0$:

$$D \quad (\text{-}2.8w+40.1, 0.0, 1.8w+59.9),$$

(continued)

C       (0.0, $0.0667w^2$-4.9667w+58.3, $-0.0667w^2$+3.9667w+41.7);

the curves IJ and JK being represented by the following coordinates:

IJ       (x, $0.0236x^2$-1.716x+72, $-0.0236x^2$+0.716x+28-w);
JK      (x, $0.0095x^2$-1.2222x+67.676, $-0.0095x^2$+0.2222x+32.324-w).

3.  A composition comprising a refrigerant comprising $CO_2$, R32, HFO-1132(E), and R1234yf,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are within the range of a figure surrounded by curves IJ and JK, and straight lines KF, FC and CI that connect the points I, J, E and C, or on the above line segments (excluding points on the straight line CI):

I      (0.0, 72.0, 28.0-w),
J     (18.3, 48.5, 33.2-w), and

if 0 < w ≤ 1.2:

E     (18.2, $-1.1111w^2$-3. 1667w+31.9, $1.1111w^2$+2.1667w+49.9),
C     (0.0, -4.9167w+58.317, 3.9167w+41.683);

if 1.2 < w ≤ 4.0:

E     (-0.0365w+18.26, $0.0623w^2$-4.5381w+31.856,
          $-0.0623w^2$+3.5746w+49.884),
C     (0.0, $0.1081w^2$-5.169w+58.447, $-0.1081w^2$+4.169w+41.553); or

if 4.0 < w ≤ 7.0:

E     (18.1, $0.0444w^2$-4.3556w+31.411, $-0.0444w^2$+3.3556w+50.489),
C     (0.0, $0.0667w^2$-4.9667w+58.3, $-0.0667w^2$+3.9667w+41.7);

the curve IJ being represented by the coordinates (x, $0.0236x^2$-1.716x+72, $-0.0236x^2$+0.716x+28-w).

4.  A composition comprising a refrigerant comprising $CO_2$, R32, HFO-1132(E), and R1234yf,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are
if 0 < w ≤ 0.6:

within the range of a figure surrounded by curves GO and OP, and straight lines PB", B"D and DG that connect the points G, O, P, B", and D, or on the above line segments (excluding points on the straight line B"D):

G     ($-5.8333w^2$-3.1667w+22.2, $7.0833w^2$+1.4167w+26.2, $-1.25w^2$+0.75w+51.6),
O     (36.8, $0.8333w^2$+1.8333w+22.6, $-0.8333w^2$-2.8333w+40.6),
P     (51.7, $1.1111w^2$+20.5, $-1.1111w^2$-w+27.8),
B"    ($-1.5278w^2$+2.75w+50.5, 0.0, $1.5278w^2$-3.75w+49.5),

(continued)

D        (-2.9167w+40.317, 0.0, 1.9167w+59.683);

the curves GO and OP being represented by the following coordinates:

GO       (x, $(0.00487w^2-0.0059w+0.0072)x^2+(-0.279w^2+0.2844w-0.6701)$
$x+3.7639w^2-0.2467+37.512$, 100-w-x-y);

OP       (x, $(0.0074w^2-0.0133w+0.0064)x^2+(-0.5839w^2+1.0268w-0.7103)x+11.472w^2-17.455w+40.07$,
100-w-x-y);

if $0.6 < w \leq 1.2$:

within the range of a figure surrounded by curves GN, NO and OP, and straight lines PB", B"D and DG that connect the points G, N, O, P, B" and D, or on the above line segments (excluding points on the straight line B"D):

points G, O, P, B" and D being as defined above, and N being (18.2, $0.2778w^2+3w+27.7$, $-0.2778w^2-4w+54.1$);

the curve OP being as defined above, and the curves GN and NO being represented by the following coordinates:

GN       (x, $(0.0122w^2-0.0113w+0.0313)x^2+(-0.3582w^2+0.1624w-1.4551)x+2.7889w^2$
$+3.7417w+43.824$ , 100-w-x-y);

NO       (x, $(0.00487w^2-0.0059w+0.0072)x^2+(-0.279w^2+0.2844w-$
$0.6701)x+3.7639w^2-0.2467w+37.512$, 100-w-x-y);

if $1.2 < w \leq 4.0$:

within the range of a figure surrounded by curves MW, WN, NO, and OP, and straight lines PB", B"D, DC, and CM that connect the points M, W, N, O, P, B", D and C, or on the above line segments (excluding points on the straight line B"D and CM):

M        $(0.0, -0.3004w^2+2.419w+55.53, 0.3004w^2-3.419w+44.47)$,
W        $(10.0, -0.3645w^2+3.5024w+34.422, 0.3645w^2-4.5024w+55.578)$,
N        $(18.2, -0.3773w^2+3.319w+28.26, 0.3773w^2-4.319w+53.54)$,
O        $(36.8, -0.1392w^2+1.4381w+24.475, 0.1392w^2-2.4381w+38.725)$,
P        $(51.7, -0.2381w^2+1.881w+20.186, 0.2381w^2-2.881w+28.114)$,
B"       $(51.6, 0.0, -w+48.4)$,
D        $(-2.8226w+40.211, 0.0, 1.8226w+59.789)$,
C        $(0.0, 0.1081w^2-5.169w+58.447, -0.1081w^2+4.169w+41.553)$;

the curves MW, WN, NO, and OP being represented by the following coordinates:

MW       (x, $(0.0043w^2-0.0359w+0.1509)x^2+(-0.0493w^2+0.4669w-3.6193)x-0.3004w^2+2.419w+55.53$,
100-w-x-y),

WN       (x, $(0.0055w^2-0.0326w+0.0665)x^2+(-0.1571w^2+0.8981w-2.6274)$
$x+0.6555w^2-2.2153w+54.044$, 100-w-x-y),

NO       (x, $(-0.00062w^2+0.0036w+0.0037)x^2+(0.0375w^2-0.239w-0.4977)x-0.8575w^2$
$+6.4941w+36.078$, 100-w-x-y),

OP       (x, $(-0.000463w^2+0.0024w-0.0011)x^2+(0.0457w^2-0.2581w-0.075)x-1.355w^2+8.749w+27.096$,
100-w-x-y); and

if $4.0 < w \leq 7.0$:

within the range of a figure surrounded by curves MW, WN, NO, and OP, and straight lines PB", B"D, DC, and CM that connect the points M, W, N, O, P, B", D and C, or on the above line segments (excluding points on the straight line B"D and CM):

M      (0.0, $-0.0667w^2+0.8333w+58.133$, $0.0667w^2-1.8333w+41.867$),

W      (10.0, $-0.0667w^2+1.1w+39.267$, $0.0667w^2-2.1w+50.733$),

N      (18.2, $-0.0889w^2+1.3778w+31.411$, $0.0889w^2-2.3778w+50.389$),

O      (36.8, $-0.0444w^2+0.6889w+25.956$, $0.0444w^2-1.6889w+37.244$),

P      (51.7, $-0.0667w^2+0.8333w+21.633$, $0.0667w^2-1.8333w+26.667$),

B"      (51.6, 0.0, $-w+48.4$),

D      ($-2.8w+40.1$, 0.0, $1.8w+59.9$),

C      (0.0, $0.0667w^2-4.9667w+58.3$, $-0.0667w^2+3.9667w+41.7$);

the curves MW, WN, NO, and OP being represented by the following coordinates:

MW      (x, $(0.00357w^2-0.0391w+0.1756)x^2+(-0.0356w^2+0.4178w-3.6422)x-0.0667w^2+0.8333w+58.103$, 100-w-x-y),

WN      (x, $(-0.002061w^2+0.0218w-0.0301)x^2+(0.0556w^2-0.5821w-0.1108)x-0.4158w^2+4.7352w+43.383$, 100-w-x-y),

NO      (x, $0.0082x^2+(0.0022w^2-0.0345w-0.7521)x-0.1307w^2+2.0247w+42.327$, 100-w-x-y),

OP      (x, $(-0.0006258w^2+0.0066w-0.0153)x^2+(0.0516w^2-0.5478w+0.9894)x-1.074w^2+11.651w+10.992$, 100-w-x-y).

5. A composition comprising a refrigerant comprising $CO_2$, R32, HFO-1132(E), and R1234yf,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are
if $0 < w \leq 0.6$:

within the range of a figure surrounded by curve GO, and straight lines OF and FG that connect the points G, O and F, or on the above line segments:

G      ($-5.8333w^2-3.1667w+22.2$, $7.0833w^2+1.4167w+26.2$, $-1.25w^2+0.75w+51.6$),

O      (36.8, $0.8333w^2+1.8333w+22.6$, $-0.8333w^2-2.8333w+40.6$),

F      ($-0.0833w+36.717$, $-4.0833w+5.1833$, $3.1666w+58.0997$), or the above line segments;

the curve GO being represented by the coordinates (x, $(0.00487w^2-0.0059w+0.0072)x^2+(-0.279w^2+0.2844w-0.6701)x+3.7639w^2-0.2467w+37.512$, 100-w-x-y);

if $0.6 < w \leq 1.2$:

within the range of a figure surrounded by curves GN and NO, and straight lines OF and FG that connect the points G, N, O and F, or on the above line segments:
points G, O and F being as defined above, and N being (18.2, $0.2778w^2+3.0w+27.7$, $-0.2.778w^2-4.0w+54.1$);
the curves GN and NO being represented by the following coordinates:

GN      (x, $(0.0122w^2-0.0113w+0.0313)x^2+(-0.3582w^2+0.1624w-1.4551)x+2.7889w^2+3.7417w+43.824$, 100-w-x-y);

NO      (x, $(0.00487w^2-0.0059w+0.0072)x^2+(-0.279w^2+0.2844w-0.6701)x+3.7639w^2-0.2467w+37.512$, 100-w-x-y);

90

if 1.2 < w ≤ 1.3:

within the range of a figure surrounded by curves MW, WN, and NO, and straight lines OF, FC, and CM that connect the points M, W, N, O, F and C, or on the above line segments (excluding points on the straight line CM):

| | |
|---|---|
| M | $(0.0, -0.3004w^2+2.419w+55.53, 0.3004w^2-3.419w+44.47)$, |
| W | $(10.0, -0.3645w^2+3.5024w+34.422, 0.3645w^2-4.5024w+55.578)$, |
| N | $(18.2, -0.3773w^2+3.319w+28.26, 0.3773w^2-4.319w+53.54)$, |
| O | $(36.8, -0.1392w^2+1.4381w+24.475, 0.1392w^2-2.4381w+38.725)$, |
| F | $(36.6, -3w+3.9, 2w+59.5)$, |
| C | $(0.0, 0.1081w^2-5.169w+58.447, -0.1081w^2+4.169w+41.553)$; |

the curves MW, WN and NO being represented by the following coordinates:

| | |
|---|---|
| MW | $(x, (0.0043w^2-0.0359w+0.1509)x^2+(-0.0493w^2+0.4669w-3.6193)x-0.3004w^2+2.419w+55.53, 100-w-x-y)$, |
| WN | $(x, (0.0055w^2-0.0326w+0.0665)x^2+(-0.1571w^2+0.8981w-2.6274)x+0.6555w^2-2.2153w+54.044, 100-w-x-y)$, |
| NO | $(x, (-0.00062w^2+0.0036w+0.0037)x^2+(0.0375w^2-0.239w-0.4977)x-0.8575w^2+6.4941w+36.078, 100-w-x-y)$; |

if 1.3 < w ≤ 4.0:

within the range of a figure surrounded by curves MW, WN, and NO, and straight lines OB', B'D, DC, and CM that connect the points M, W, N, O, B', D and C, or on the above line segments (excluding points on the straight line CM):

points M, W, N, O and C being defined as in the case of (1.2 < w ≤ 1.3), and
B' ( 36.6, 0.0, -w+63.4),
D (-2.8226w+40.211, 0.0, 1.8226w+59.789), and
the curves MW, WN and NO being represented by the coordinates as in the case of (1.2 < w ≤ 1.3); and

if 4.0<w≤7.0:

within the range of a figure surrounded by curves MW, WN, and NO, and straight lines OB', B'D, DC, and CM that connect the points M, W, N, O, F and C, or on the above line segments (excluding points on the straight line CM):

| | |
|---|---|
| M | $(0.0, -0.0667w^2+0.8333w+58.133, 0.0667w^2-1.8333w+41.867)$, |
| W | $(10.0, -0.0667w^2+1.1w+39.267, 0.0667w^2-2.1w+50.733)$, |
| N | $(18. 2, -0.0889w^2+1.3778w+31.411, 0.0889w^2-2.3778w+50.389)$, |
| O | $(36.8, -0.0444w^2+0.6889w+25.956, 0.0444w^2-1.6889w+37.244)$, |
| B' | $(36.6, 0.0, -w+63.4)$, |
| D | $(-2.8w+40. 1, 0.0, 1.8w+59.9)$, |
| C | $(0.0, 0.0667w^2-4.9667w+58.3, -0.0667w^2+3.9667w+41.7)$; |

the curves MW, WN and NO being represented by the following coordinates:

| | |
|---|---|
| MW | $(x, (0.00357w^2-0.0391w+0.1756)x^2+(-0.0356w^2+0.4178w-3.6422)x-0.0667w^2+0.8333w+58.103, 100-w-x-y)$, |
| WN | $(x, (-0.002061w^2+0.0218w-0.0301)x^2+(0.0556w^2-0.5821w-0.1108)x-0.4158w^2+4.7352w+43.383, 100-w-x-y)$, |

(continued)

NO    (x, $(0.0082x^2+(0.0022w^2-0.0345w-0.7521)x-0.1307w^2+2.0247w+42.327$, 100-w-x-y).

6. A composition comprising a refrigerant comprising $CO_2$, R32, HFO-1132(E), and R1234yf,

wherein, when the mass% of $CO_2$, R32, HFO-1132(E), and R1234yf based on their sum is respectively represented by w, x, y, and z, in a ternary composition diagram wherein the sum of R32, HFO-1132(E), and R1234yf is (100-w) mass% the coordinates (x,y,z) are
if 1.2 < w ≤ 4.0:

within the range of a figure surrounded by curves MW and WN, and straight lines NE, EC, and CM that connect the points M, W, N, E and C, or on the above line segments (excluding points on the straight line CM):

M    $(0.0, -0.3004w^2+2.419w+55.53, 0.3004w^2-3.419w+44.47)$,
W    $(10.0, -0.3645w^2+3.5024w+34.422, 0.3645w^2-4.5024w+55.578)$,
N    $(18.2, -0.3773w^2+3.319w+28.26, 0.3773w^2-4.319w+53.54)$,
E    $(-0.0365w+18.26, 0.0623w^2-4.5381w+31.856, -0.0623w^2+3.5746w+49.884)$,
C    $(0.0, 0.1081w^2-5.169w+58.447, -0.1081w^2+4.169w+41.553)$;

the curves MW and WN being represented by the following coordinates:

MW    $(x, (0.0043w^2-0.0359w+0.1509)x^2+(-0.0493w^2+0.4669w-3.6193)x-0.3004w^2+2.419w+55.53$, 100-w-x-y),
WN    $(x, (0.0055w^2-0.0326w+0.0665)x^2+(-0.1571w^2+0.8981w-2.6274)x+0.6555w^2-2.2153w+54.044$, 100-w-x-y); or

if 4.0<w≤7.0:

within the range of a figure surrounded by curves MW and WN, and straight lines NE, EC, and CM that connect the points M, W, N, E and C, or on the above line segments (excluding points on the straight line CM):

M    $(0.0, -0.0667w^2+0.8333w+58.133, 0.0667w^2-1.8333w+41.867)$,
W    $(10.0, -0.0667w^2+1.1w+39.267, 0.0667w^2-2.1w+50.733)$,
N    $18.2, -0.0889w^2+1.3778w+31.411, 0.0889w^2-2.3778w+50.389)$,
E    $(18.1, 0.0444w^2-4.3556w+31.411, -0.0444w^2+3.3556w+50.489)$,
C    $(0.0, 0.0667w^2-4.9667w+58.3, -0.0667w^2+3.9667w+41.7)$;

the curves MW and WN being represented by the following coordinates:

MW    $(x, (0.00357w^2-0.0391w+0.1756)x^2+(-0.0356w^2+0.4178w-3.6422)x-0.0667w^2+0.8333w+58.103$, 100-w-x-y), and
WN    $(x, (-0.002061w^2+0.0218w-0.0301)x^2+(0.0556w^2-0.5821w-0.1108)x-0.4158w^2+4.7352w+43.383$, 100-w-x-y).

7. The composition of any of claims 1-6, which further comprises a refrigeration oil.

8. Use of the composition of any of claims 1-7 as an alternative refrigerant for R410A.

9. A refrigerating machine comprising the composition of any of claims 1-7 as a working fluid.

10. A method for operating a refrigerating machine, comprising circulating the composition of any of claims 1-7 as a working fluid in a refrigerating machine.

Fig. 1

Fig. 2

Fig. 3

Ternary composition diagram (0.6% CO₂)

_____ GWP=125

.............. GWP=250

~~~~~~~~ GWP=350

∞∞∞∞∞ WCF lower flammability

_____ ASHRAE lower flammability (WCF and WCFF)

_____ 80% cap. (relative to R410A)

----80%Cap.(対r410A)

Fig. 4

Fig. 5

Fig. 6

Fig. 7

Fig. 8

Fig. 9

Europäisches
Patentamt
European
Patent Office
Office européen
des brevets

# EUROPEAN SEARCH REPORT

**Application Number**

EP 25 19 2363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/058173 A1 (FUKUSHIMA MASATO [JP]) 2 March 2017 (2017-03-02) * the whole document * ----- | 1-10 | INV. C09K5/04 F25B1/00 B60H1/32 |
| A | US 2017/058172 A1 (FUKUSHIMA MASATO [JP] ET AL) 2 March 2017 (2017-03-02) * table 2 * * claims * ----- | 1-10 | |
| A | US 2017/058174 A1 (FUKUSHIMA MASATO [JP] ET AL) 2 March 2017 (2017-03-02) * table 2 * * claims * ----- | 1-10 | |
| A | US 2016/097569 A1 (MATSUNAGA NORIAKI [JP]) 7 April 2016 (2016-04-07) * paragraphs [0031] - [0051] * * claims * ----- | 1-10 | |

**TECHNICAL FIELDS
SEARCHED (IPC)**

C09K
F25B
B60H

The present search report has been drawn up for all claims

| Place of search | Date of completion of the search | Examiner |
|---|---|---|
| The Hague | 3 October 2025 | Puetz, Christine |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...................................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 19 2363

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2025

| Patent document cited in search report | Publication date | Patent family member(s) | | Publication date |
|---|---|---|---|---|
| US 2017058173 A1 | 02-03-2017 | CN | 106414654 A | 15-02-2017 |
| | | EP | 3153559 A1 | 12-04-2017 |
| | | JP | WO2015186557 A1 | 27-04-2017 |
| | | US | 2017058173 A1 | 02-03-2017 |
| | | WO | 2015186557 A1 | 10-12-2015 |
| US 2017058172 A1 | 02-03-2017 | CN | 106414682 A | 15-02-2017 |
| | | EP | 3153567 A1 | 12-04-2017 |
| | | JP | WO2015186671 A1 | 20-04-2017 |
| | | US | 2017058172 A1 | 02-03-2017 |
| | | WO | 2015186671 A1 | 10-12-2015 |
| US 2017058174 A1 | 02-03-2017 | CN | 106414653 A | 15-02-2017 |
| | | EP | 3153561 A1 | 12-04-2017 |
| | | JP | WO2015186670 A1 | 20-04-2017 |
| | | US | 2017058174 A1 | 02-03-2017 |
| | | WO | 2015186670 A1 | 10-12-2015 |
| US 2016097569 A1 | 07-04-2016 | AU | 2014297674 A1 | 24-12-2015 |
| | | AU | 2016208392 A1 | 18-08-2016 |
| | | CN | 104344605 A | 11-02-2015 |
| | | EP | 3029395 A1 | 08-06-2016 |
| | | ES | 2999764 T3 | 26-02-2025 |
| | | JP | 6282276 B2 | 21-02-2018 |
| | | JP | WO2015015881 A1 | 02-03-2017 |
| | | US | 2016097569 A1 | 07-04-2016 |
| | | WO | 2015015881 A1 | 05-02-2015 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015186557 A